# EUROPÄISCHE PATENTSCHRIFT

(11) **EP 3 551 723 B1**
(45) Veröffentlichungstag und Bekanntmachung des Hinweises auf die Patenterteilung: **20.09.2023**
(21) Anmeldenummer: 17821816.0
(22) Anmeldetag: 05.12.2017
(51) Int. Cl.: C09K 19/30, C09K 19/04, C09K 19/12, C09K 19/34

(54) **FLÜSSIGKRISTALLMISCHUNGEN ENTHALTEND ADDITIVE**
ADDITIVES FOR LIQUID CRYSTAL MIXTURES
ADDITIFS POUR MÉLANGES DE CRISTAUX LIQUIDES

(30) Priorität: 08.12.2016 DE 102016014622
(43) Veröffentlichungstag der Anmeldung: 16.10.2019
(73) Patentinhaber: Merck Patent GmbH, 64293 Darmstadt (DE)
(72) Erfinder: KIRSCH, Peer, 64342 Seeheim-Jugenheim (DE); TONG, Qiong, 64289 Darmstadt (DE); HAAS, Helga, 68623 Lampertheim (DE); DEING, Kaja Christina, 64283 Darmstadt (DE); MARTEN, Christoph, 64289 Darmstadt (DE); POHLE, Andreas, 64319 Pfungstadt (DE); FRIEDRICH, Reiner, 64342 Seeheim-Jugenheim (DE)
(86) Internationale Anmeldenummer: PCT/EP2017/081481
(87) Internationale Veröffentlichungsnummer: WO 2018/104285

(56) Entgegenhaltungen:
- EP-A1- 1 754 768
- EP-A1- 2 738 155
- EP-A1- 3 029 127
- WO-A1-93/22396
- JP-A- H10 298 127
- JP-A- 2007 308 483
- JP-A- 2016 132 111
- US-A- 5 482 650
- US-A1- 2014 339 470
- KUNISHIMA MUNETAKA ET AL: "Development of acid-catalyzed fluorous benzylating reagents based on a triazinedione core", JOURNAL OF FLUORINE CHEMISTRY, ELSEVIER, NL, Bd. 190, 5. September 2016 (2016-09-05), Seiten 68-74, XP029738638, ISSN: 0022-1139, DOI: 10.1016/J.JFLUCHEM.2016.09.003

## Beschreibung

Gegenstand der Erfindung sind Flüssigkristallmischungen, in denen polyfluorierte Additive enthalten sind und auf diesen Mischungen basierende Flüssigkristallanzeigen.

Flüssigkristalle haben ein breites Anwendungsfeld gefunden, seitdem vor ca. 40 Jahren die ersten kommerziell anwendbaren flüssigkristallinen Verbindungen gefunden wurden. Bekannte Anwendungsgebiete heute sind einfache Digitalanzeigen, Displays von tragbaren und stationären Computern, Navigationssysteme und nicht zuletzt Fernsehgeräte. Insbesondere für videofähige Displays werden hohe Anforderungen an Schaltzeiten und den Kontrast der Abbildungen gestellt.

Die räumliche Ordnung der Moleküle in einem Flüssigkristall bewirkt, dass viele seiner Eigenschaften richtungsabhängig sind. Von Bedeutung für den Einsatz in Flüssigkristallanzeigen sind dabei insbesondere die Anisotropien im optischen, dielektrischen und elasto-mechanischen Verhalten. Je nachdem, ob die Moleküle mit ihren Längsachsen senkrecht oder parallel zu den beiden Platten eines Kondensators orientiert sind, hat dieser eine andere Kapazität; die Dielektrizitätskonstante ε des flüssigkristallinen Mediums ist also für die beiden Orientierungen verschieden groß. Substanzen, deren Dielektrizitätskonstante bei senkrechter Orientierung der Moleküllängsachsen zu den Kondensatorplatten größer ist als bei paralleler Anordnung, werden als dielektrisch positiv bezeichnet. Mit anderen Worten: Ist die Dielektrizitätskonstante ε_{∥} parallel zu den Moleküllängsachsen größer als die Dielektrizitätskonstante ε_{⊥} senkrecht zu den Moleküllängsachsen, so ist die dielektrische Anisotropie Δε = ε_{∥} - ε_{⊥} größer null. Die meisten Flüssigkristalle, die in herkömmlichen Displays Verwendung finden, fallen in diese Gruppe.

Für die dielektrische Anisotropie spielen sowohl die Polarisierbarkeit des Moleküls als auch permanente Dipolmomente eine Rolle. Beim Anlegen einer Spannung an das Display richtet sich die Längsachse der Moleküle so aus, dass die größere der dielektrischen Konstanten wirksam wird. Die Stärke der Wechselwirkung mit dem elektrischen Feld hängt dabei von der Differenz der beiden Konstanten ab. Bei kleinen Differenzen sind höhere Schaltspannungen erforderlich als bei großen. Durch den Einbau geeigneter polarer Gruppen, wie z.B. von Nitrilgruppen oder Fluor, in die Flüssigkristallmoleküle lässt sich ein weiter Bereich von Arbeitsspannungen realisieren.

Bei den in herkömmlichen Flüssigkristallanzeigen verwendeten flüssigkristallinen Molekülen ist das entlang der Moleküllängsachse orientierte Dipolmoment größer als das senkrecht zur Moleküllängsachse orientierte Dipolmoment. Bei den weit verbreiteten TN-Zellen (abgeleitet aus dem Englischen: 'twisted nematic', verdrillt nematisch) ist eine nur etwa 5 bis 10 µm dicke flüssigkristalline Schicht zwischen zwei planparallelen Glasplatten angeordnet, auf die jeweils eine elektrisch leitende, transparente Schicht aus Indium-Zinnoxid (ITO) als Elektrode aufgedampft ist. Zwischen diesen Filmen und der flüssigkristallinen Schicht befindet sich eine ebenfalls transparente Orientierungsschicht, die meist aus einem Kunststoff (z.B. Polyimiden) besteht. Sie dient dazu, durch Oberflächenkräfte die Längsachsen der benachbarten kristallinen Moleküle in eine Vorzugsrichtung zu bringen, so dass sie im spannungsfreien Zustand einheitlich mit der gleichen Orientierung flach oder mit demselben kleinen Anstellwinkel (englisch: "tilt angle") auf der Innenseite der Displayfläche aufliegen. Auf der Außenseite des Displays sind zwei Polarisationsfolien, die nur linear polarisiertes Licht ein- und austreten lassen, in einer bestimmten Anordnung aufgebracht.

Mit Flüssigkristallen, bei denen das größere Dipolmoment parallel zur Längsachse des Moleküls orientiert ist, sind bereits sehr leistungsfähige Displays entwickelt worden. Dabei kommen meist Mischungen von 5 bis 20 Komponenten zum Einsatz, um einen ausreichend breiten Temperaturbereich der Mesophase sowie kurze Schaltzeiten und niedrige Schwellenspannungen anzustreben. Schwierigkeiten bereitet jedoch noch die starke Blickwinkelabhängigkeit bei Flüssigkristallanzeigen, wie sie beispielsweise für Laptops verwendet werden. Die beste Abbildungsqualität lässt sich erreichen, wenn die Fläche des Displays senkrecht zur Blickrichtung des Betrachters steht. Wird das Display relativ zur Betrachtungsrichtung gekippt, verschlechtert sich die Abbildungsqualität unter Umständen drastisch. Für einen höheren Komfort ist man bemüht, den Winkel, um den das Display von der Blickrichtung eines Betrachters ohne wesentliche Minderung der Abbildungsqualität verkippt werden kann, möglichst groß zu gestalten. In jüngerer Zeit sind Versuche unternommen worden, zur Verbesserung der Blickwinkelabhängigkeit flüssigkristalline Verbindungen einzusetzen, deren Dipolmoment senkrecht zur Moleküllängsachse größer ist als parallel zur Längsachse des Moleküls. Die dielektrische Anisotropie Δε ist in diesem Fall negativ. Im feldfreien Zustand werden diese Moleküle mit ihrer Längsachse senkrecht zur Glasfläche des Displays orientiert. Durch Anlegen eines elektrischen Feldes orientieren sie sich mehr oder weniger parallel zu den Glasflächen. Auf diese Weise konnte eine Verbesserung der Blickwinkelabhängigkeit erreicht werden. Derartige Displays werden als VA-TFT-Displays bezeichnet (abgeleitet aus dem Englischen: "vertically aligned").

Die Mehrheit der hochauflösenden Displays werden zur Schaltung einzelner Bildpunkte durch nichtlineare elektronische Elemente angesteuert, z. B. durch Dünnschichttransistoren (engl. thin film transistor, "TFT"). solche Displays werden nachfolgend auch als Aktivmatrix-Displays bezeichnet (TFT-Displays).

Neben Problemen hinsichtlich der Winkelabhängigkeit des Kontrastes und der Schaltzeiten resultieren bei TFT-Displays Schwierigkeiten bedingt durch nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast eines TFT-Displays, und es kann das Problem der 'after image elimination' auftreten. Da der spezifische Widerstand der Flüssigkristallmischung durch Wechselwirkung mit den inneren Oberflächen der Anzeige im allgemeinen über die Lebenszeit eises TFT-Displays abnimmt, ist ein hoher (Anfangs)-Widerstand sehr wichtig, um akzeptable Standzeiten zu erhalten. Insbesondere bei 'low-volt'-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie eine möglichst geringe Empfindlichkeit bei Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektischen Phasen auftreten und die Temperaturabhängigkeit der Viskosität möglichst gering ist. Die TFT-Displays aus dem Stand der Technik genügen somit nicht den heutigen Anforderungen.

Die LCD-Vorrichtung selbst umfasst zwei Substrate mit Elektroden und eine in dem von den Substraten umschlossenen Raum befindliche Schicht des Flüssigkristalls. Die Anzeige eines Bildes wird durch Änderung der Ausrichtung der Flüssigkristalle mithilfe einer an die Elektroden angelegten elektrischen Spannung erreicht.

Eine LCD-Anzeige wird typischerweise hergestellt, indem ein erstes Substrat mit einer Pixelelektrode, einem Dünnfilmtransistor (engl. thin film transistor, TFT) und anderen Komponenten mit einem zweiten Substrat, das eine gemeinsame Elektrode enthält, unter Verwendung eines Dichtmittels (Versiegelungsmittels) verklebt wird. Das Befüllen des von den Substraten umschlossenen Raumes mit dem Flüssigkristall erfolgt über eine Füllöffnung durch Kapillarkraft oder Vakuum; die Füllöffnung wird anschließend unter Verwendung eines Dichtmittels versiegelt.

Mit der Zunahme der Größe der Flüssigkristallanzeigen in den letzten Jahren wurde das sogenannte "one drop filling"-Verfahren (ODF-Verfahren) vorgeschlagen als ein Verfahren zur Massenproduktion von Flüssigkristallanzeigen (siehe z.B. JPS63-179323 und JPH10-239694), um die Taktzeiten bei der Herstellung zu verkürzen. Dabei handelt es sich um ein Verfahren zur Herstellung einer Flüssigkristallanzeige, bei dem der Flüssigkristall auf ein mit Elektroden ausgestattetes Substrat getropft wird. Anschließend wird das zweite mit Elektroden und/oder Farbfiltern ausgestattete Substrat und ein umrandendes Dichtmittel unter Vakuum montiert und das Dichtmittel durch UV-Bestrahlung und Wärmebehandlung gehärtet.

Aktuell ist die Befüllung von Aktivmatrix Flüssigkristallvorrichtungen durch die ODF-Methode das bevorzugte Verfahren für großformatige Displays. Geeignete Dosiervorrichtungen für die Befüllen einer Flüssigkristallanzeige nach dem ODF-Verfahren sind dem Fachmann vertraut. Voraussetzung für den Erfolg des ODF-Verfahrens ist, dass sich das Flüssigkristallmedium nach dem Auftragen zu einem gleichmäßigen Film zwischen den Substraten verteilt. Probleme kann ein unzureichendes Fließverhalten bereiten. Bekannt ist auch das Problem bei der Verwendung von herkömmlichen Flüssigkristallmischungen, das Auftreten von sogenannten "ODF mura" oder "ODF drop mura", gekennzeichnet durch z.B. periodische ringförmige Unregelmäßigkeiten der Displayoberfläche entlang der Tröpfchengrenzen. Durch die unterschiedlichen Flussbedingungen bei der Tröpfchenabscheidung und dem Zusammenfließen der Tröpfchen beim Zusammenfügen der Substrate kommt es zu unterschiedlichen Ausprägungen der ODF-Mura, die sich im Wesentlichen durch ungleichmäßige Verteilung der Helligkeit des Displays zeigen. Bei Flüssigkristallvorrichtungen des VA-Typs, wie auch der Typen MVA, PVA oder PS-VA sind Umrisse der Tröpfchen ein typisches Problem. Hinzu kommt, dass bei polymerstabilisierten Displays (z.B. PSA, PS-VA) solche Helligkeitsunterschiede fixiert werden. Konventionelle Maßnahmen zur Vermeidung, wie Verringerung der Polymerkonzentration, sind in der Regel mit anderen Nachteilen wie geringere Stabilität des Tiltwinkels etc. verbunden. Es ist daher wünschenswert, Flüssigkristallmischungen bereitzustellen, die eine gute Benetzung des Substrats erreichen (Spreading), gute Fließeigenschaften aufweisen und das Phänomen der ODF-Mura weitgehend vermeiden.

Eine Aufgabe der Erfindung ist es daher, das Benetzungsverhalten und die Fließeigenschaften von flüssigkristallinen Medien gezielt zu verbessern. Dabei dürfen die in vielfältiger Weise optimierten elektrooptischen und chemischen Eigenschaften der Mischungen nicht nachteilig beeinflusst werden. Eine weitere Aufgabe der vorliegenden Erfindung ist es, Mischungen und ein Verfahren zur Herstellung von Flüssigkristallanzeigen bereitzustellen, bei dem das oben beschriebene Phänomen der ODF-Mura nicht oder nur in tolerierbarem Ausmaß auftritt.

Es besteht daher immer noch ein großer Bedarf nach TFT-Displays mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Die Entwicklung auf dem Gebiet der flüssigkristallinen Materialien ist bei weitem noch nicht abgeschlossen. Zur Verbesserung der Eigenschaften flüssigkristalliner Anzeigeelemente ist man ständig bemüht, neue Verbindungen zu entwickeln, die eine Optimierung derartiger Displays ermöglichen.

Flüssigkristalline Mischungen mit geringerer Tendenz zur Ausbildung von ODF-Mura wurden bisher wenig explizit beschrieben. In der Druckschrift KR 2011-0068303 wird ein Polysiloxan und in EP 3 029 127 A1 werden Quaterphenylverbindungen als Additiv zur Verringerung der Drop-Mura vorgeschlagen.

Eine Aufgabe der vorliegenden Erfindung besteht darin, ein flüssigkristallines Medium mit verbesserten Eigenschaften für die Verarbeitung und Anwendung bereitzustellen. Dies wird erreicht durch Bereitstellung eines flüssigkristallinen Mediums enthaltend eine flüssigkristalline Komponente, das dadurch gekennzeichnet ist, dass es ein Additiv der folgenden Formel I enthält: 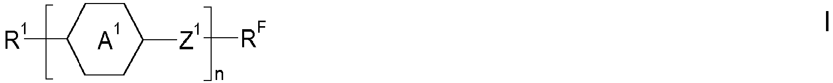 worin
- R¹: eine geradkettige oder verzweigte Alkylgruppe mit 1 bis 20 C-Atomen, oder H, wobei in diesem Rest auch eine oder mehrere CH₂-Gruppen jeweils unabhängig voneinander durch -C≡C-, -CH=CH-, 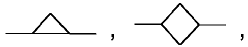 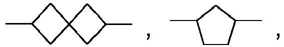 -O-, -S-, -CO-O- oder -O-CO- so ersetzt sein können, dass O/S-Atome nicht direkt miteinander verknüpft sind,
- R^{F}: eine Gruppe ausgewählt aus den Formeln -R2, 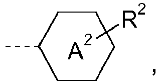 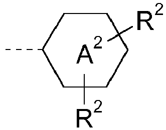 und 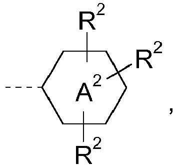
- R²: jeweils unabhängig 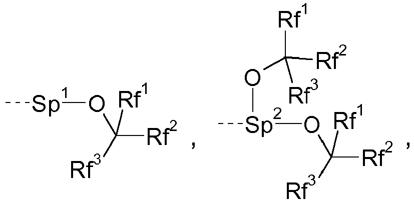 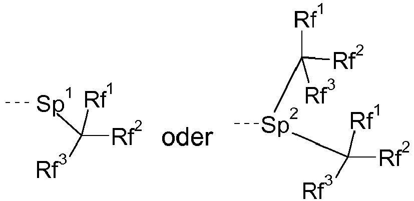
- Rf¹, Rf³: unabhängig H, F, -CF₃, -CF₂CF₃, -CF₂CF₂CF₃ oder CF(CF₃)₂, bevorzugt -CF₃, -CF₂CF₃, -CF₂CF₂CF₃ oder CF(CF₃)₂, besonders bevorzugt -CF₃,
- Rf²: unabhängig eine unverzweigte, verzweigte oder cyclische Fluoralkylgruppe mit 3 bis 15 Fluoratomen und 1 bis 10 C-Atomen, worin eine oder mehrere nicht benachbarte CH₂-Gruppen durch -O- und/oder -S- ersetzt sein können, insbesondere -CF₃, -CF₂CF₃, -CF₂CF₂CF₃, -CH₂CF₂CF₂CF₃, -CH₂CF₂CF₃, -CF(CF₃)-O-CF₂CF₂CF₃, -S-CF₂CHF-O-CF₂CF₂CF₃ oder CF(CF₃)₂, bevorzugt -CF₃, -CF₂CF₃, -CF₂CF₂CF₃ oder CF(CF₃)₂, besonders bevorzugt -CF₃,
- Z¹: jeweils unabhängig eine Einfachbindung, -CH₂CH₂-, -COO-, *trans-* -CH=CH-, *trans-* -CF=CF-, -CH₂O-, -CF₂O-oder -C≡C-, worin asymmetrische Brücken nach beiden Seiten orientiert sein können, und wobei nicht zwei O-Atome benachbarter Gruppen direkt verbunden sind,
- Sp¹: eine Einfachbindung oder -(CH₂)ₘ-, worin m = 1, 2, 3 oder 4 ist und worin eine oder zwei CH₂-Gruppen durch -O-oder -S- ersetzt sein können, so dass O/S-Atome nicht direkt miteinander verknüpft sind,
- Sp²: linearer oder verzweigter, dreifachbindiger Spacer, bevorzugt ein dreifachbindiges Alkylen mit 1 bis 10 C-Atomen, das linear oder verzweigt ist, worin eine oder mehrere nicht benachbarte CH₂-Gruppen durch -O- ersetzt sein können, besonders bevorzugt einer der Strukturteile 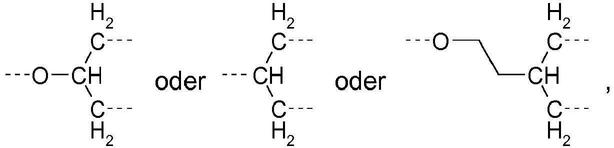
- A¹: jeweils unabhängig einen Rest ausgewählt aus folgenden Gruppen:
a) der Gruppe bestehend aus trans-1,4-Cyclohexylen und 1,4-Cyclohexenylen , worin auch eine oder mehrere nicht benachbarte CH₂-Gruppen durch -O- und/oder -S- ersetzt sein können und worin auch ein oder mehrere H-Atome durch F oder Cl ersetzt sein können,
b) 1,4-Phenylen worin auch eine oder zwei CH-Gruppen durch N ersetzt sein können und worin auch ein oder mehrere H-Atome durch eine Gruppe L oder R² ersetzt sein können, und
c) der Gruppe bestehend aus 2,6-Naphthylen, Dibenzofuran-3,7-diyl, Dibenzothiophen-3,7-diyl, 9H-Fluoren-2,7-diyl, Phenanthren-2,7-diyl, 6H-Benzo[c]chromen-3,8-diyl, Anthracen-2,6-diyl, Tetrahydropyran-2,5-diyl, 1,3-Dioxan-2,5-diyl, Tetrahydrofuran-2,5-diyl, Cyclobutan-1,3-diyl, Piperidin-1,4-diyl, Thiophen-2,5-diyl und Selenophen-2,5-diyl, welche auch ein oder mehrfach durch eine Gruppe L substituiert sein können,
- A²: ein 6- oder 5-gliedriges gesättigtes, ungesättigtes oder aromatisches, carbocyclisches oder heterocyclisches Ringsystem, vorzugsweise einen Cyclohexanring oder einen Benzolring, welches jeweils optional zusätzlich durch eine oder zwei Gruppen L substituiert ist,
- L: unabhängig F, Cl, -CN, eine Alkylgruppe mit 1 bis 5 C-Atomen, eine Alkoxygruppe mit 1 - 5 C-Atomen oder eine Alkenylgruppe mit 2 bis 5 C-Atomen,

- n: 0, 1, 2, 3 oder 4, bevorzugt 0, 1, 2 oder 3, besonders bevorzugt 1, 2 oder 3, ganz besonders bevorzugt 1 oder 2,
bedeuten,
und zusätzlich enthält das flüssigkristalline Medium
- eine oder mehrere polymerisierbare oder polymerisierte Verbindungen, und
- eine oder mehrere Verbindungen ausgewählt aus der Gruppe der Formel II-1 bis II-3, wie in Anspruch 1 und nachfolgend definiert.

Bevorzugt sind Verbindungen der Formel I, worin R¹ eine geradkettige, unverzweigte Alkylgruppe mit 1 bis 20 C-Atomen bedeutet, wobei jeweils auch eine oder mehrere CH₂-Gruppen, jeweils unabhängig voneinander, durch -CH=CH- oder -C≡C- ersetzt sein können.

Der Ring A¹ der Formel I bedeutet vorzugsweise jeweils unabhängig, auch bei mehrfachem Auftreten, eine Gruppe ausgewählt aus den Untergruppen a) und b), welche auch ein oder mehrfach durch eine Gruppe L substituiert sein können. Besonders bevorzugt bedeutet die Gruppe A¹ einen Cyclohexanring, einen Cyclohexenring oder einen Benzolring, der optional zusätzlich durch eine oder zwei Gruppen L substituiert ist.

Die Gruppe L bedeutet bevorzugt unabhängig F, Cl, -CF₃ oder eine Alkyl- oder Alkoxygruppe mit 1, 2 oder 3 Kohlenstoffatomen, besonders bevorzugt F, Cl, Methyl oder Ethyl.

Die Gruppe Z¹ bedeutet bevorzugt eine Einfachbindung.

Die Verbindungen der Formel I sind bevorzugt ausgewählt aus den Verbindungen der Formeln

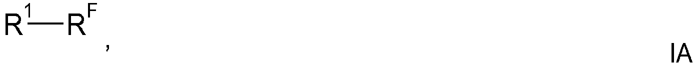

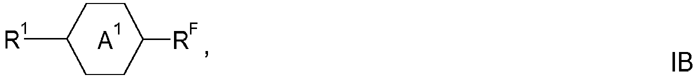

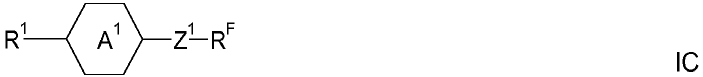

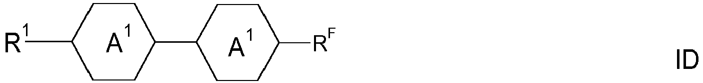

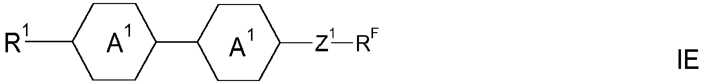

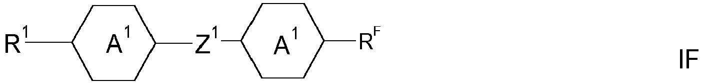

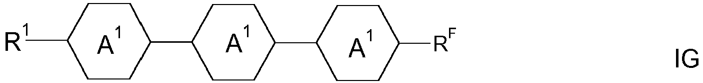

Darunter sind bevorzugt die Strukturen der Formeln IA, IB, IC, ID und IG, besonders der Formeln IA, IB und IC.

In einer bevorzugten Ausführungsform werden Verbindungen der Formel IA verwendet, worin R¹ einen Rest wie für Formel I definiert, aber mit 8 bis 20 C-Atomen bedeutet, während die Reste R¹ der Formeln IB bis IF (allgemein n > 0), bevorzugt unabhängig eine Kettenlänge von 1 bis 10 C-Atomen besitzen. Der Rest R¹ bedeutet in Formel IA beispielsweise bevorzugt Octadecanyl, 1-Ethylhexyl, n-Octyl, Dodecyl etc. Entsprechende langkettige Alkohole als Vorstufen sind kommerziell verfügbar.

Der Rest R^{F} ist bevorzugt ein Element ausgewählt aus den Formeln 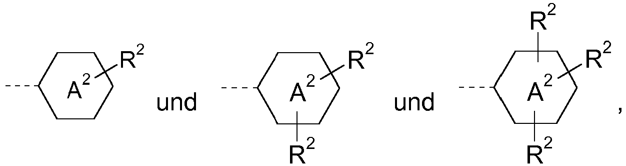 insbesondere

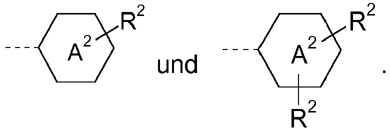

Besonders bevorzugt sind für R^{F} die Teilformeln: 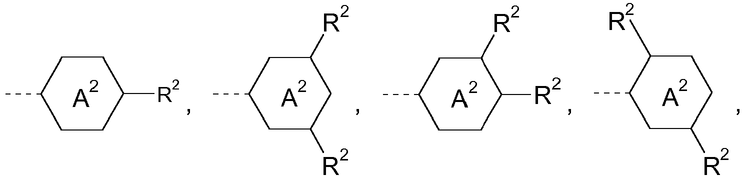 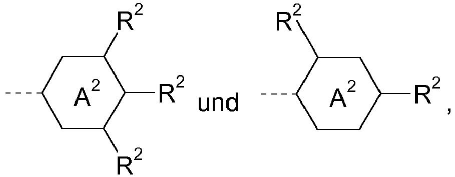 ganz besonders bevorzugt die Formeln: 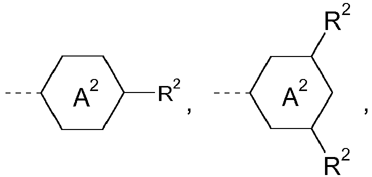 worin der Ring A² ein sechsgliedriger Ring, bevorzugt einen Benzolring oder einen Cyclohexanring bedeutet.

R² ist besonders bevorzugt ein Rest der Formeln 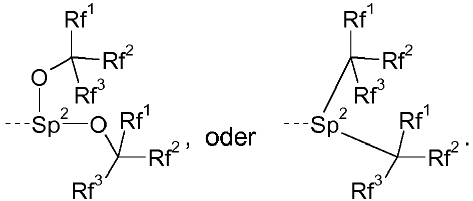 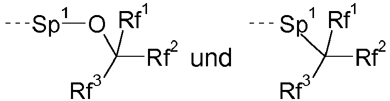 bedeuten bevorzugt die Gruppen

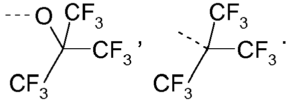

Der Rest 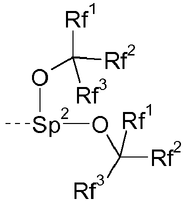 bedeutet bevorzugt

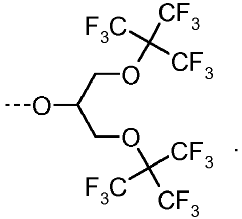

Der Rest 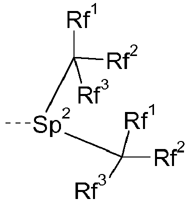 bedeutet bevorzugt

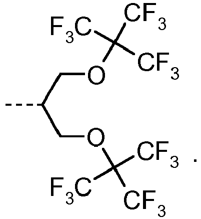

Die Rest R^{F} umfasst bevorzugt insgesamt mindestens 9 Fluoratome, besonders bevorzugt mindestens 12 Fluoratome, weiterhin 18 oder mehr, 28 oder mehr, und ganz besonders bevorzugt 36 oder mehr Fluoratome. Die bevorzugte Anzahl der Fluoratome in den Gruppen R² ergibt sich dementsprechend je nach Anzahl der Gruppen R². Bevorzugt in die Anzahl der Fluoratome insgesamt 60 oder weniger.

Bevorzugt sind Verbindungen der Formel I und flüssigkristalline Medien enthaltend ein Additiv der Formel I, in denen die Reste der Formel I eine der angegebenen bevorzugten Bedeutungen haben.

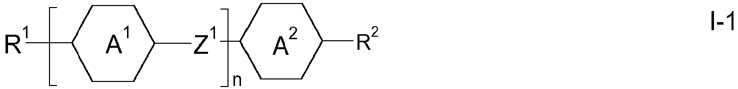

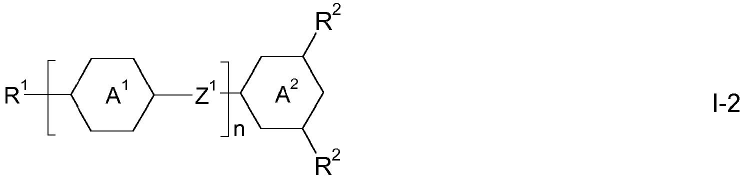

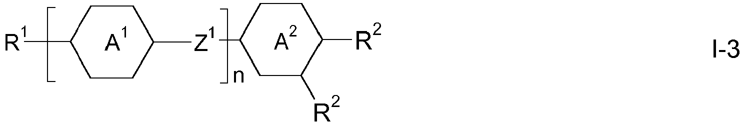

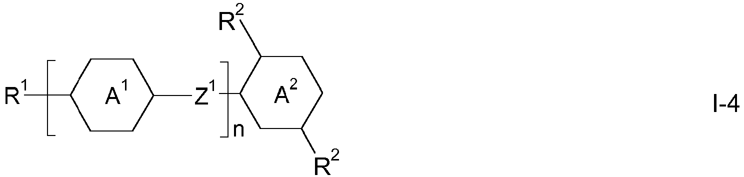

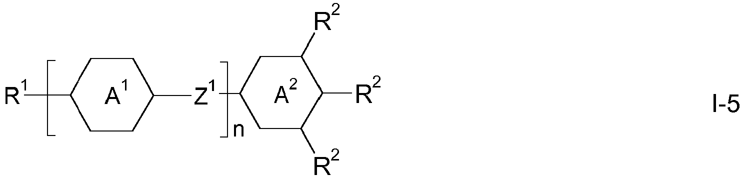

Darunter sind besonders bevorzugt die Strukturen der Formeln I-1 und I-2, ganz besonders der Formel I-2.

In den Formeln I bzw. I-1 bis I-5 bedeutet die Teilstruktur 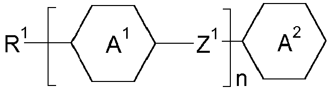 bevorzugt eine Teilstruktur ausgewählt aus den folgenden Formeln: 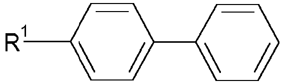 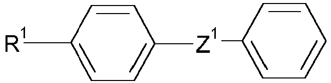 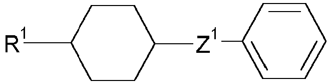 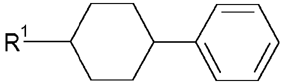 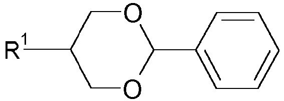 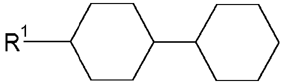 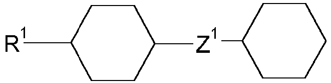 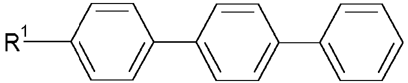 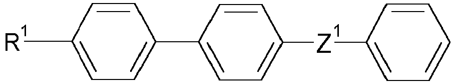 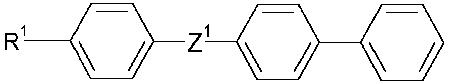 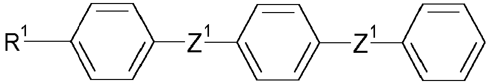 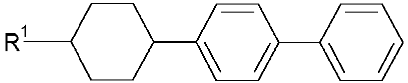 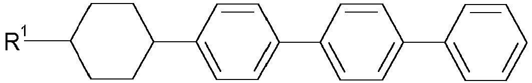 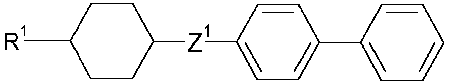 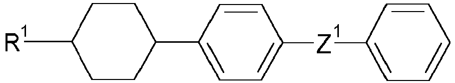 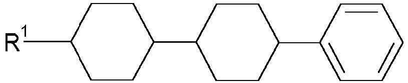 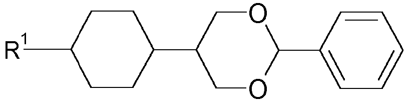 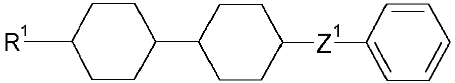 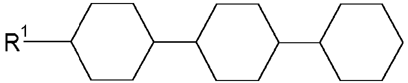 worin die Substituenten wie vor- und nachstehend definiert sind, die Ringe optional durch eine Gruppe L substituiert sind und der rechtsseitige Ring entsprechend einem Ring A² der Formeln I bzw. I-1 bis I-5 durch eine oder zwei Gruppen R² substituiert ist.

Bevorzugt sind demnach Strukturen ausgewählt aus den Formeln: 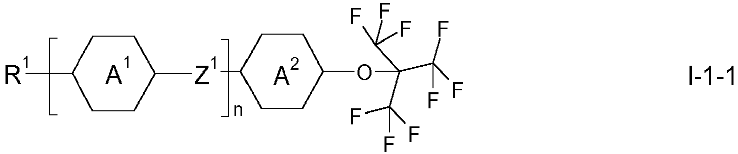 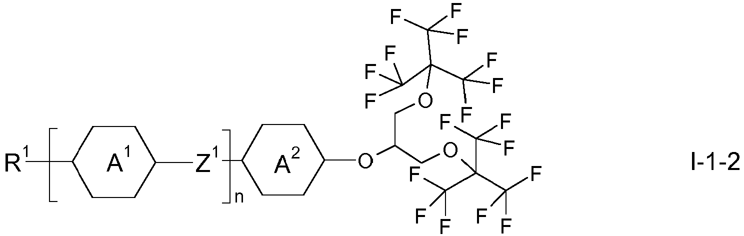 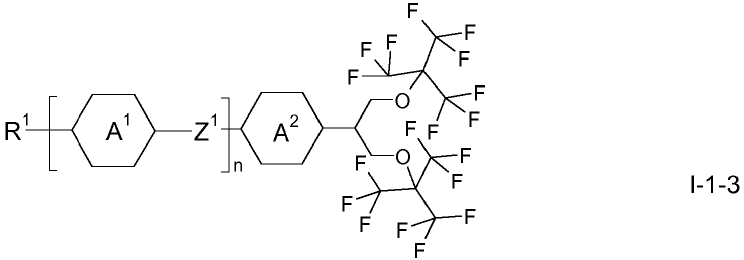 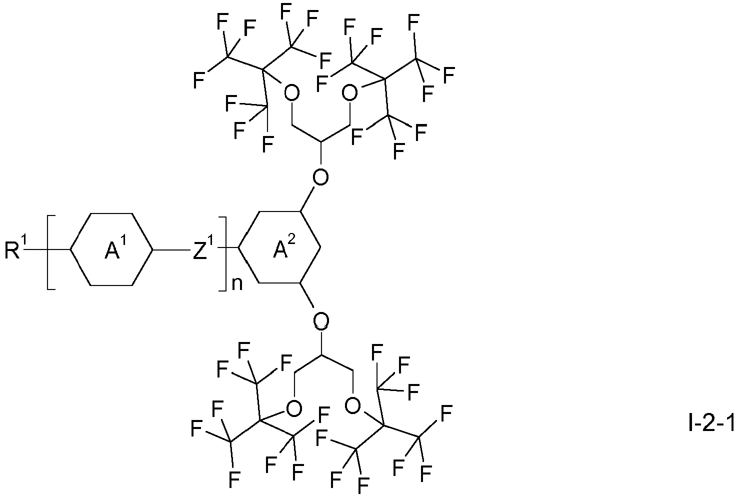 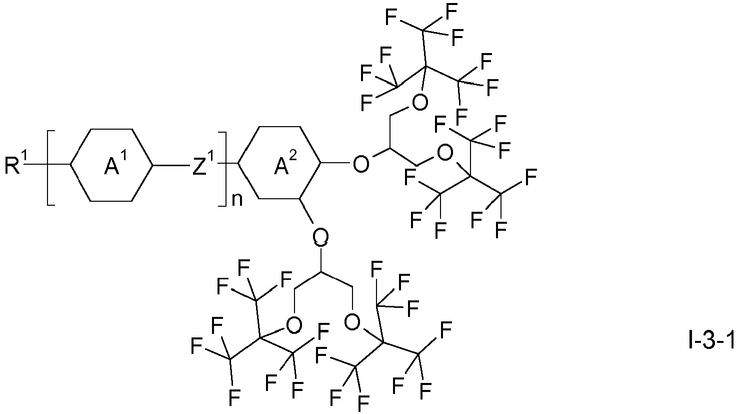 worin die Variablen wie vor und nachstehend definiert sind.

Die Gruppe R¹ in Formel I und ihren Unterformeln bedeutet bevorzugt einen Alkylrest mit 1 bis 15 C-Atomen, insbesondere einen Alkylrest mit 2 bis 6 C-Atomen. Sie ist bevorzugt eine n-Alkylgruppe.

Die Verbindungen der Formel I sind sehr gut löslich in den für

Anzeigegeräte üblichen flüssigkristallinen Medien. Die Verbindungen verbessern die Benetzung mit flüssigkristallinem Medium auf Substraten und die Fließeigenschaften auf Oberflächen. Sie bewirken unter anderem eine verringerte Oberflächenspannung, einen verringerten Kontaktwinkel eines Mediums gegenüber einem Substrat und eine hervorragende Spreizung von Tröpfchen auf Oberflächen. Sie sind daher gute Spreizmittel oder Benetzungsmittel, insbesondere für flüssigkristalline Medien. Als Untergründe (Substrate) eignen sich Oberflächen aus Glas, ITO (Indium-Zinn-Oxid), Polyimid-Schichten (Alignment-Beschichtungen) oder diverse Kunststoffe. Mit den Verbindungen der Formel I als Additiv lassen sich ohne weiteres stabile nematische Phasen in einem weiten Temperaturbereich herstellen.

Neben den hervorragenden Eigenschaften als flüssigkristalline Komponente zeichnen sich die Verbindungen der Formel I durch sehr wenig Einfluss auf die bereits optimierten physikalischen Eigenschaften des Mediums aus wie VHR ('voltage holding ratio'), Langzeitstabilität (Reliability), Tieftemperaturstabilität, Schaltzeiten, etc.. Halogen bedeutet im Zusammenhang der vorliegenden Erfindung Fluor, Chlor, Brom oder Iod, insbesondere Fluor oder Chlor und ganz besonders Fluor.

Besonders bevorzugt sind Verbindungen der Formel I erfindungsgemäß ausgewählt aus den folgenden Unterformeln: 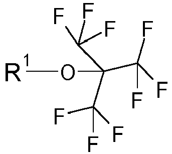 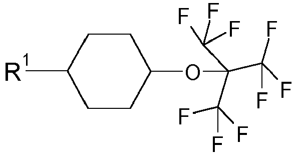 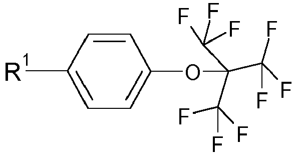 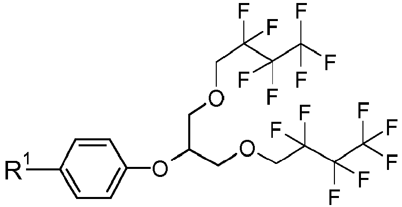 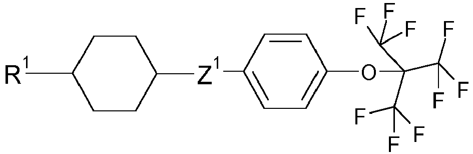 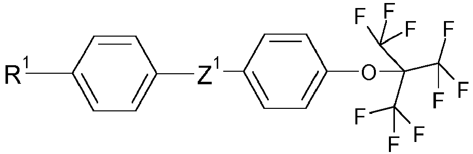 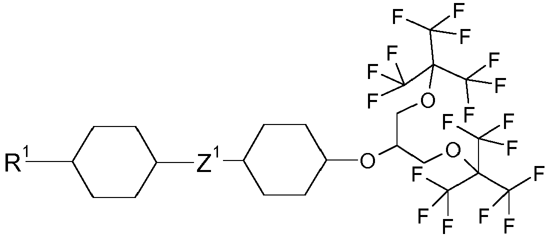 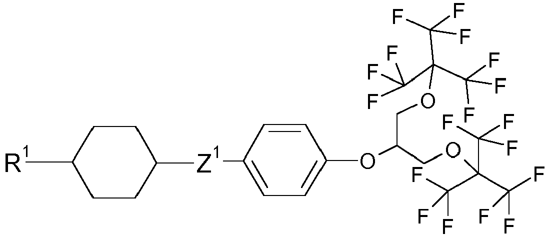 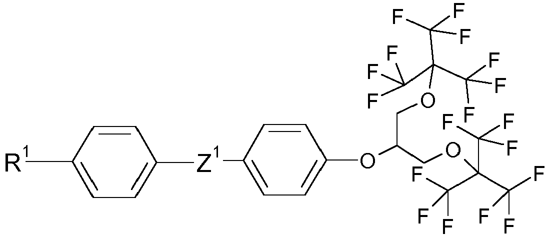 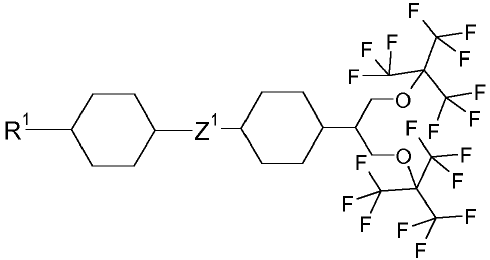 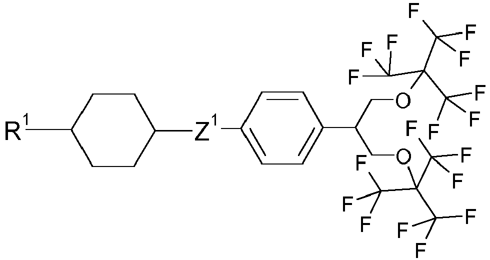 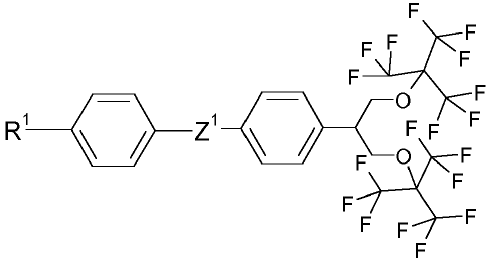 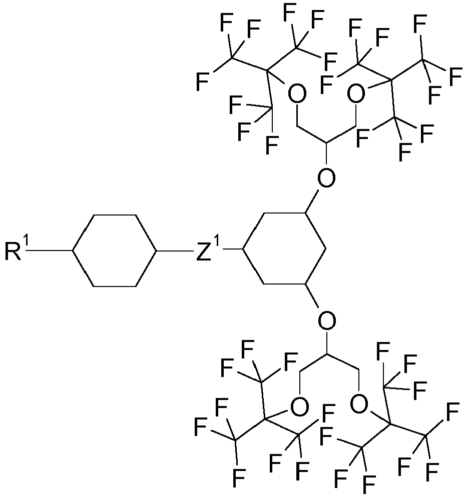 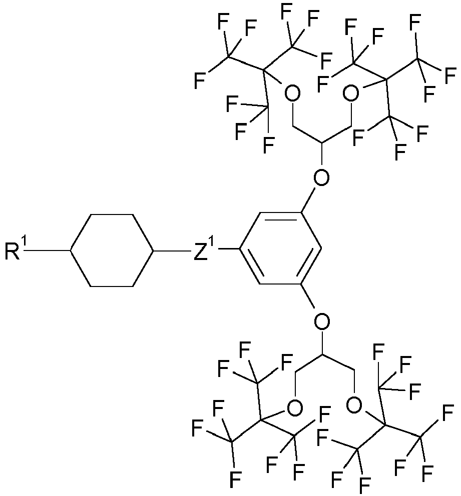 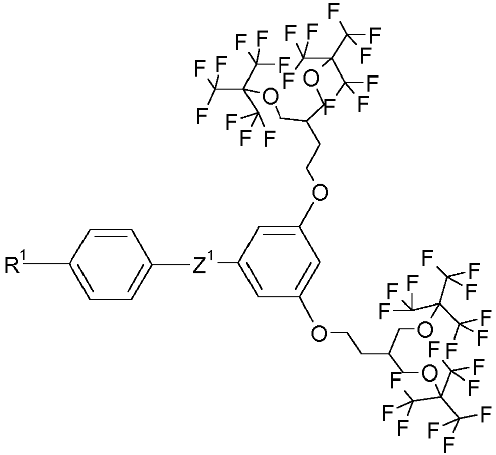 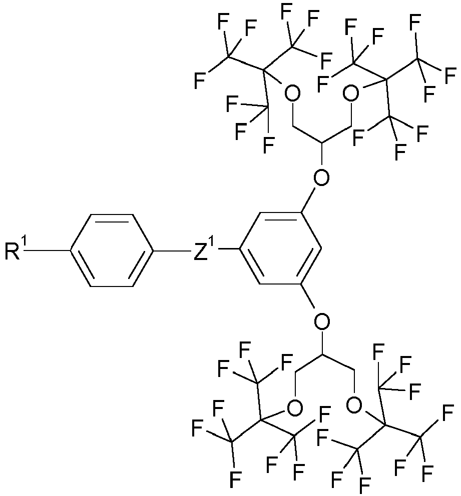 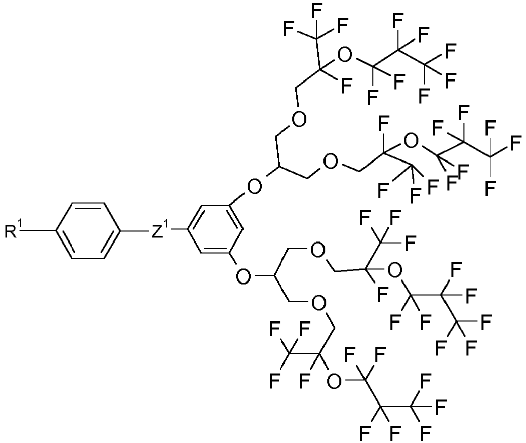 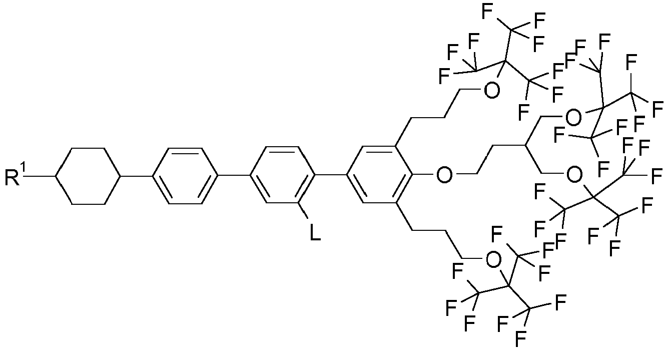 worin die Parameter die jeweilige oben unter Formel I gegebene Bedeutung haben, und unabhängig bevorzugt
- R¹: unabhängig eine Alkylgruppe mit 1 bis 20 C-Atomen, wobei jeweils auch eine oder mehrere CH₂-Gruppen, jeweils unabhängig voneinander, durch -CH=CH- oder -C≡C- ersetzt sein können, und
- Z¹: eine Einfachbindung bedeuten.

Besonders bevorzugt sind beispielsweise folgende konkrete Einzelverbindungen:

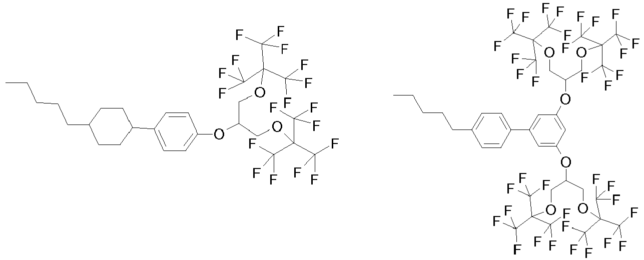

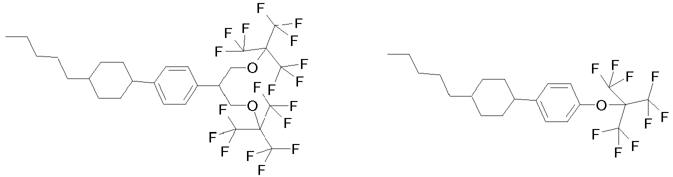

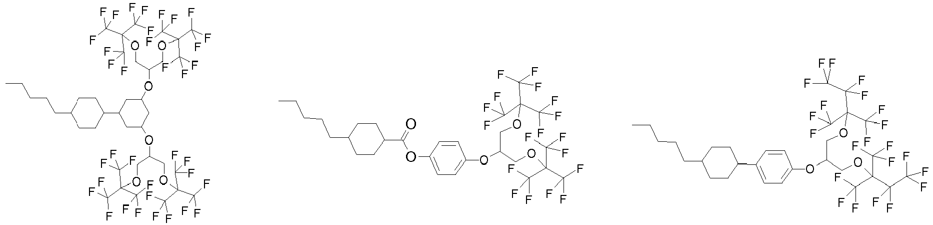

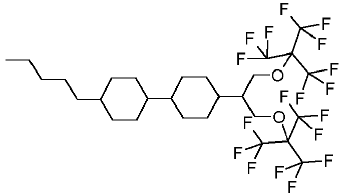

Gemäß der vorliegenden Erfindung werden die Verbindungen der Formeln I in einer Gesamtkonzentration von 0,001 % bis 2 %, stärker bevorzugt von 0,005 % oder mehr bis 0,1 % oder weniger, besonders bevorzugt von 0,01 % oder mehr bis 0,025 % oder weniger verwendet.

Gegenstand der vorliegenden Erfindung ist bevorzugt ein flüssigkristallines Medium mit mindestens zwei flüssigkristallinen Verbindungen, enthaltend mindestens eine Verbindung der Formel I.

Das flüssigkristalline Medium ist vorzugsweise polar, d.h. es besitzt eine positive oder negative dielektrische Anisotropie.

Das flüssigkristalline Medium enthält vorzugsweise zusätzlich einen Anteil an polymerisierbaren Verbindungen, vorzugsweise ausgewählt aus den Verbindungen der Tabelle G.

Nachfolgend wird als bevorzugte Ausführungsform ein Medium mit negativer dielektrischer Anisotropie beschrieben, welches
a) eine oder mehrere Verbindungen der Formel I
   und
b) eine oder mehrere Verbindungen der Formel II 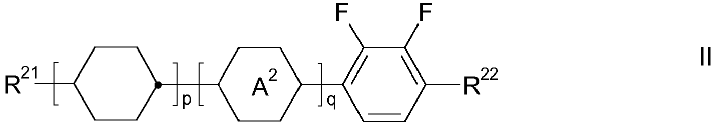 enthält,
   worin
   - R²¹: einen unsubstituierten Alkylrest mit 1 bis 7 C-Atomen, einen unsubstituierten Alkoxyrest mit 1 bis 6 C-Atomen oder einen unsubstituierten Alkenylrest mit 2 bis 7 C-Atomen,
   - R²²: einen unsubstituierten Alkylrest mit 1 bis 7 C-Atomen oder einen unsubstituierten Alkoxyrest mit 1 bis 6 C-Atomen, 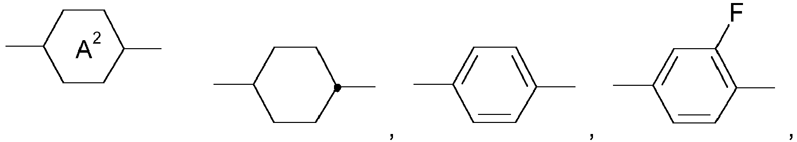 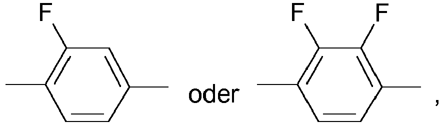
   - p und q: jeweils unabhängig voneinander 0, 1 oder 2 und
   - (p + q): 1, 2 oder 3,
   bedeutet,
c) optional eine oder mehrere Verbindungen der Formel III 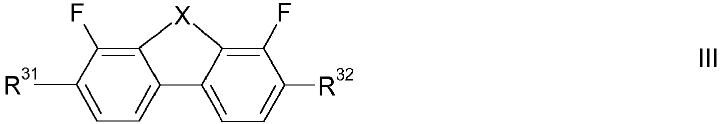 worin
   - X: O oder S, bevorzugt O, und
   - R³¹, R³²: unabhängig voneinander einen unsubstituierten Alkylrest mit 1 bis 7 C-Atomen, bevorzugt einen n-Alkylrest, besonders bevorzugt mit 2 bis 5 C-Atomen, oder einen unsubstituierten Alkoxyrest mit 2 bis 7 C-Atomen, besonders bevorzugt mit 2 bis 5 C-Atomen,
   bedeuten,
   wobei bevorzugt mindestens einer der Reste R³¹ und R³² Alkoxy bedeutet,
   und
d) optional, bevorzugt obligatorisch, eine oder mehrere Verbindungen ausgewählt aus der Gruppe der Verbindungen der Formeln IV und V, bevorzugt der Formel IV, 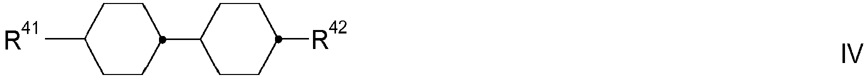 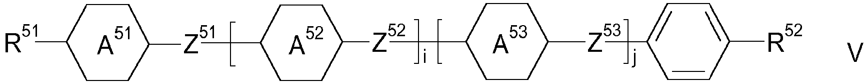 worin
   - R⁴¹: einen unsubstituierten Alkylrest mit 1 bis 7 C-Atomen oder einen unsubstituierten Alkenylrest mit 2 bis 7 C-Atomen, bevorzugt einen n-Alkylrest, besonders bevorzugt mit 2, 3, 4 oder 5 C-Atomen, und
   - R⁴²: einen unsubstituierten Alkylrest mit 1 bis 7 C-Atomen oder einen unsubstituierten Alkoxyrest mit 1 bis 6 C-Atomen, beide bevorzugt mit 2 bis 5 C-Atomen, einen unsubstituierten Alkenylrest mit 2 bis 7 C-Atomen, bevorzugt mit 2, 3 oder 4 C-Atomen, stärker bevorzugt einen Vinylrest oder einen 1-Propenylrest und insbesondere einen Vinylrest,
   - R⁵¹ und R⁵²: unabhängig voneinander eine der für R²¹ und R²² gegebenen Bedeutungen haben und bevorzugt Alkyl mit 1 bis 7 C-Atomen, bevorzugt *n*-Alkyl, besonders bevorzugt *n*-Alkyl mit 1 bis 5 C-Atomen, Alkoxy mit 1 bis 7 C-Atomen, bevorzugt n-Alkoxy, besonders bevorzugt n-Alkoxy mit 2 bis 5 C-Atomen, Alkoxyalkyl, Alkenyl oder Alkenyloxy mit 2 bis 7 C-Atomen, bevorzugt mit 2 bis 4 C-Atomen, bevorzugt Alkenyloxy, 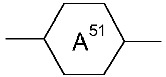
bis 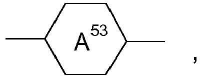 soweit vorhanden, jeweils unabhängig voneinander 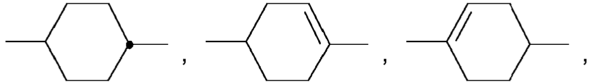 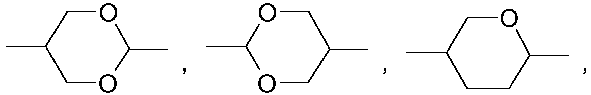 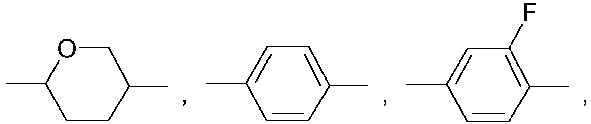 oder 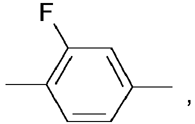 bevorzugt 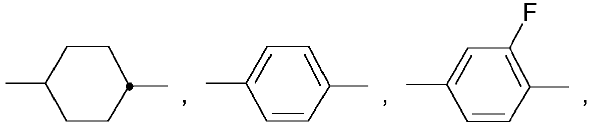 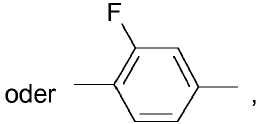 bevorzugt 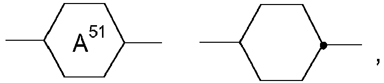 und, wenn vorhanden, 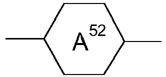 bevorzugt 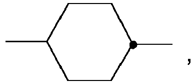
- Z⁵¹ bis Z⁵³: jeweils unabhängig voneinander -CH₂-CH₂-, -CH₂-O-, -CH=CH-, -C≡C-, -COO- oder eine Einfachbindung, bevorzugt -CH₂-CH₂-, -CH₂-O- oder eine Einfachbindung und besonders bevorzugt eine Einfachbindung,
- i und j: jeweils unabhängig voneinander 0 oder 1,
- (i + j): bevorzugt 0 oder 1,
bedeuten,
enthält.

Die erfindungsgemäßen flüssigkristallinen Medien enthalten eine oder mehrere Verbindungen der Formel II ausgewählt aus der Gruppe der Formeln II-1 bis II-3, bevorzugt der Formel II-3, 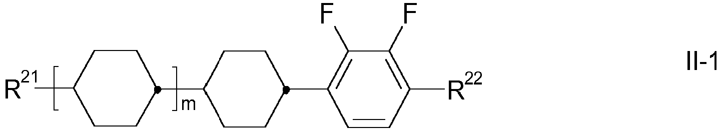 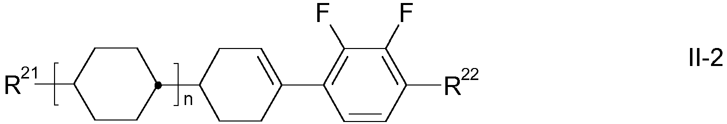 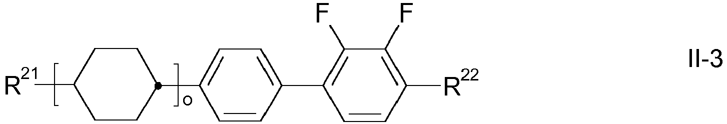 worin
- R²¹: einen unsubstituierten Alkylrest mit 1 bis 7 C-Atomen, bevorzugt einen n-Alkylrest, besonders bevorzugt mit 2 bis 5 C-Atomen, oder einen unsubstituierten Alkenylrest mit 2 bis 7 C-Atomen, bevorzugt einen geradkettigen Alkenylrest, besonders bevorzugt mit 2 bis 5 C-Atomen,
- R²²: einen unsubstituierten Alkylrest mit 1 bis 7 C-Atomen, bevorzugt mit 2 bis 5 C-Atomen oder einen unsubstituierten Alkoxyrest mit 1 bis 6 C-Atomen, bevorzugt mit 2, 3 oder 4 C-Atomen, und
- m, n und o: jeweils unabhängig voneinander 0 oder 1,
bedeuten.

Vorzugsweise enthält das erfindungsgemäße Medium eine oder mehrere Verbindungen ausgewählt aus der Gruppe der Formeln II-1 bis II-4 in einer Gesamtkonzentration im Bereich von 10 % oder mehr bis 80 % oder weniger, bevorzugt von 15 % oder mehr bis 70 % oder weniger, besonders bevorzugt von 20 % oder mehr bis 60 % oder weniger.

In einer weiteren bevorzugten Ausführungsform enthält das erfindungsgemäße Medium zusätzlich zu den Verbindungen ausgewählt aus der Gruppe der Formeln II-1 bis II-4 eine oder mehrere Verbindungen der Formel III-1 in einer Gesamtkonzentration im Bereich von 1 % oder mehr bis 20 % oder weniger, bevorzugt von 2 % oder mehr bis 15 % oder weniger, besonders bevorzugt von 3 % oder mehr bis 10 % oder weniger.

Vorzugsweise enthalten die Medien gemäß der vorliegenden Erfindung zusätzlich zu den Verbindungen der Formel I, bzw. deren bevorzugter Unterformeln, eine oder mehrere dielektrisch neutrale Verbindungen der Formel IV in einer Gesamtkonzentration im Bereich von 5 % oder mehr bis 90 % oder weniger, bevorzugt von 10 % oder mehr bis 80 % oder weniger, besonders bevorzugt von 20 % oder mehr bis 70 % oder weniger.

In einer bevorzugten Ausführungsform der vorliegenden Erfindung enthalten die erfindungsgemäßen Medien eine oder mehrere Verbindungen der Formel II-1, bevorzugt eine oder mehrere Verbindungen ausgewählt aus der Gruppe der Verbindungen der Formeln II-1-1 und II-1-2 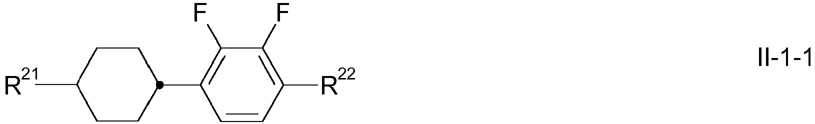 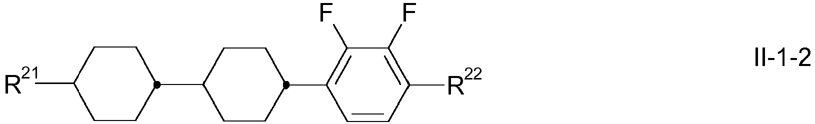 worin die Parameter die oben bei Formel II-1 gegeben Bedeutung haben und bevorzugt
R²¹ einen Alkylrest mit 2 bis 5 C-Atomen, bevorzugt mit 3 bis 5 C-Atomen, und
R²² einen Alkyl- oder Alkoxyrest mit 2 bis 5 C-Atomen, bevorzugt einen Alkoxyrest mit 2 bis 4 C-Atomen, oder ein Alkenyloxyrest mit 2 bis 4 C-Atomen,
bedeuten.

In einer bevorzugten Ausführungsform der vorliegenden Erfindung enthalten die erfindungsgemäßen Medien eine oder mehrere Verbindungen der Formel II-2, bevorzugt eine oder mehrere Verbindungen ausgewählt aus der Gruppe der Verbindungen der Formeln II-2-1 und II-2-2 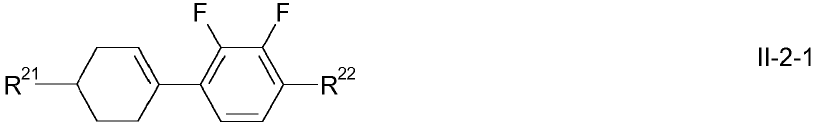 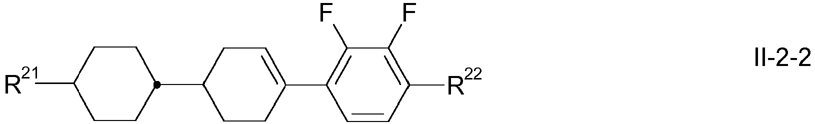 worin die Parameter die oben bei Formel II-2 gegeben Bedeutung haben und bevorzugt
R²¹ einen Alkylrest mit 2 bis 5 C-Atomen, bevorzugt mit 3 bis 5 C-Atomen, und
R²² einen Alkyl- oder Alkoxyrest mit 2 bis 5 C-Atomen, bevorzugt einen Alkoxyrest mit 2 bis 4 C-Atomen oder ein Alkenyloxyrest mit 2 bis 4 C-Atomen,
bedeuten.

In einer besonders bevorzugten Ausführungsform der vorliegenden Erfindung enthalten die erfindungsgemäßen Medien eine oder mehrere Verbindungen der Formel II-3, bevorzugt eine oder mehrere Verbindungen ausgewählt aus der Gruppe der Verbindungen der Formeln II-3-1 und II-3-2, ganz besonders bevorzugt der Formel II-3-2, 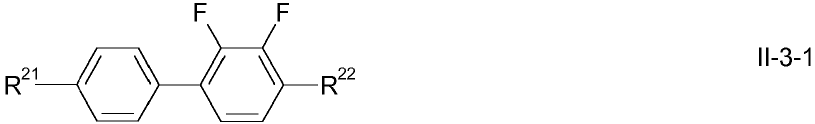 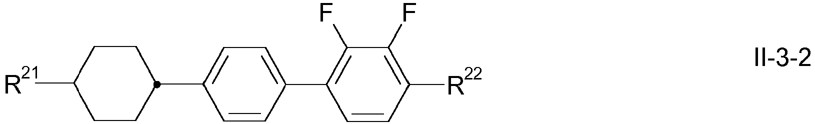 worin die Parameter die oben bei Formel II-3 gegeben Bedeutung haben und bevorzugt
R²¹ einen Alkylrest mit 2 bis 5 C-Atomen, bevorzugt mit 3 bis 5 C-Atomen, und
R²² einen Alkyl- oder Alkoxyrest mit 2 bis 5 C-Atomen, bevorzugt ein Alkoxyrest mit 2 bis 4 C-Atomen oder ein Alkenyloxyrest mit 2 bis 4 C-Atomen,
bedeuten.

In einer weiteren bevorzugten Ausführungsform enthält das Medium eine oder mehrere Verbindungen der Formeln III-1 bis III-3 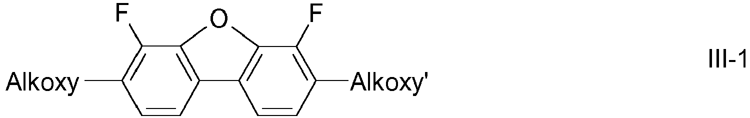 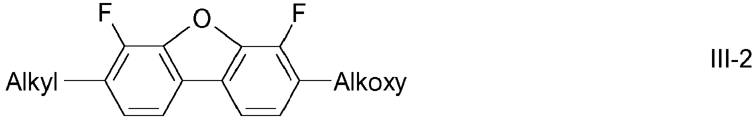 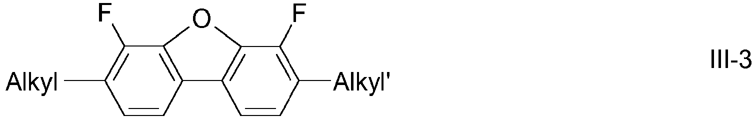 worin
Alkyl, Alkyl' Alkyl mit 1 bis 7 C-Atomen, bevorzugt mit 2-5 C-Atomen, Alkoxy, Alkoxy' Alkoxy mit 1 bis 7 C-Atomen, bevorzugt mit 2 bis 5 C-Atomen, bedeuten.

Besonders bevorzugt enthält das Medium eine oder mehrere Verbindungen der Formel III-1.

In einer weiteren bevorzugten Ausführungsform enthält das Medium eine oder mehrere Verbindungen der Formel IV 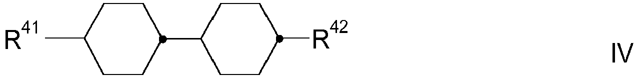 worin
R⁴¹ einen unsubstituierten Alkylrest mit 1 bis 7 C-Atomen oder einen unsubstituierten Alkenylrest mit 2 bis 7 C-Atomen, bevorzugt einen *n-*Alkylrest, besonders bevorzugt mit 2, 3, 4 oder 5 C-Atomen, und
R⁴² einen unsubstituierten Alkylrest mit 1 bis 7 C-Atomen oder einen unsubstituierten Alkoxyrest mit 1 bis 6 C-Atomen, beide bevorzugt mit 2 bis 5 C-Atomen, einen unsubstituierten Alkenylrest mit 2 bis 7 C-Atomen, bevorzugt mit 2, 3 oder 4 C-Atomen, stärker bevorzugt einen Vinylrest oder einen 1-Propenylrest und insbesondere einen Vinylrest
bedeuten.

In einer besonders bevorzugten Ausführungsform enthält das Medium eine oder mehrere Verbindungen der Formel IV, ausgewählt aus der Gruppe der Verbindungen der Formeln IV-1 bis IV-4, bevorzugt ausgewählt aus der Gruppe der Verbindungen der Formeln IV-1 und IV-2, 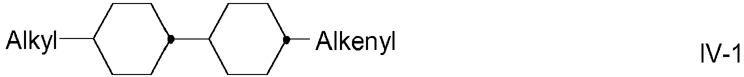 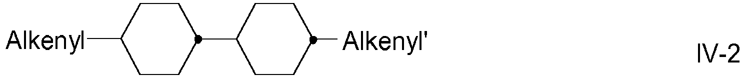 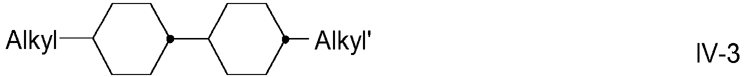 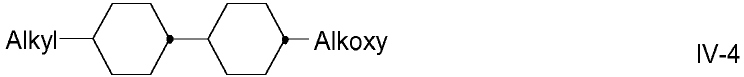 worin
Alkyl und Alkyl' unabhängig voneinander Alkyl mit 1 bis 7 C-Atomen, bevorzugt mit 2 bis 5 C-Atomen,
Alkenyl einen Alkenylrest mit 2 bis 5 C-Atomen, bevorzugt mit 2 bis 4 C-Atomen, besonders bevorzugt 2 C-Atomen,
Alkenyl' einen Alkenylrest mit 2 bis 5 C-Atomen, bevorzugt mit 2 bis 4 C-Atomen, besonders bevorzugt mit 2 bis 3 C-Atomen, und
Alkoxy Alkoxy mit 1 bis 5 C-Atomen, bevorzugt mit 2 bis 4 C-Atomen,
bedeuten.

In einer besonders bevorzugten Ausführungsform enthalten die erfindungsgemäßen Medien eine oder mehrere Verbindungen der Formel IV-1 und/oder eine oder mehrere Verbindungen der Formel IV-2.

In einer weiteren bevorzugten Ausführungsform enthält das Medium eine oder mehrere Verbindungen der Formel V 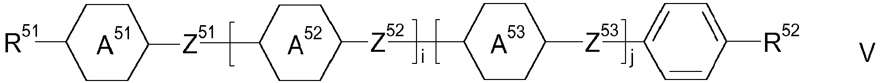 worin
R⁵¹ und R⁵² unabhängig voneinander eine der für R²¹ und R²² gegebenen Bedeutungen haben und bevorzugt Alkyl mit 1 bis 7 C-Atomen, bevorzugt n-Alkyl, besonders bevorzugt *n*-Alkyl mit 1 bis 5 C-Atomen, Alkoxy mit 1 bis 7 C-Atomen, bevorzugt *n*-Alkoxy, besonders bevorzugt *n*-Alkoxy mit 2 bis 5 C-Atomen, Alkoxyalkyl, Alkenyl oder Alkenyloxy mit 2 bis 7 C-Atomen, bevorzugt mit 2 bis 4 C-Atomen, bevorzugt Alkenyloxy, 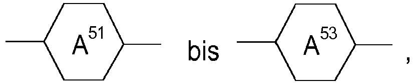 soweit vorhanden, jeweils unabhängig voneinander, 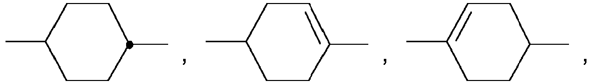 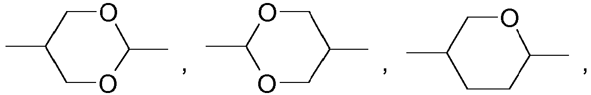 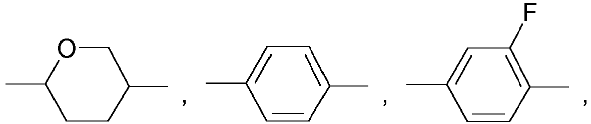 oder 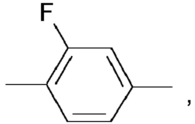 bevorzugt 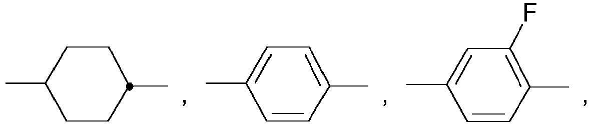 oder 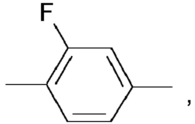 bevorzugt 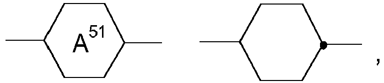 und, wenn vorhanden, 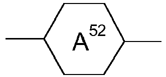 bevorzugt 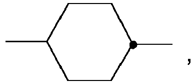 Z⁵¹ bis Z⁵³ jeweils unabhängig voneinander -CH₂-CH₂-, -CH₂-O-, -CH=CH-, -C≡C-, -COO- oder eine Einfachbindung,
bevorzugt -CH₂-CH₂-, -CH₂-O- oder eine Einfachbindung und besonders bevorzugt eine Einfachbindung,
- i und j: jeweils unabhängig voneinander 0 oder 1,
- (i + j): bevorzugt 0 oder 1,
bedeuten.

Bevorzugt enthalten die erfindungsgemäßen Medien die folgenden Verbindungen in den angegebenen Gesamtkonzentrationen
5 - 60 Gew.-% einer oder mehrerer Verbindungen ausgewählt aus der Gruppe der Verbindungen der Formel II und/oder
5 - 60 Gew.-% einer oder mehrerer Verbindungen ausgewählt aus der Gruppe der Verbindungen der Formel II und III und/oder
10 - 60 Gew.-% einer oder mehrerer Verbindungen ausgewählt aus der Gruppe der Verbindungen der Formeln II-1 bis II-3 und/oder
10 - 60 Gew.-% einer oder mehrerer Verbindungen der Formeln IV und/oder V,
wobei der Gesamtgehalt aller Verbindungen in dem Medium 100 % beträgt.

Nachfolgend wird als bevorzugte Ausführungsform ein Medium mit positiver dielektrischer Anisotropie beschrieben, welches
a) eine oder mehrere Verbindungen der Formel I,
b) eine oder mehrere Verbindungen der Formeln VI und VII: 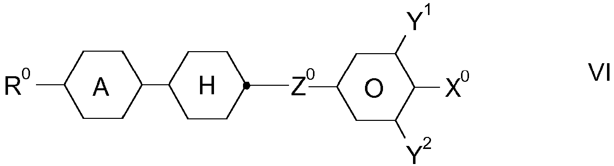 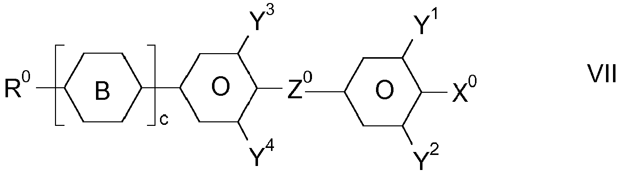 worin
   - R°: einen Alkyl- oder Alkoxyrest mit 1 bis 15 C-Atomen, worin optional zusätzlich eine oder mehrere CH₂-Gruppen in diesen Resten, unabhängig voneinander, durch -C≡C-, -CF₂O-, -CH=CH-, 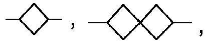 -O-, -(CO)O- oder -O(CO)- so substituiert sind, dass O-Atome nicht direkt miteinander verknüpft sind, und in denen zusätzlich ein oder mehrere H-Atome optional durch Halogen ersetzt sein können,
   - Ring A: 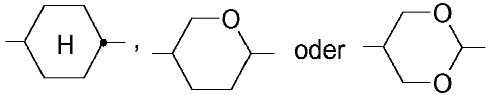 Ring B unabhängig voneinander 1,4-Phenylen, optional substituiert durch ein oder zwei F oder Cl, 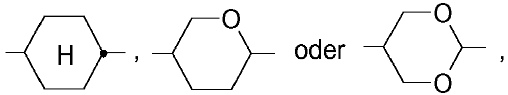
   X° F, Cl, CN, SF₅, SCN, NCS, eine halogenierte Alkylgruppe, eine halogenierte Alkenylgruppe, eine halogenierte Alkoxygruppe oder eine halogenierte Alkenyloxygruppe, jeweils mit bis zu 6 C-Atomen,
   Y¹⁻⁴ jeweils unabhängig voneinander H or F,
   Z⁰ -CF₂O-, -(CO)O- oder eine Einfachbindung, und
   c 0, 1 oder 2, bevorzugt 1 oder 2,
   und
c) optional, bevorzugt obligatorisch, eine oder mehrere Verbindungen ausgewählt aus der Gruppe der Verbindungen der Formeln IV und V, bevorzugt der Formel IV,
enthält. 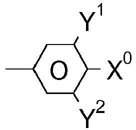 bedeutet bevorzugt 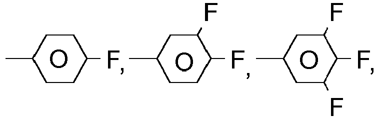 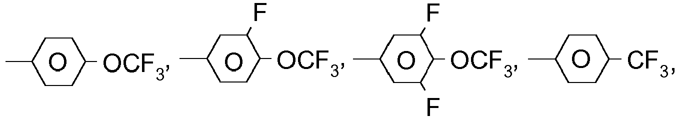 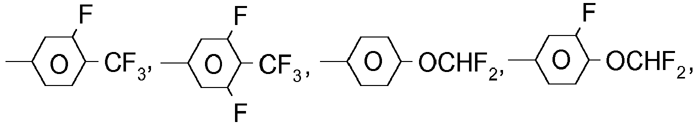 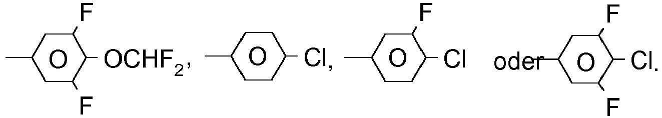
R° bedeutet bevorzugt geradkettiges Alkyl oder Alkenyl mit 2 bis 7 C-Atomen;
X° bedeutet bevorzugt F, OCF₃, Cl oder CF₃, insbesondere F.

In einer weiteren Ausführungsform sind Medien mit positiver oder negativer dielektrischer Anisotropie bevorzugt, die sowohl dielektrisch negative Verbindungen ausgewählt aus den Formeln II und III, und zusätzlich dielektrisch positive Verbindungen ausgewählt aus den Formeln VI und VII umfassen. Dielektrisch neutrale Verbindungen sind darin ebenso optional umfasst.

Ganz allgemein sind auch Kombinationen der oben und unten angegebenen bevorzugten Ausführungsformen der Erfindung und die Beispiele als besonders bevorzugt anzusehen, soweit sie miteinander formal vereinbar sind. Weitere Ausführungsformen sind den Ansprüchen und ihren Kombinationen zu entnehmen.

Die Verbindungen der Formel I werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind und zwar unter Reaktionsbedingungen, die für die genannten Umsetzungen bekannt und geeignet sind. Dabei kann man auch von an sich bekannten, hier nicht näher erwähnten Varianten Gebrauch machen. Die Verbindungen der Formel I können vorteilhafterweise wie an den folgenden beispielhaften Synthesen ersichtlich hergestellt werden (Schema 1):
Typisch für eine Reihe der Verbindungen der Formel I ist ein Herstellungsverfahren für diese, das einen Verfahrensschritt umfasst, worin ein polyfluorierter Alkohol (z.B. C(CF₃)₃OH) mit einer weiteren OHfunktionalisierten Verbindung mit einem oder mehreren Ringsystemen verethert wird (Schema 1). Das Verfahren wird bevorzugt unter Mitsunobu-Bedingungen kondensiert. Es wird daher vorzugsweise in Gegenwart von Triphenylphosphin und einem Azodicarboxylat (z.B. DIAD, DEAD) durchgeführt, vorzugsweise mit Diisopropylazodicarboxylat. Die Reaktion erfolgt typischerweise in THF bei 20-50°C.

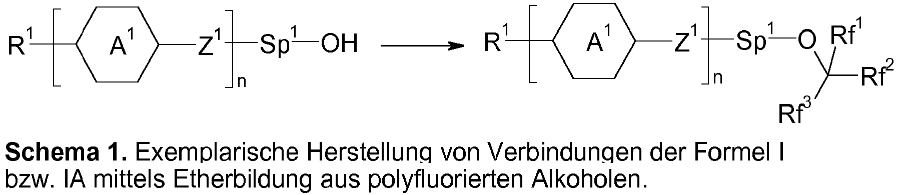

Beschrieben wird auch ein Verfahren zur Herstellung von Verbindungen der Formel I, das dadurch gekennzeichnet ist, dass eine Verbindung der Formel I, worin R² jeweils unabhängig 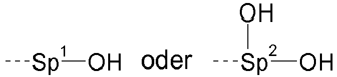 bedeutet
in Gegenwart eines fluorierten Alkohols der Formel 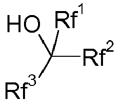 durch Veretherung hergestellt wird.

Typisch für eine andere Reihe der Verbindungen der Formel I ist ein Herstellungsverfahren für diese, das einen Verfahrensschritt umfasst, worin ein polyfluoriertes Alken (z.B. F₂C=C(CF₃)₂) mit einer halogenierten (elektrophilen) Verbindung mit einer C-C-Bindung verknüpft wird (Schema 2).

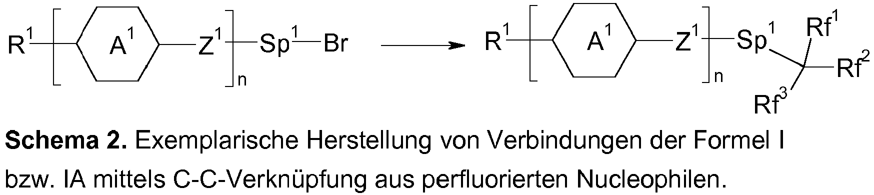

Als Beispielreaktion wird eine Reaktion gemäß Schema 3 angegeben, worin ein Perfluoralken mit Caesiumfluorid zu einem Carbanion aktiviert und mit einem Benzylbromid verknüpft wird (vgl. z. B. K. N. Makarov et al. Journal of Fluorine Chemistry, 10 (1977) 157-158).

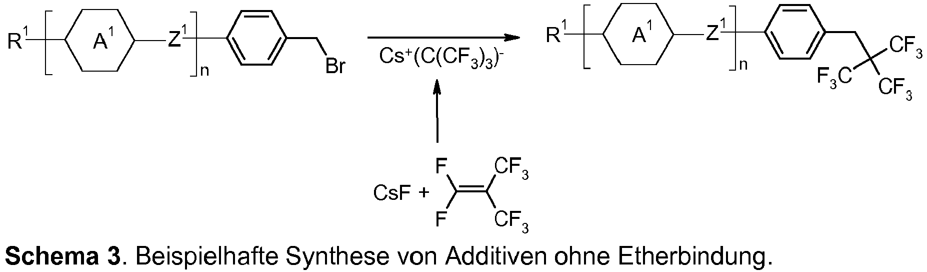

Geeignete polyfluorierte Ausgangsstoffe (Alkohole, Alkene) sind kommerziell erhältlich. Alkohole gemäß der in Schema 1 skizzierten Struktur R¹-[A¹-Z¹]ₙ-Sp¹-OH bzw. R¹-[A¹-Z¹]ₙ-Sp¹-(OH)₂ als Ausgangsstoff sind literaturbekannt oder in Analogie dazu erhältlich, ebenso die analogen Halogenidverbindungen nach Schema 2.

Die Substituenten der Verbindungen in Schema 1 können analog der allgemeinen Formel I variiert werden, indem man die eingesetzten Bausteine variiert. Auf diese Weise erreicht man ganz unterschiedliche erfindungsgemäße Verbindungen.

Die Verbindungen der Formel I eignen sich für eine Verwendung in VA-TFT-Anzeigesystemen (wie z.B. ECB, VAN, MVA, (S)-PVA und ASV), für TN-TFT-, FFS- (fringe field switching), PALC-, STN- oder IPS-Anzeigesysteme. Dem Fachmann werden weitere Displaytypen bekannt sein, worin sich erfindungsgemäße Verbindungen in Flüssigkristallmedien mit entsprechend geeigneten dielektrischen Eigenschaften einsetzen lassen.

Gegenstand der vorliegenden Erfindung sind auch elektrooptische Anzeigen oder elektrooptische Komponenten, die erfindungsgemäße flüssigkristalline Medien enthalten. Bevorzugt sind elektrooptische Anzeigen die auf dem VA- oder dem ECB-Effekt basieren und insbesondere solche, die mittels einer Aktivmatrix-Adressierungsvorrichtung angesteuert werden.

Dementsprechend ist die Verwendung eines erfindungsgemäßen flüssigkristallinen Mediums in einer elektrooptischen Anzeige oder in einer elektrooptischen Komponente ebenfalls Gegenstand der vorliegenden Erfindung.

Ein Gegenstand der Erfindung ist ebenso ein Verfahren zur Herstellung eines flüssigkristallinen Mediums wie vor und nachstehend beschreiben, das dadurch gekennzeichnet ist, dass man eine oder mehrere Verbindungen der Formel I mit einer oder mehreren weiteren flüssigkristallinen Verbindungen mischt und gegebenenfalls weitere Verbindungen und Additive zugibt. Bevorzugt ist ein Verfahren zur Herstellung der erfindungsgemäßen flüssigkristallinen Medien, dadurch gekennzeichnet, dass eine oder mehrere Verbindungen der Formel I mit einer oder mehreren Verbindungen der Formel II, bevorzugt mit einer oder mehrere Verbindungen der Teilformeln II-1 und/oder II-2 und/oder II-3 und/oder II-4, und mit einer oder mehreren weiteren Verbindungen und/oder Additiven, gemischt wird.

In der vorliegenden Anmeldung bedeutet der Begriff "Verbindungen", auch geschrieben als "Verbindung(en)", sofern nicht explizit anders angegeben, sowohl eine als auch mehrere Verbindungen.

In der vorliegenden Anmeldung bedeutet:
- Alkyl besonders bevorzugt geradkettiges Alkyl, insbesondere CH₃-, C₂H₅-, *n*-C₃H₇, *n*-C₄H₉- oder *n*-C₅H₁₁-,
- Alkenyl besonders bevorzugt CH₂=CH-, E-CH₃-CH=CH-, CH₂=CH-CH₂-CH₂-, *E*-CH₃-CH=CH-CH₂-CH₂- oder *E*-(*n*-C₃H₇)-CH=CH-,
- Alkoxy besonders bevorzugt geradkettiges Alkoxy, insbesondere CH₃O-, C₂H₅O-, *n*-C₃H₇O-, *n*-C₄H₉O- oder *n*-C₅H₁₁O-.

Für die vorliegende Erfindung bedeuten die Teilformeln 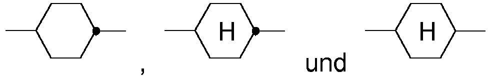 trans-1,4-Cyclohexylen und die Teilformeln 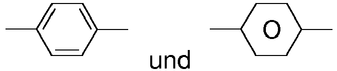 1,4-Phenylen.

In der vorliegenden Anmeldung beschreibt der Ausdruck dielektrisch positiv Verbindungen oder Komponenten mit Δε > 3,0, dielektrisch neutral mit -1,5 ≤ Δε ≤ 3,0 und dielektrisch negativ mit Δε < -1,5. Δε wird bei einer Frequenz von 1 kHz und 20°C bestimmt. Die dielektrische Anisotropie der jeweiligen Verbindung wird aus den Ergebnissen einer Lösung von 10 % der jeweiligen einzelnen Verbindung in einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 µm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Δε ist als (ε| | - ε_{⊥}) definiert, während ε_{Drchschn}. (ε| | + 2 ε_{⊥}) / 3 ist.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20 °C eine nematische Phase aufweisen, werden als solche gemessen, alle anderen werden wie Verbindungen behandelt.

Der Ausdruck Schwellenspannung bezeichnet in der vorliegenden Anmeldung die optische Schwelle und ist für 10 % relativen Kontrast (V₁₀) angegeben, der Ausdruck Sättigungsspannung bezeichnet die optische Sättigung und ist für 90 % relativen Kontrast (V₉₀) angegeben, in beiden Fällen soweit nicht ausdrücklich etwas anderes angegeben ist. Die kapazitive Schwellenspannung (V₀), auch Freedericks-Schwelle V_{Fr} genannt, wird nur verwendet, wenn dies ausdrücklich genannt ist.

Die in dieser Anmeldung angegebenen Parameterbereiche schließen sämtlich die Grenzwerte ein, wenn nicht ausdrücklich etwas anderes angegeben ist.

Die unterschiedlichen für verschiedene Bereiche von Eigenschaften angegebenen oberen und unteren Grenzwerte ergeben in Kombination miteinander zusätzliche bevorzugte Bereiche.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung, alle Temperaturen und alle Temperaturunterschiede sind in Grad Celsius bzw. Differenzgrad angegeben. Alle physikalischen Eigenschaften werden nach "Merck Liquid Crystals, Physical Properties of Liquid Crystals", Stand Nov. 1997, Merck KGaA, Deutschland, bestimmt und sind für eine Temperatur von 20 °C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Die Schwellenspannungen sowie alle anderen elektrooptischen Eigenschaften werden mit bei Merck hergestellten Testzellen bestimmt. Die Testzellen für die Bestimmung von Δε besitzen eine Schichtdicke von circa 20 µm. Bei der Elektrode handelt es sich um eine kreisförmige ITO-Elektrode mit einer Fläche von 1,13 cm² und einem Schutzring. Die Ausrichtungsschichten sind SE-1211 von Nissan Chemicals, Japan, für homöotrope Ausrichtung (ε | |) und Polyimid AL-1054 von Japan Synthetic Rubber, Japan, für homogene Ausrichtung (ε_{⊥}). Die Bestimmung der Kapazitäten erfolgt mit einem Frequenzgang-Analysegerät Solatron 1260 unter Verwendung einer Sinuswelle mit einer Spannung von 0,3 Vᵣₘₛ. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen werden unter senkrechter Beobachtung bestimmt. Die Schwellenspannung (V₁₀), "Mittgrau-Spannung" (V₅₀) und Sättigungsspannung (V₉₀) werden für 10 %, 50 % bzw. 90 % relativen Kontrast bestimmt.

Die Flüssigkristallmedien gemäß der vorliegenden Erfindung können weitere Zusatzstoffe und chirale Dotierstoffe in den üblichen Konzentrationen beinhalten. Die Gesamtkonzentration dieser weiteren Bestandteile liegt im Bereich von 0 % bis 10 %, vorzugsweise 0,1 % bis 6 %, bezogen auf die Gesamtmischung. Die Konzentrationen der einzelnen verwendeten Verbindungen liegen vorzugsweise jeweils im Bereich von 0,1 % bis 3 %. Die Konzentration dieser und ähnlicher Zusatzstoffe wird bei der Angabe der Werte und Konzentrationsbereiche der Flüssigkristallkomponenten und -verbindungen der Flüssigkristallmedien in dieser Anmeldung nicht berücksichtigt.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Durch Zugabe geeigneter Zusatzstoffe können die Flüssigkristallmedien gemäß der vorliegenden Erfindung so modifiziert werden, dass sie in allen bekannten Arten von Flüssigkristallanzeigen verwendbar sind, entweder durch Verwendung der Flüssigkristallmedien als solcher, wie TN-, TN-AMD, ECB-AMD, VAN-AMD, IPS-AMD, FFS-AMD LCDs oder in Verbundsystemen, wie PDLC, NCAP, PN LCDs und speziell in ASM-PA LCDs.

Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben.

In der vorliegenden Erfindung und insbesondere in den folgenden Beispielen sind die Strukturen der mesogenen Verbindungen durch Abkürzungen angegeben, die auch als Akronyme bezeichnet werden. In diesen Akronymen sind die chemischen Formeln unter Verwendung der folgenden Tabellen A bis C wie folgt abgekürzt. Alle Gruppen CₙH₂ₙ₊₁, CₘH₂ₘ₊₁ und CₗH₂ₗ₊₁ bzw. CₙH₂ₙ₋₁, CₘH₂ₘ₋₁ und CₗH₂ₗ₋₁ bedeuten geradkettiges Alkyl bzw. Alkenyl, vorzugsweise 1-E-Alkenyl, jeweils mit n, m bzw. I C-Atomen. In der Tabelle A werden die für die Ringelemente der Kernstrukturen der Verbindungen verwendeten Codes aufgeführt, während in der Tabelle B die Verknüpfungsgruppen gezeigt sind. Tabelle C gibt die Bedeutungen der Codes für die Endgruppen der linken bzw. rechten Seite. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

| Tabelle A: Rinqelemente | | | |
|---|---|---|---|
| C | 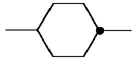 | P | 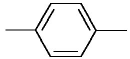 |
| D | 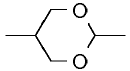 | DI | 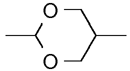 |
| A | 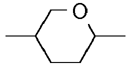 | AI | 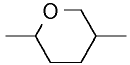 |
| G | 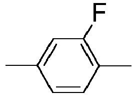 | GI | 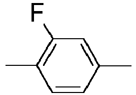 |
| U | 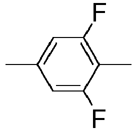 | UI | 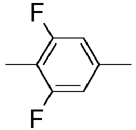 |
| M | 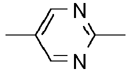 | MI | 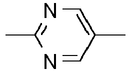 |
| N | 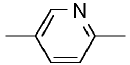 | NI | 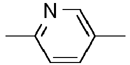 |
| Y | 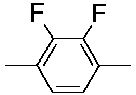 | | |
| P(F, CI)Y | 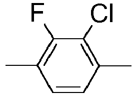 | P(CI,F)Y | 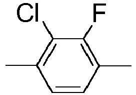 |
| Np | 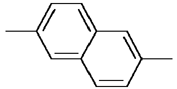 | dH | 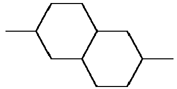 |
| n3f | 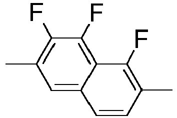 | nN3fl | 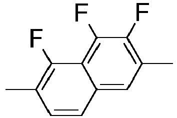 |
| tH | 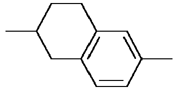 | tHI | 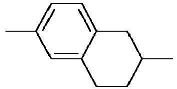 |
| tH2f | 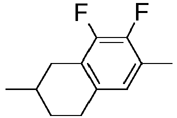 | tH2fl | 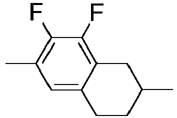 |
| **o2f** | 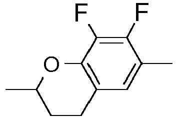 | **o2fl** | 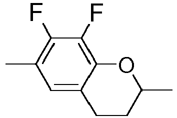 |
| **dh** | 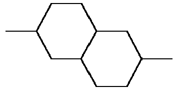 | **B** | 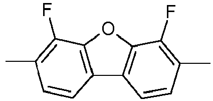 |
| **K** | 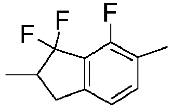 | **KI** | 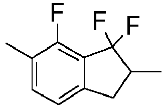 |
| **L** | 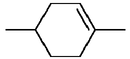 | **LI** | 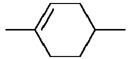 |
| **F** | 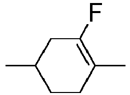 | **FI** | 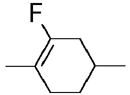 |
| Nf | 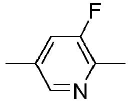 | Nfl | 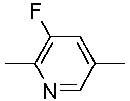 |

**Tabelle B: Brückenglieder**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **ZI** | -O-CO- |
| **X** | -CF=CH- | **XI** | -CH=CF- |
| **O** | -CH₂-O- | **OI** | -O-CH₂- |
| **Q** | -CF₂-O- | **QI** | -O-CF₂- |

**Tabelle C: Endgruppen**

| **Links einzelstehend oder in Kombination** | | **Rechts einzelstehend oder in Kombination** | |
|---|---|---|---|
| **-n-** | CₙH₂ₙ₊₁- | **-n** | -CₙH₂ₙ₊₁ |
| **-nO-** | CₙH₂ₙ₊₁-O- | **-nO** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ- | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N=C- | **-N** | -C=N |
| **-S-** | S=C=N- | **-S** | -N=C=S |
| **-F-** | F- | **-F** | -F |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡C-CₙH₂ₙ₊₁ |
| **-NA-** | N≡C-C≡C- | **-AN** | -C≡C-C≡N |
| | | **-OXF** | -O-CH=CF2 |

| **Links nur in Kombination** | | **Rechts nur in Kombination** | |
|---|---|---|---|
| **-...n...-** | -CₙH₂ₙ- | -...n... | -CₙH₂ₙ- |
| **...M...-** | -CFH- | **-...M...** | -CFH- |
| **...D...-** | -CF₂- | **-...D...** | -CF₂- |
| **-...V...-** | -CH=CH- | **-...V...** | -CH=CH- |
| **...Z...-** | -CO-O- | **-...Z...** | -CO-O- |
| **...ZI...-** | -O-CO- | **-...ZI...** | -O-CO- |
| **... K...-** | -CO- | **... K...** | -CO- |
| **-...W...-** | -CF=CF- | **...W...** | -CF=CF- |
| | | **-...X...** | -CH=CF- |

worin n und m jeweils ganze Zahlen und die drei Punkte "..." Platzhalter für andere Abkürzungen aus dieser Tabelle sind.

In der folgenden Tabelle werden Beispielstrukturen zusammen mit ihren jeweiligen Abkürzungen angegeben. Diese werden gezeigt, um die Bedeutung der Regeln für die Abkürzungen zu demonstrieren. Vorzugsweise enthalten die erfindungsgemäßen Mischungen neben den Verbindungen der Formeln I eine oder mehrere Verbindungen der nachfolgend genannten Verbindungen.

Folgende Abkürzungen werden verwendet:
(n, m und z unabhängig voneinander jeweils eine ganze Zahl, bevorzugt 1 bis 6).

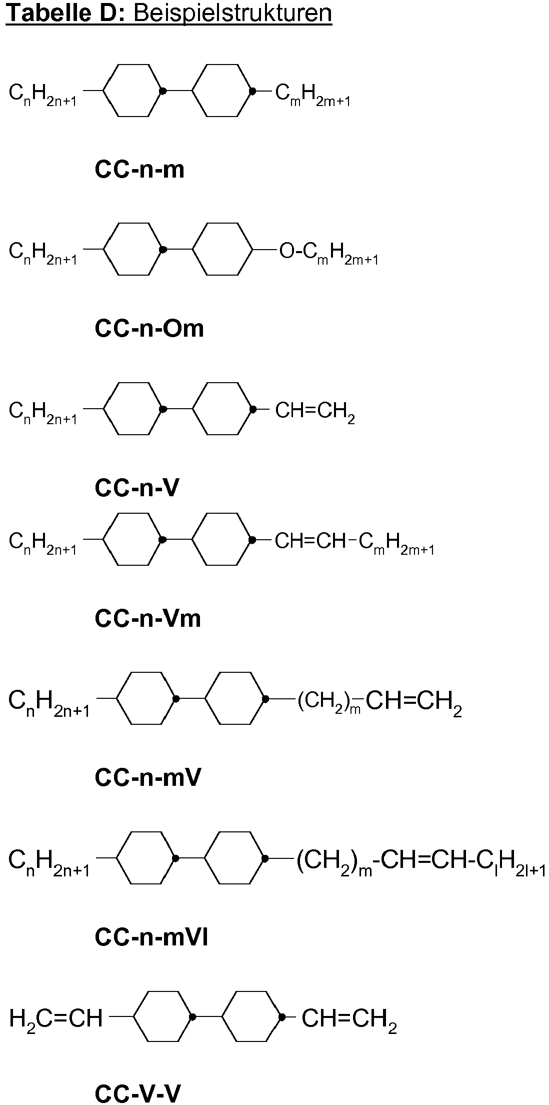

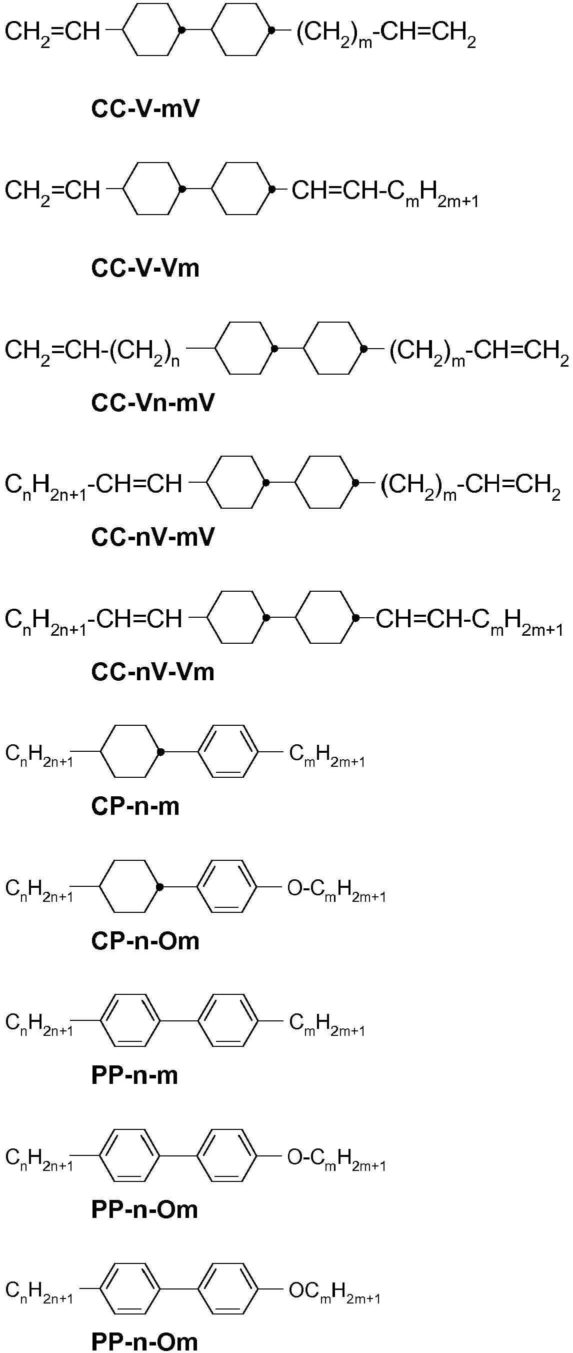

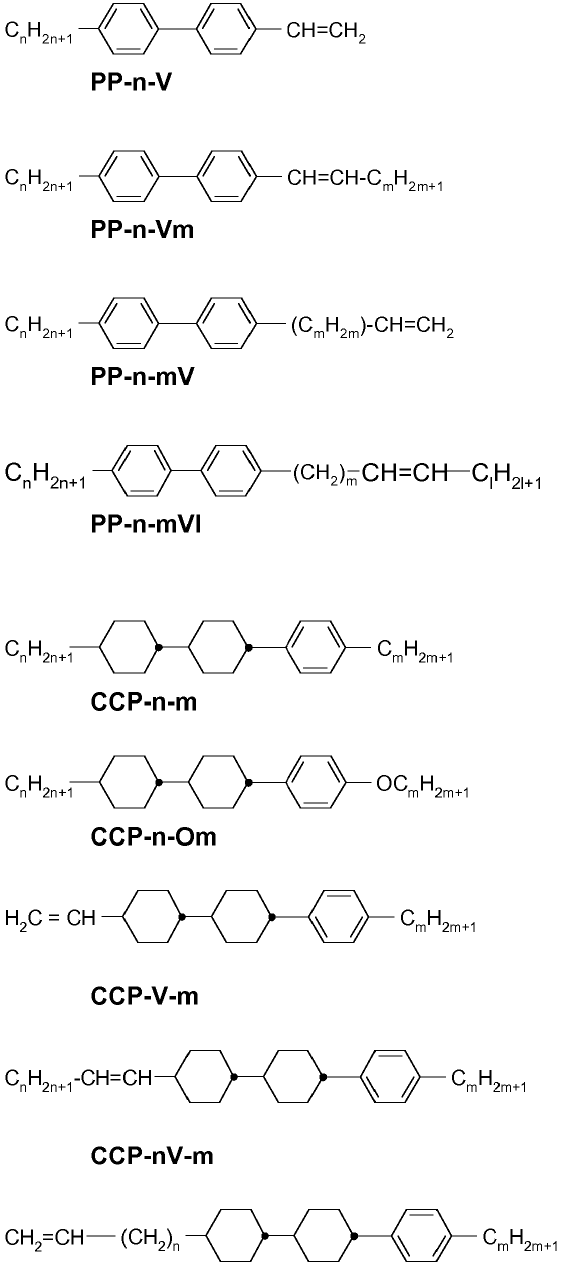

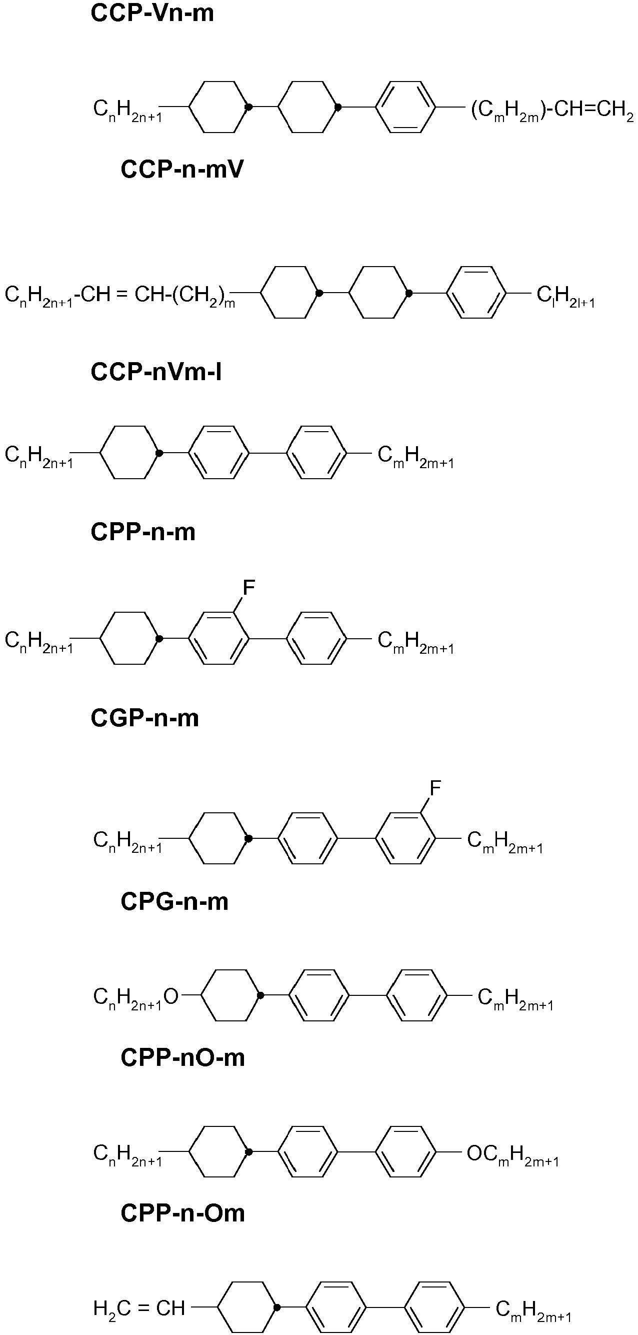

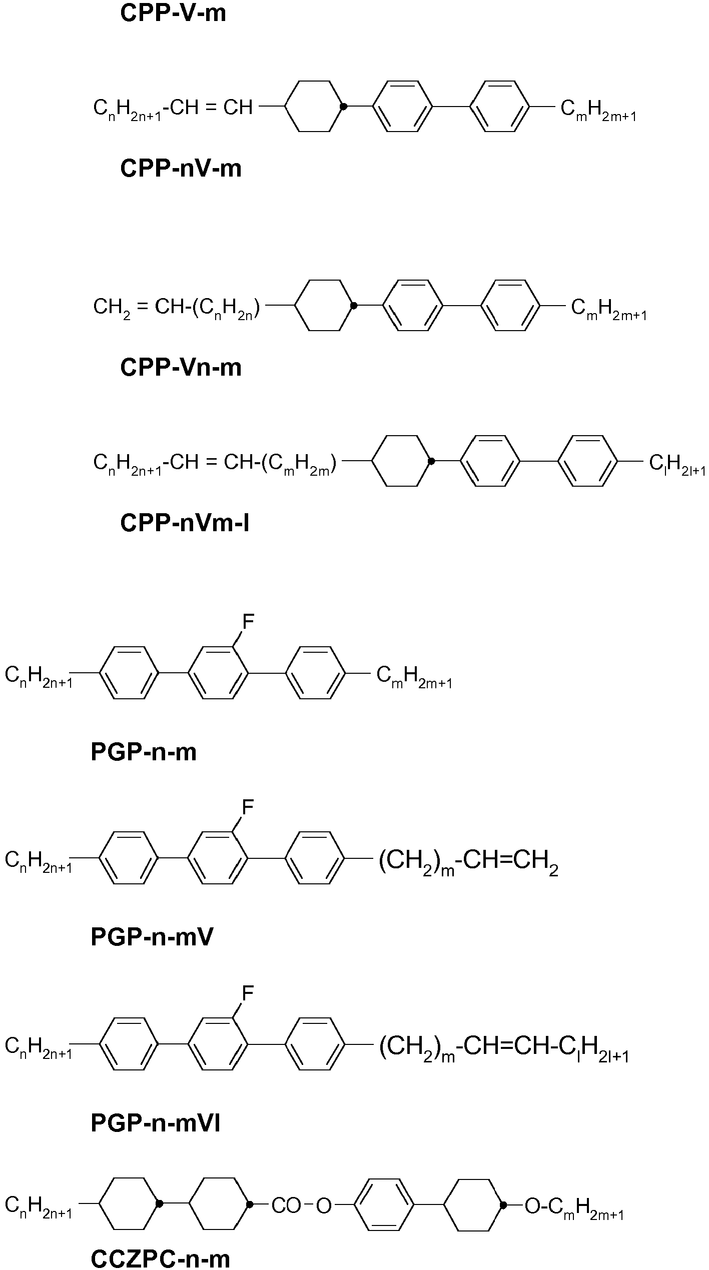

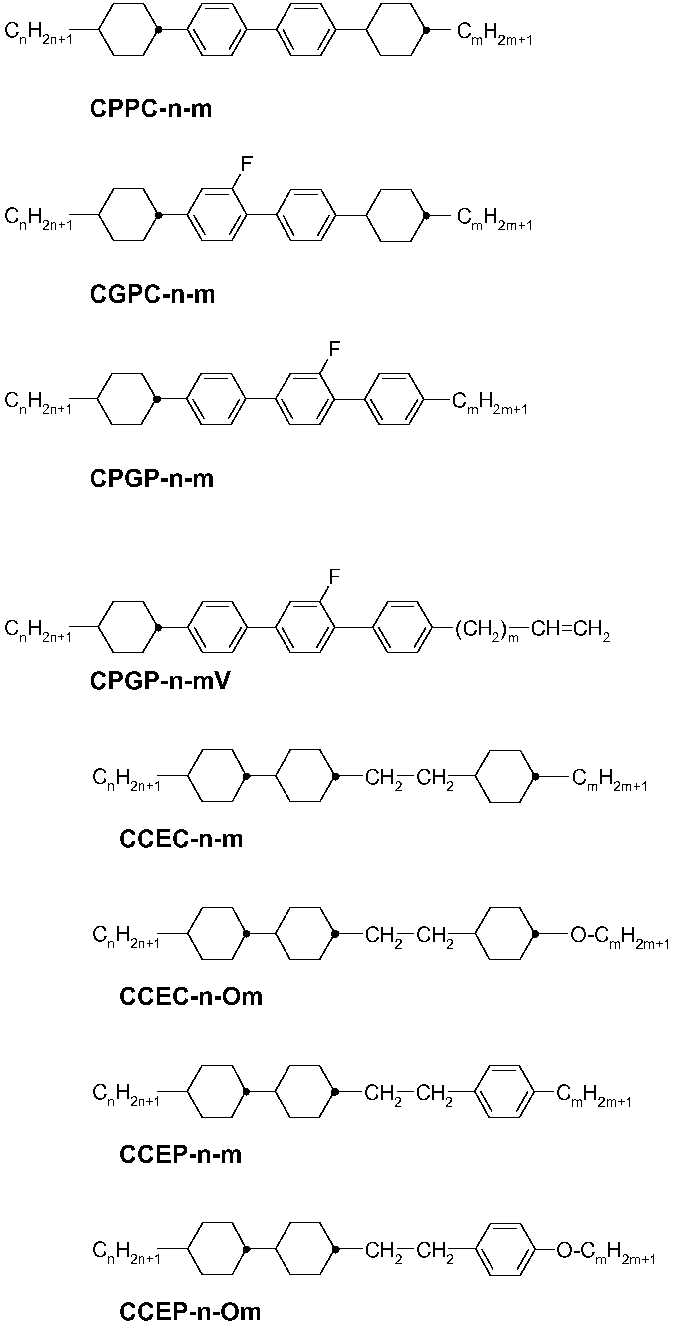

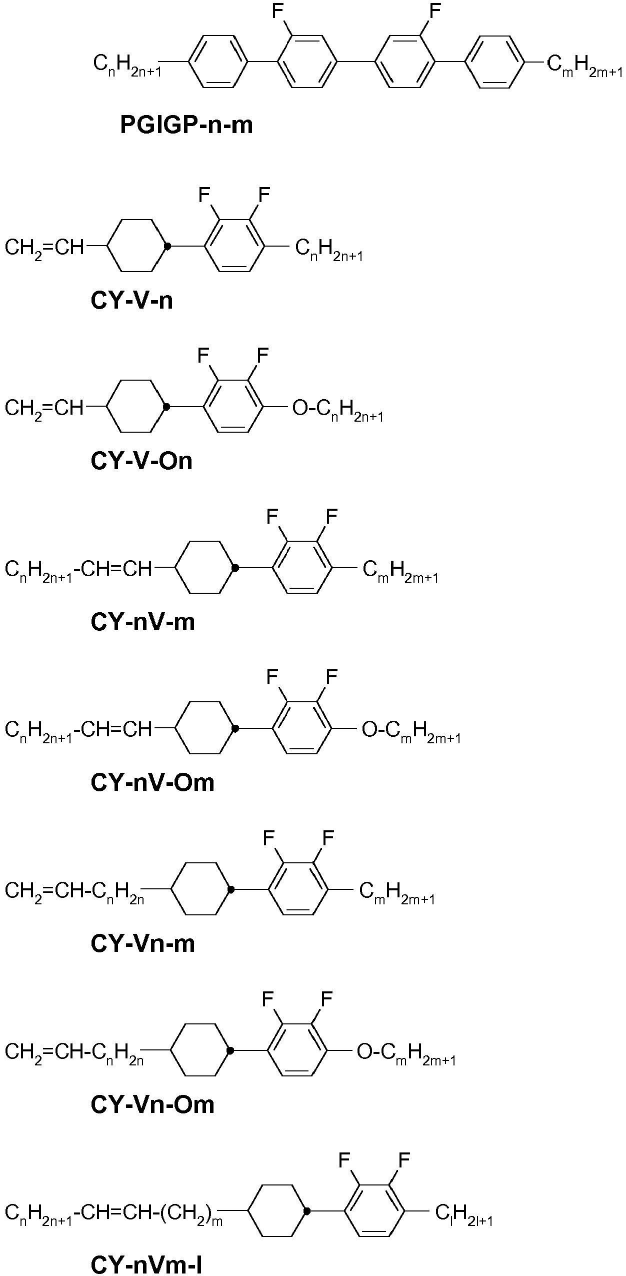

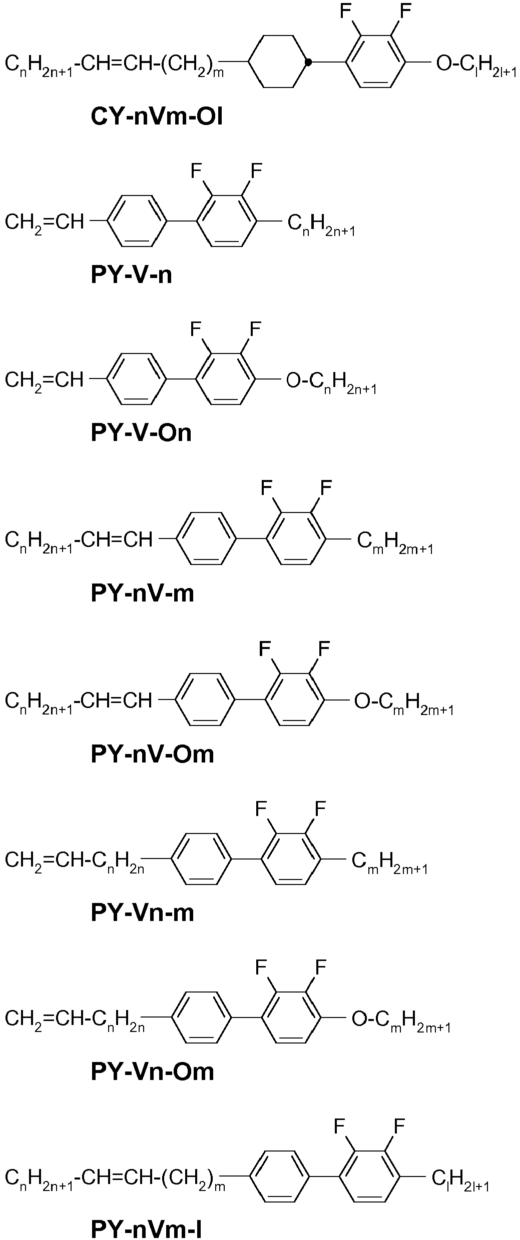

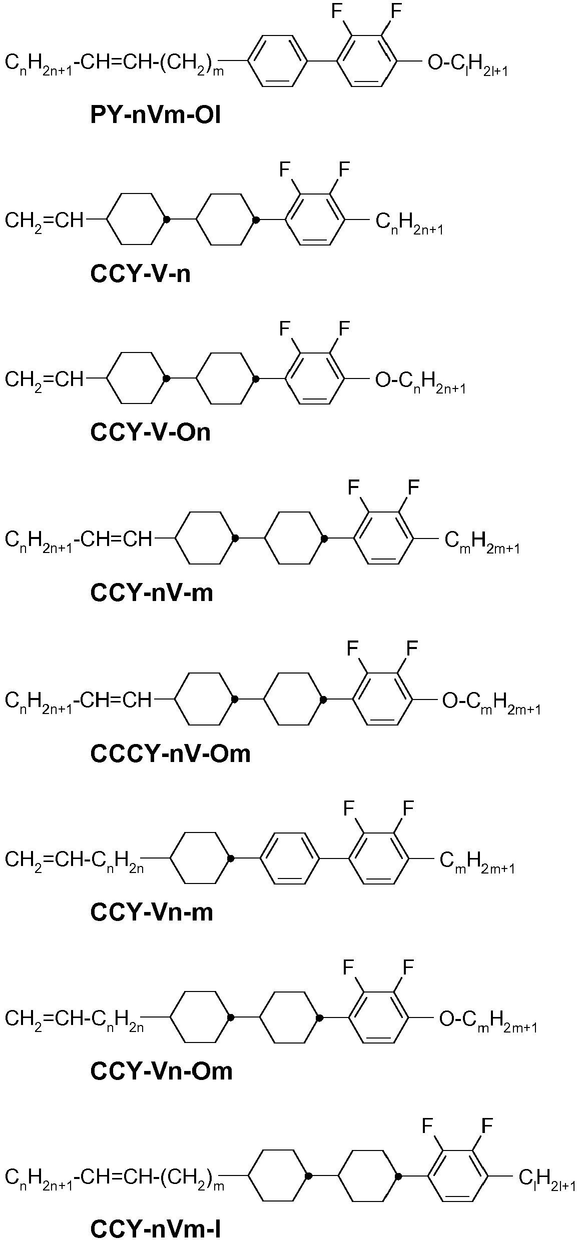

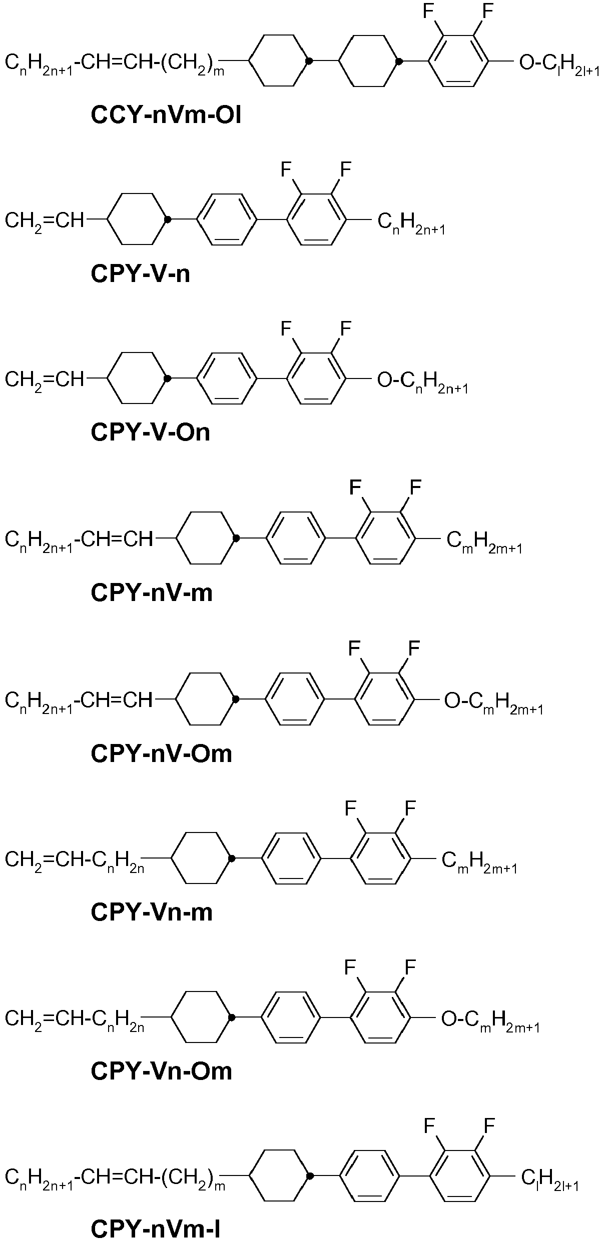

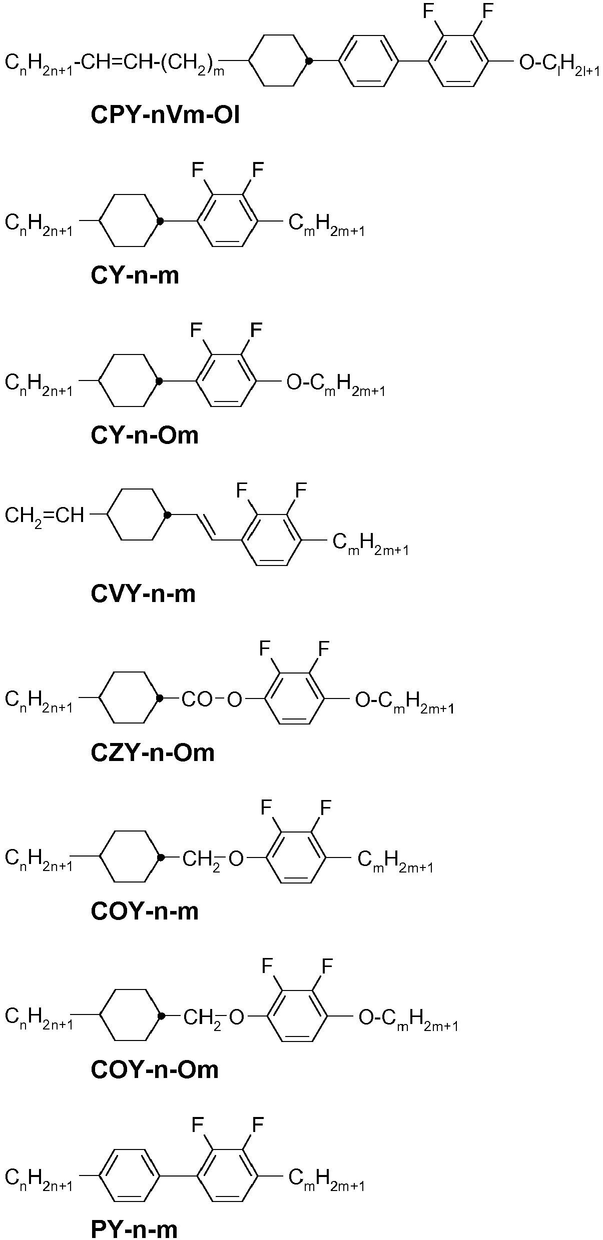

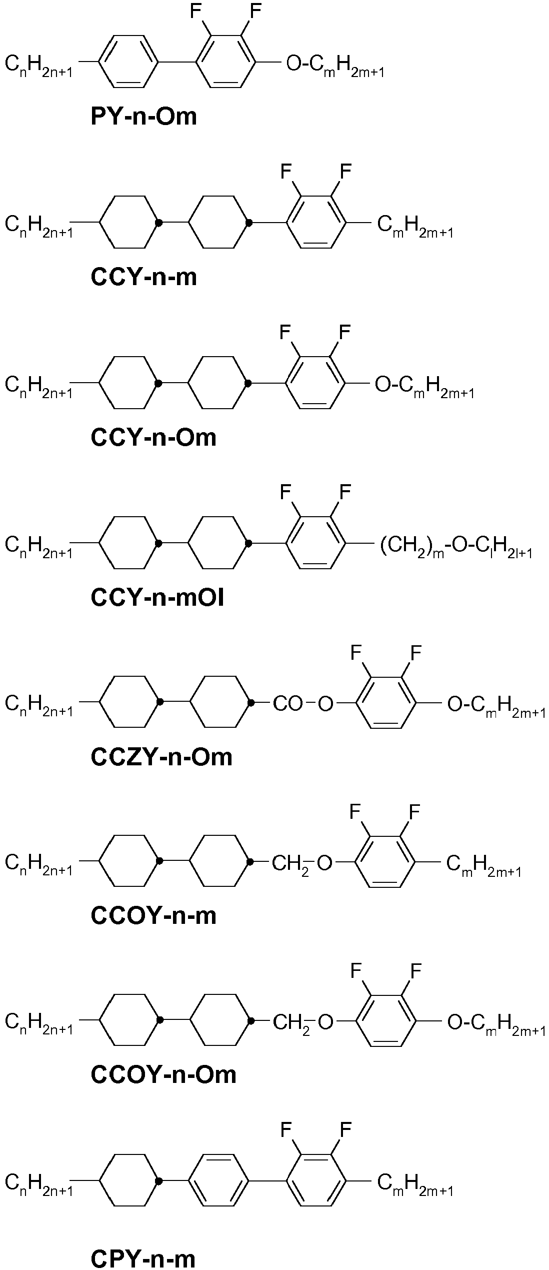

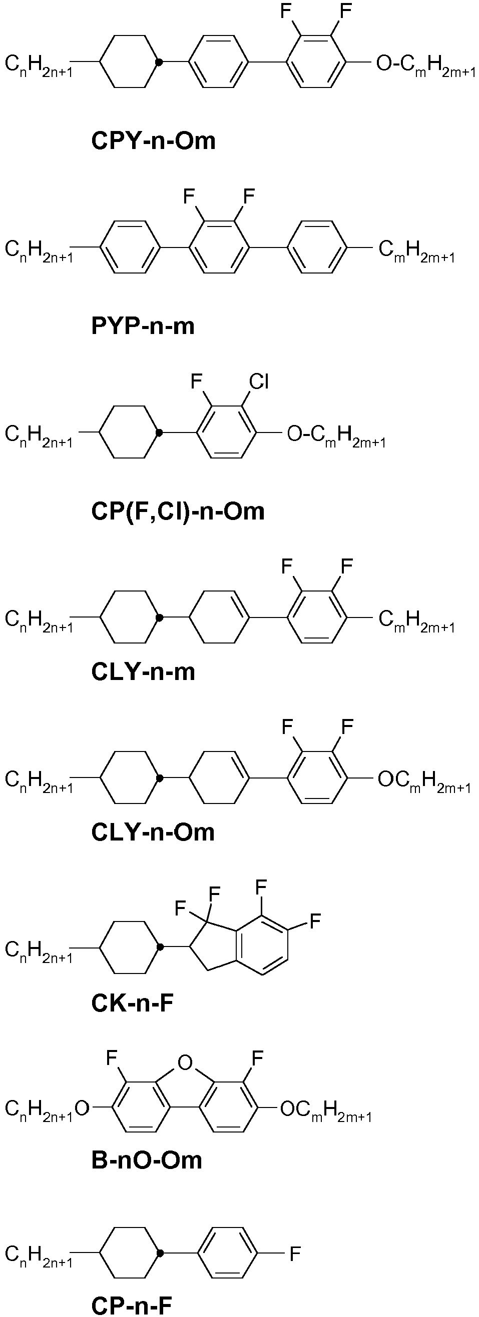

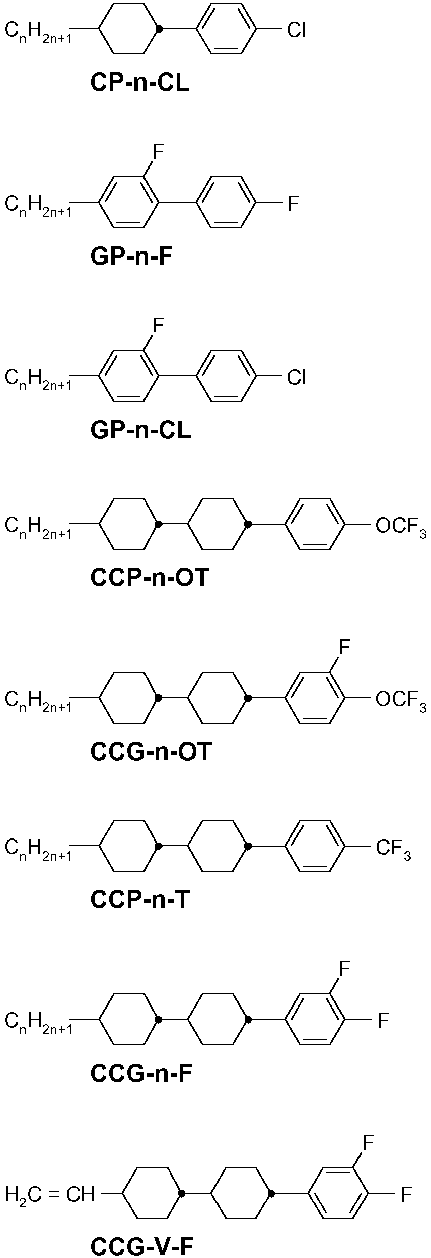

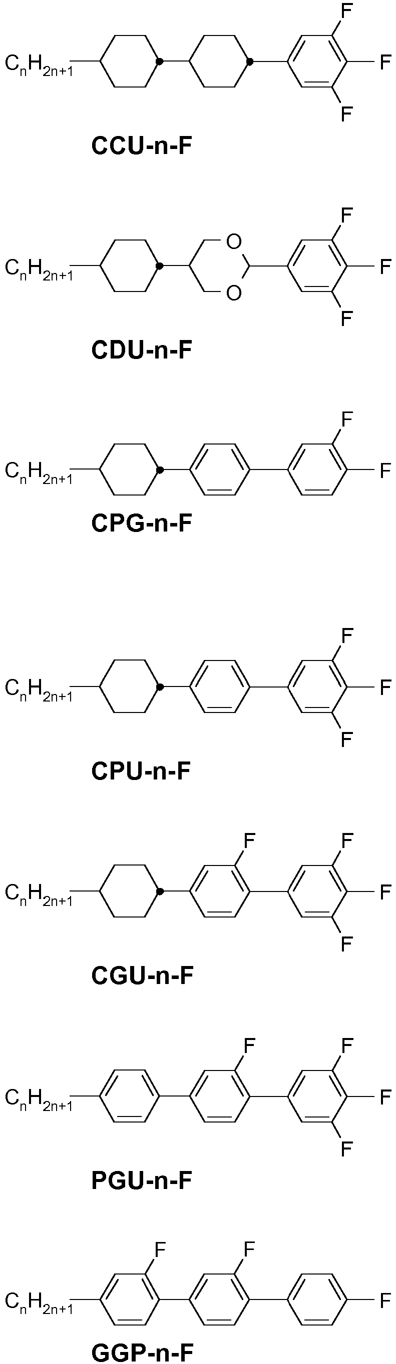

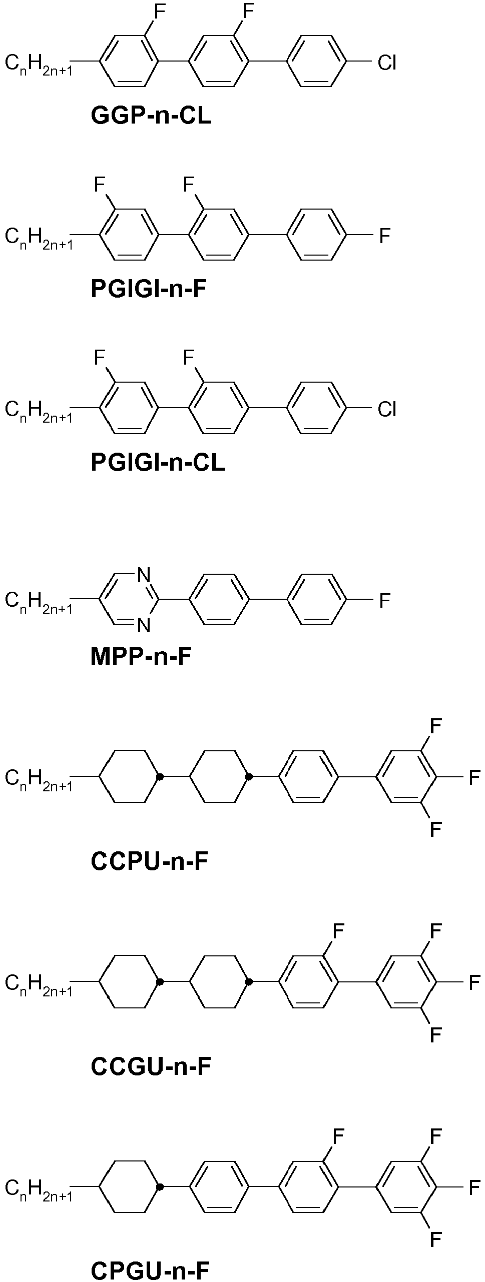

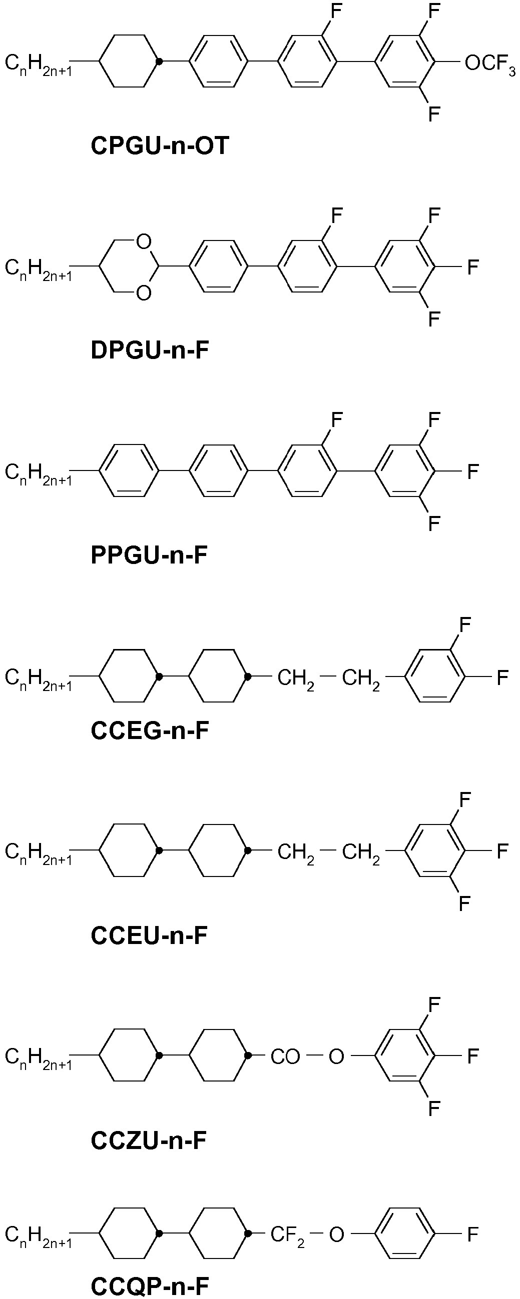

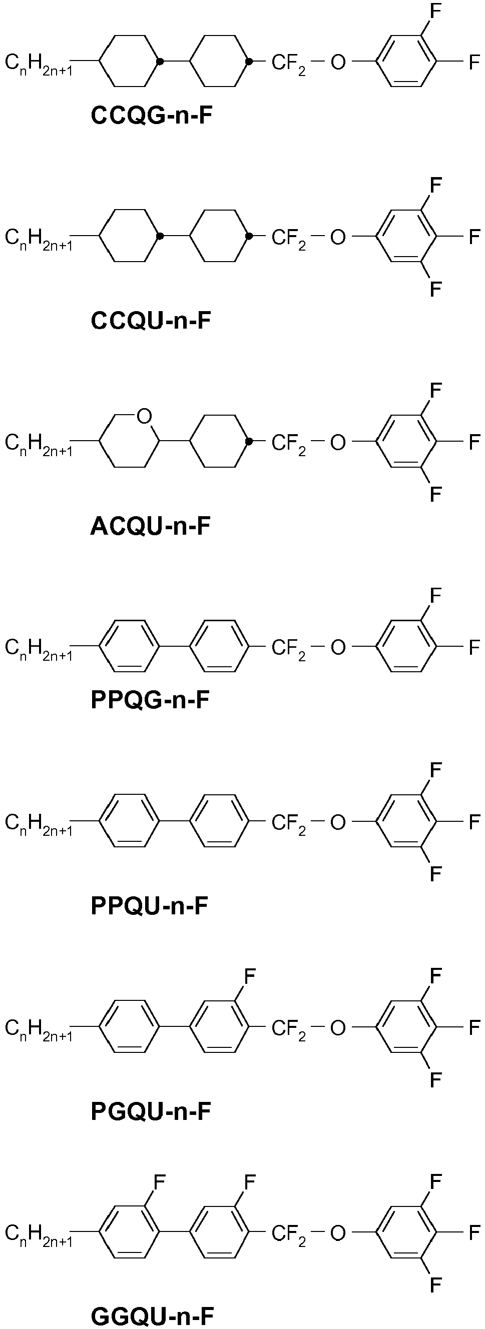

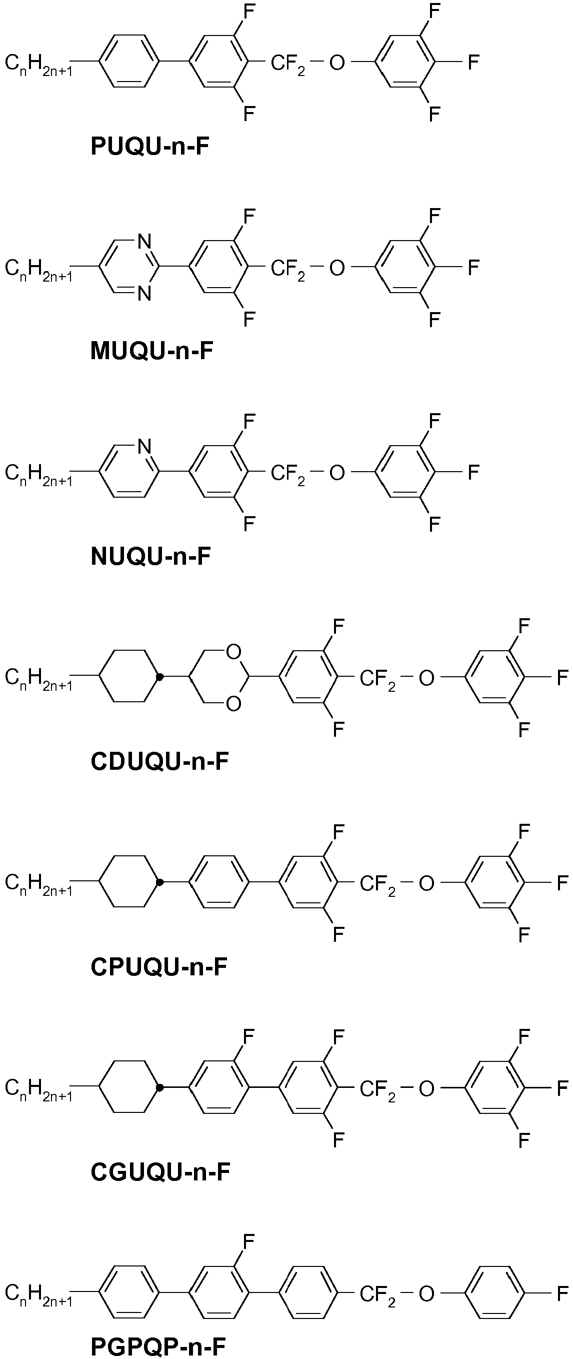

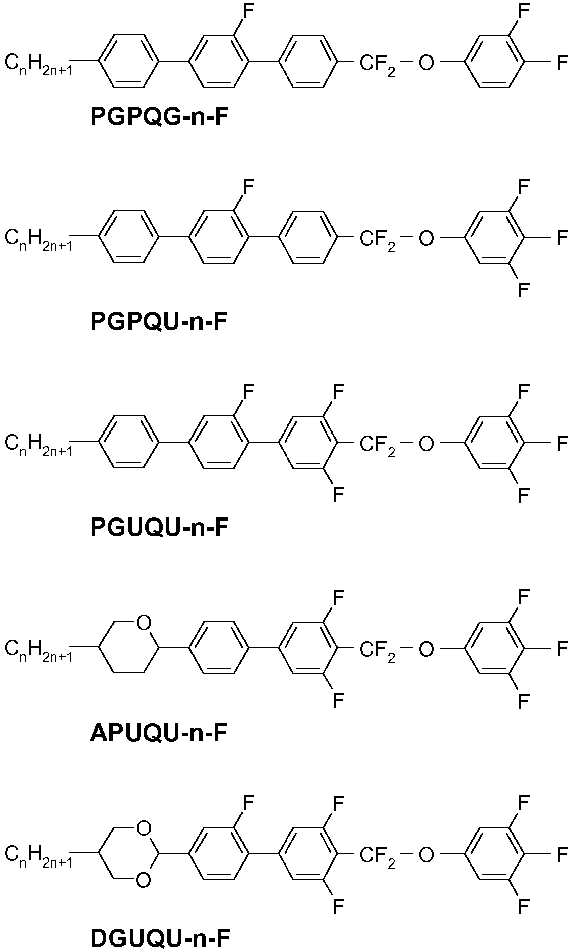

In der folgenden Tabelle E werden chirale Dotierstoffe genannt, die bevorzugt in den erfindungsgemäßen Mischungen eingesetzt werden können.

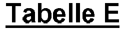

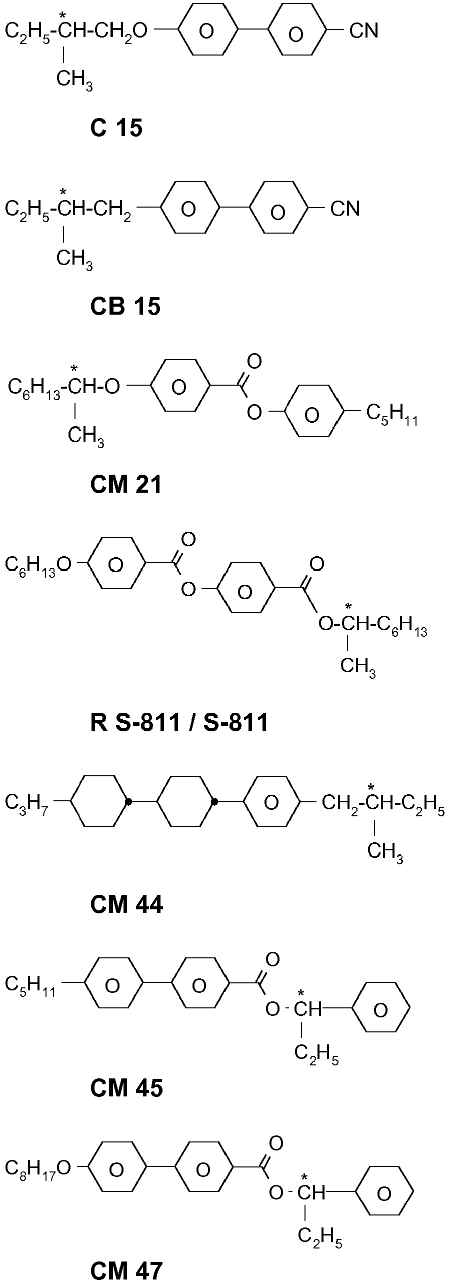

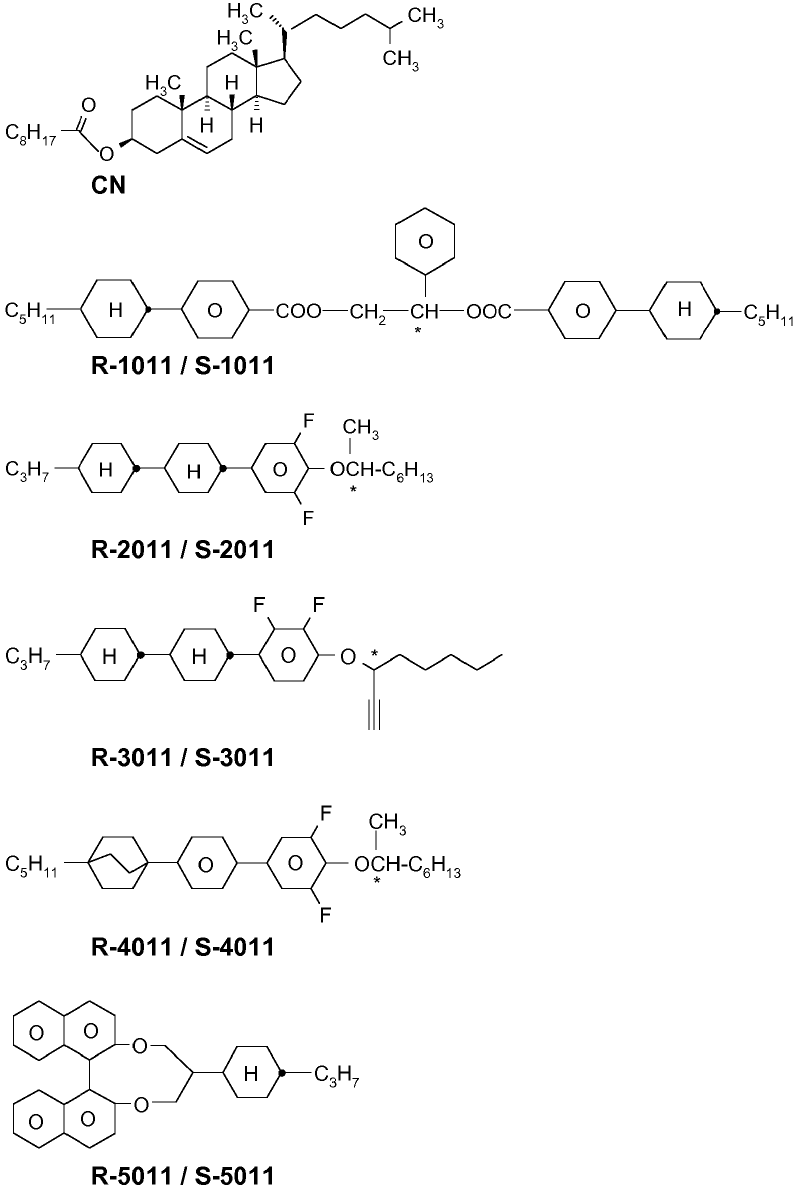

In einer bevorzugten Ausführungsform der vorliegenden Erfindung enthalten die erfindungsgemäßen Medien eine oder mehrere Verbindungen, ausgewählt aus der Gruppe der Verbindungen der Tabelle E.

In der Tabelle F werden Stabilisatoren genannt, die in den erfindungsgemäßen Mischungen eingesetzt werden können. Der Parameter n bedeutet hier eine ganze Zahl im Bereich von 1 bis 12.

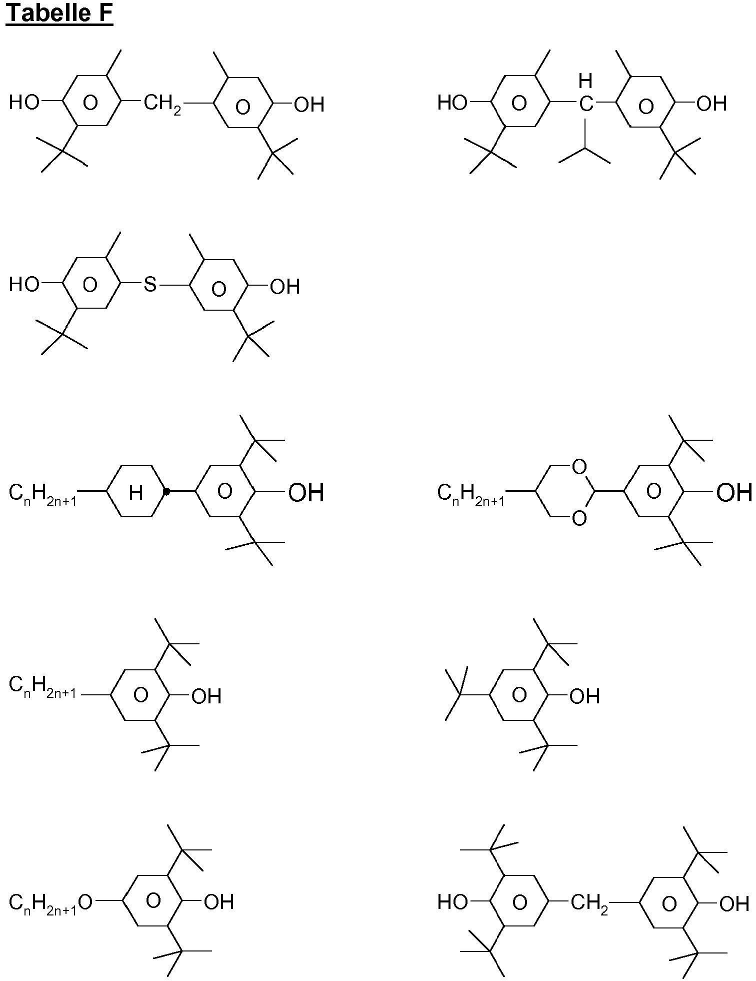

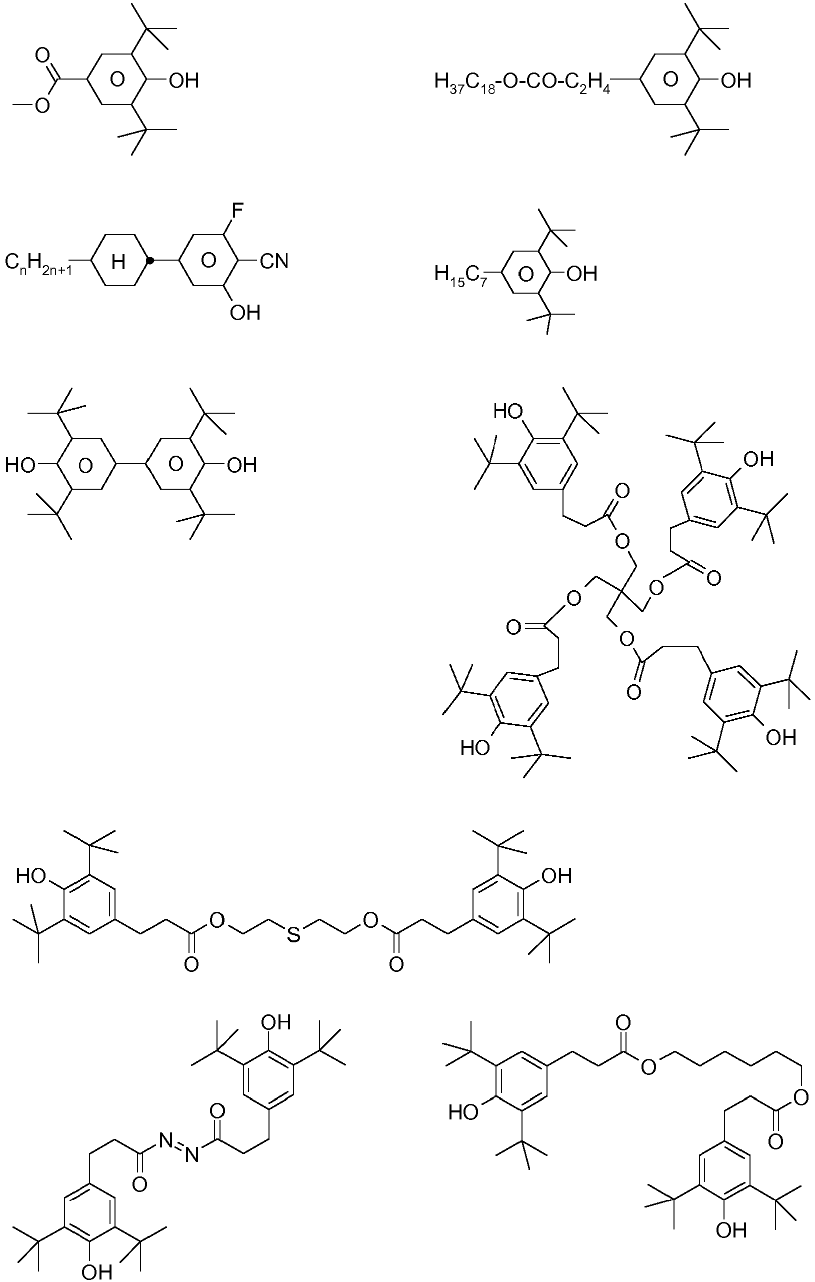

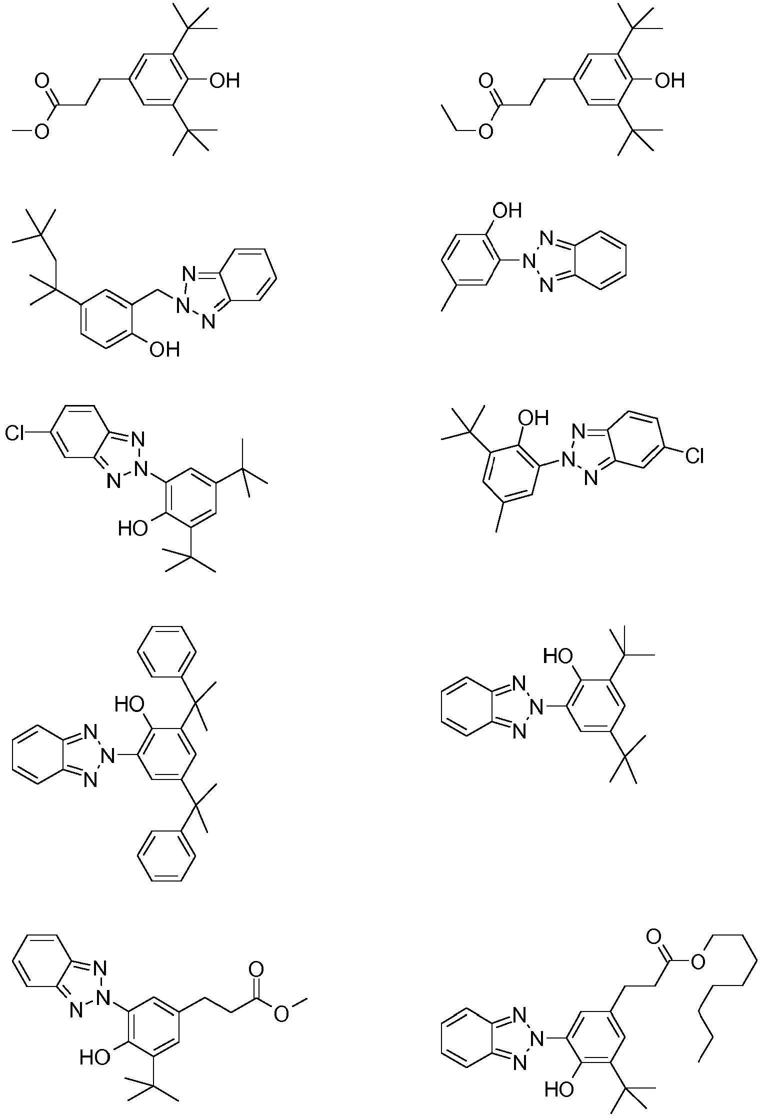

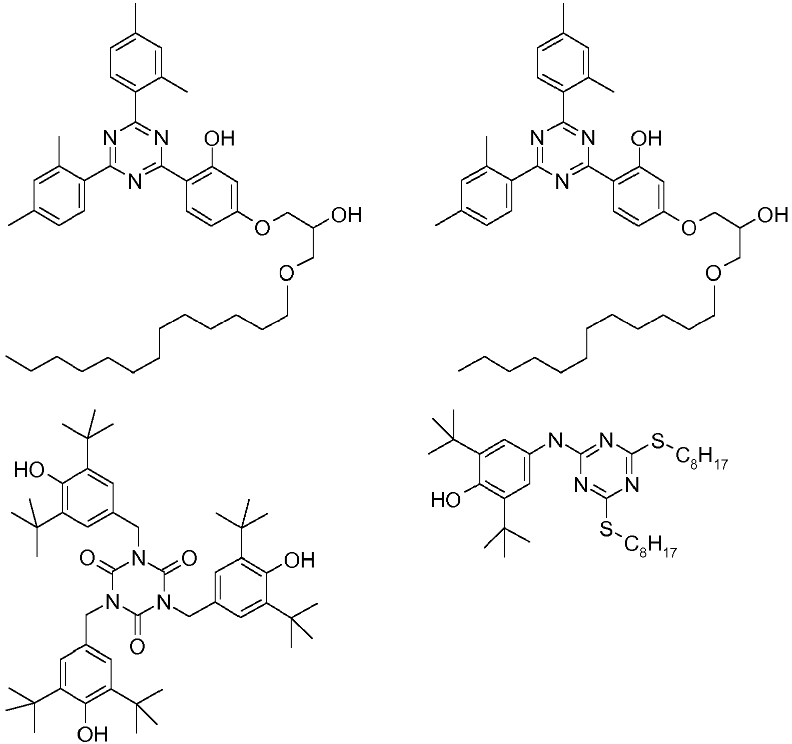

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F, insbesondere eine oder mehrere Verbindungen ausgewählt aus der Gruppe der Verbindungen der beiden Formeln

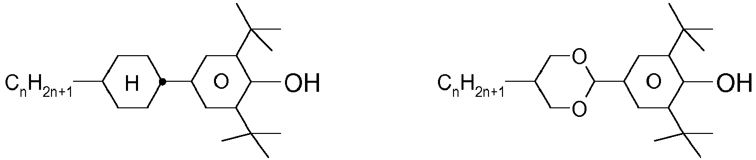

**Tabelle G**

| In der Tabelle G sind Beispielverbindungen zusammengestellt, die in den FK-Medien gemäß der vorliegenden Erfindung vorzugsweise als polymerisierbare Verbindungen verwendet werden können. |
|---|
| 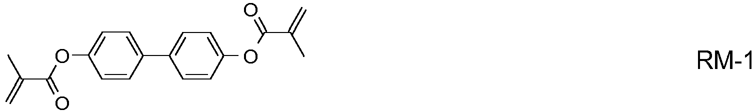 |
| 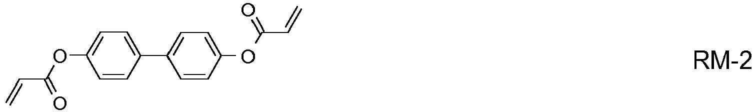 |
| 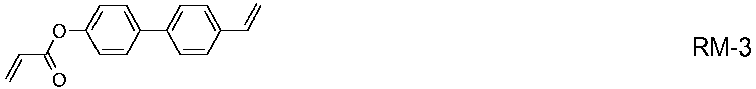 |
| 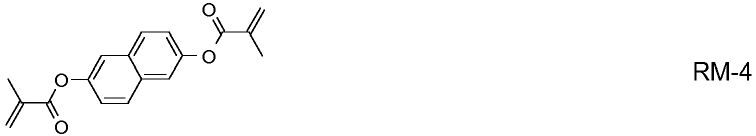 |
| 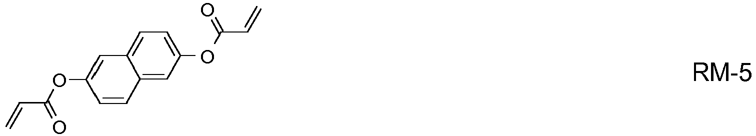 |
| 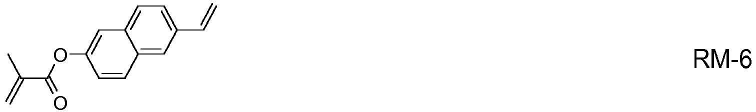 |
| 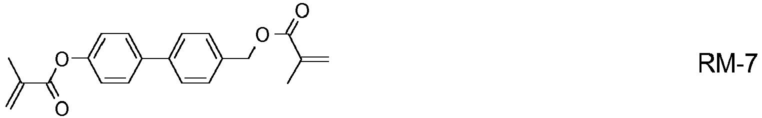 |
| 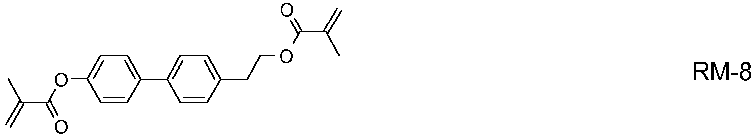 |
| 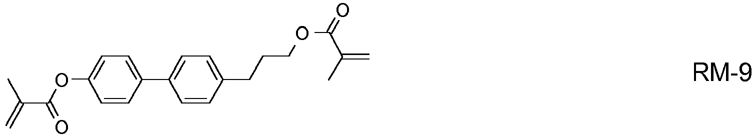 |
| 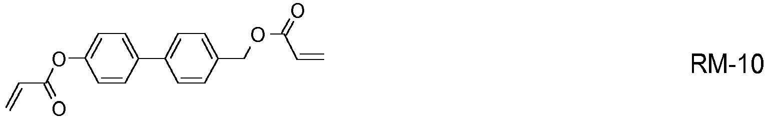 |
| 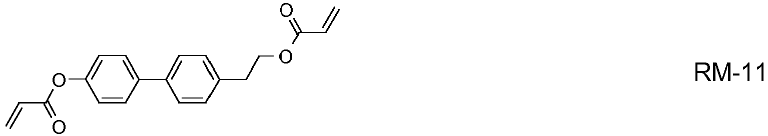 |
| 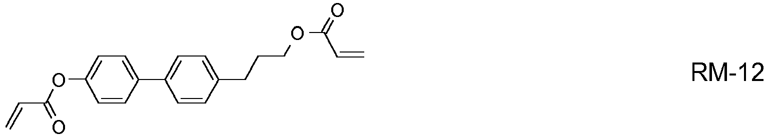 |
| 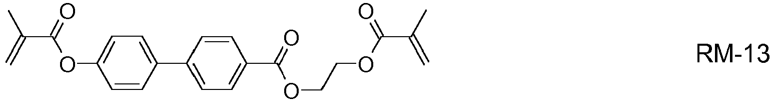 |
| 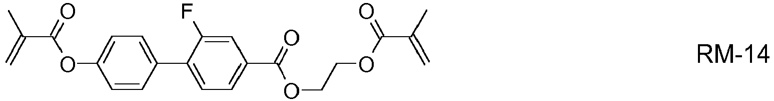 |
| 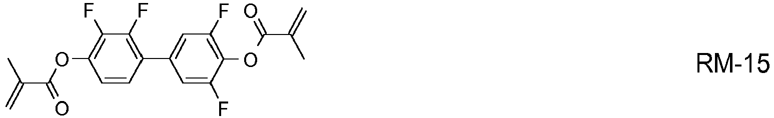 |
| 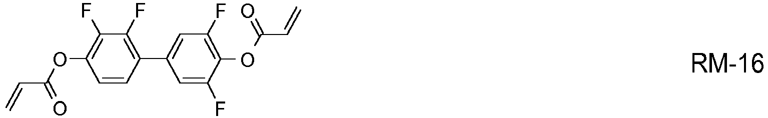 |
| 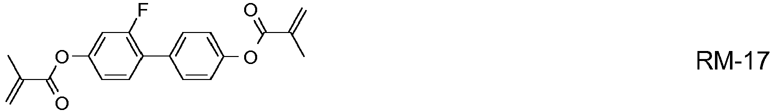 |
| 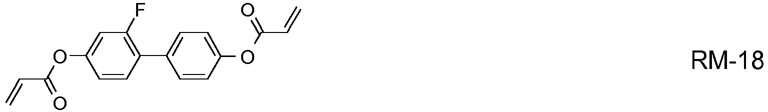 |
| 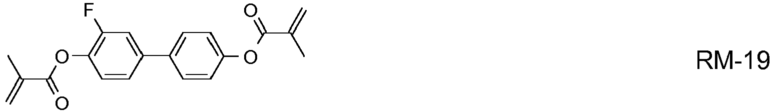 |
| 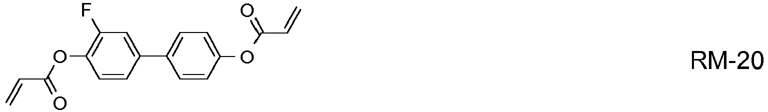 |
| 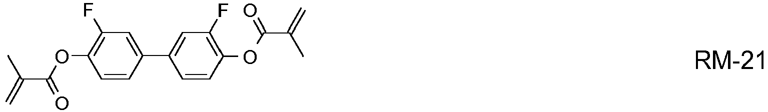 |
| 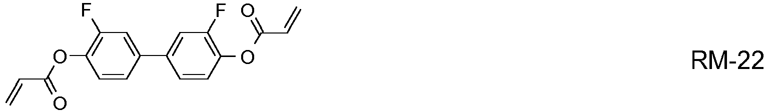 |
| 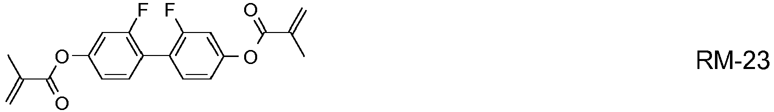 |
| 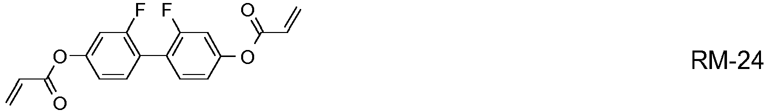 |
| 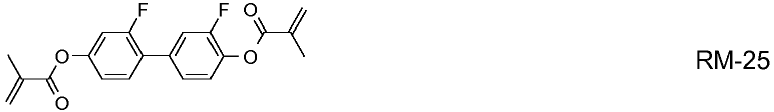 |
| 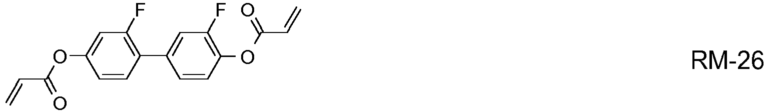 |
| 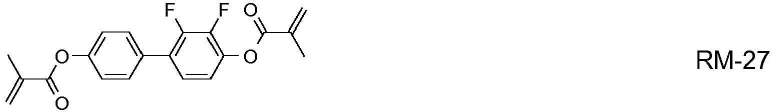 |
| 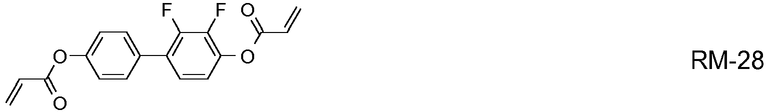 |
| 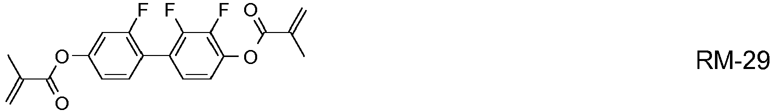 |
| 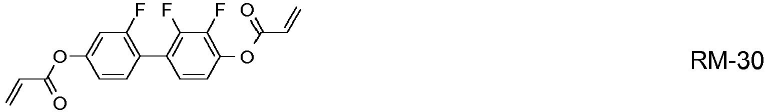 |
| 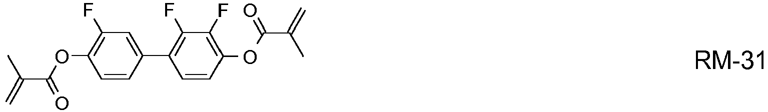 |
| 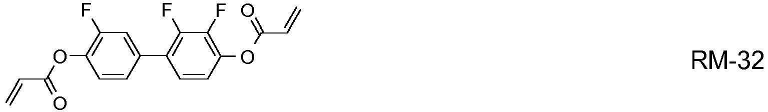 |
| 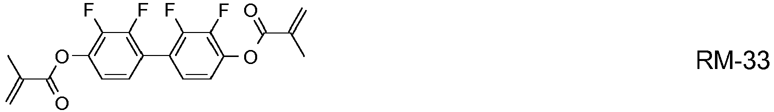 |
| 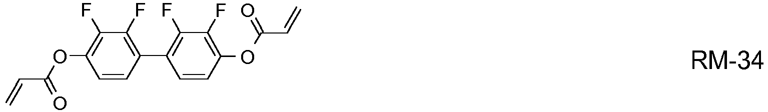 |
| 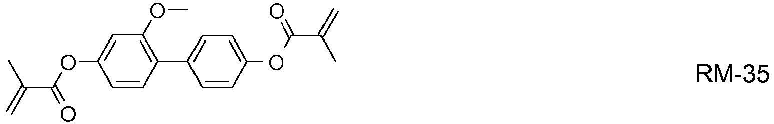 |
| 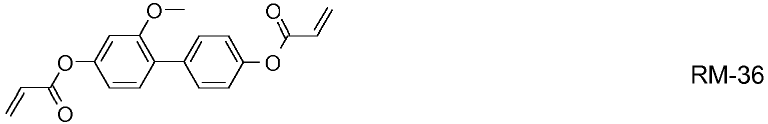 |
| 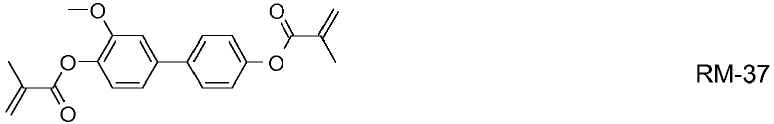 |
| 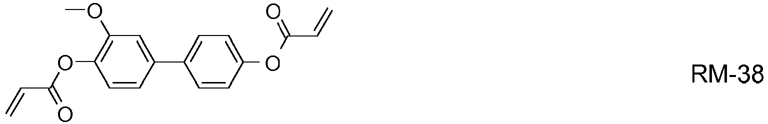 |
| 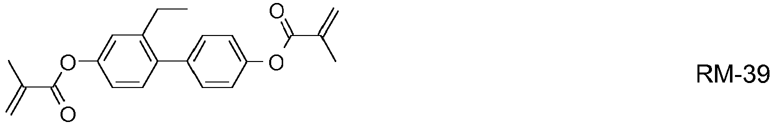 |
| 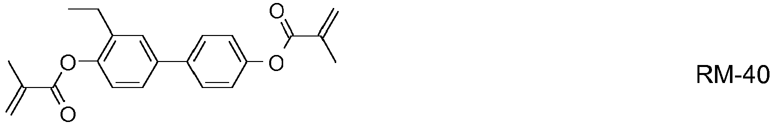 |
| 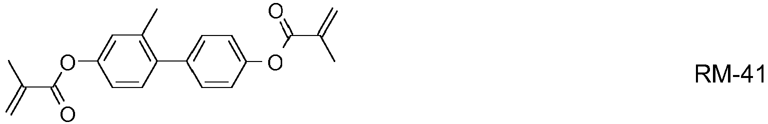 |
| 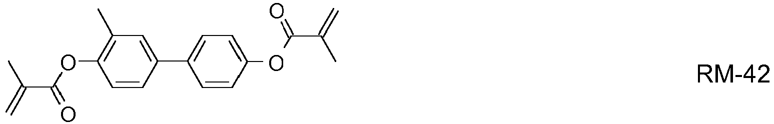 |
| 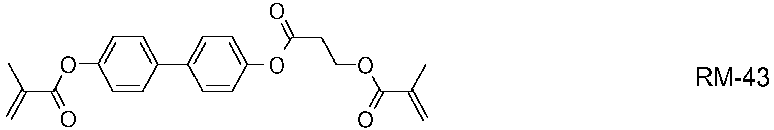 |
| 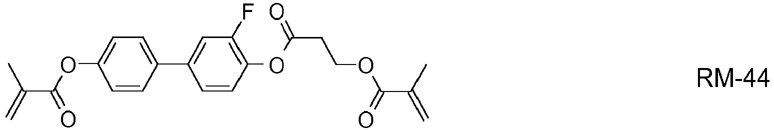 |
| 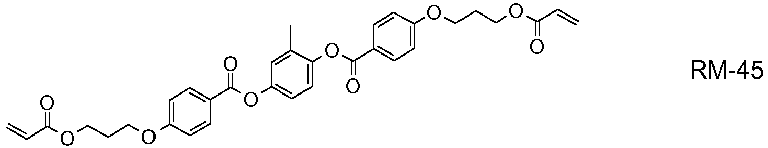 |
| 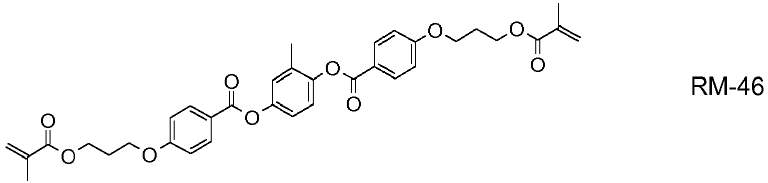 |
| 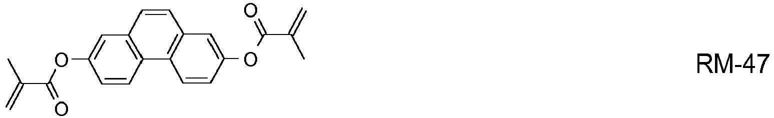 |
| 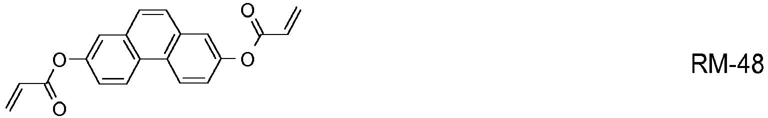 |
| 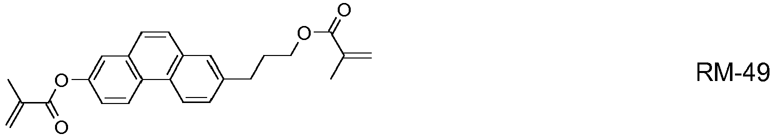 |
| 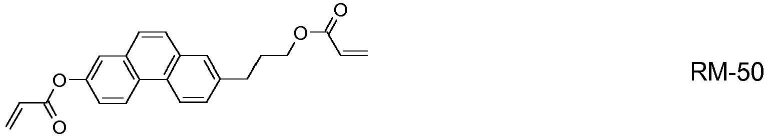 |
| 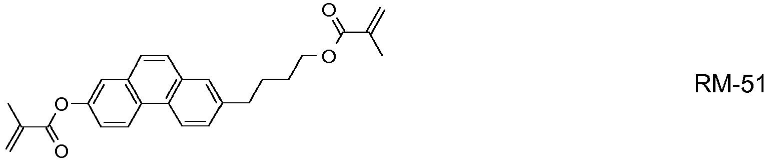 |
| 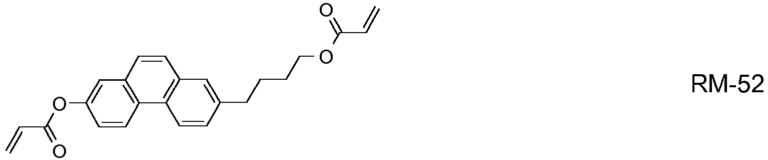 |
| 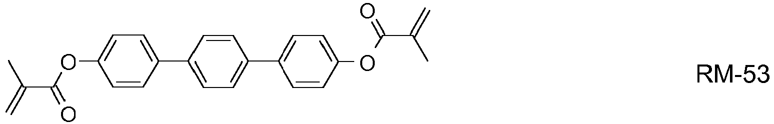 |
| 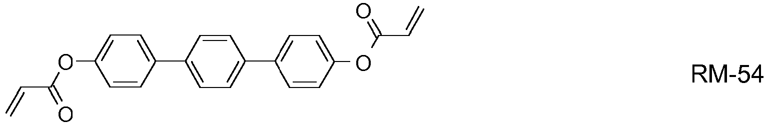 |
| 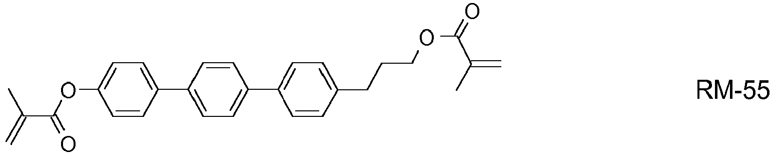 |
| 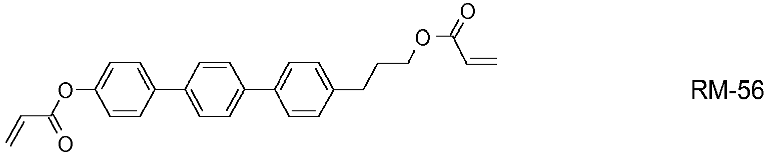 |
| 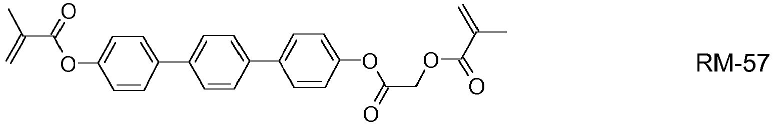 |
| 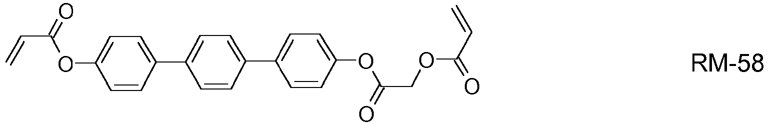 |
| 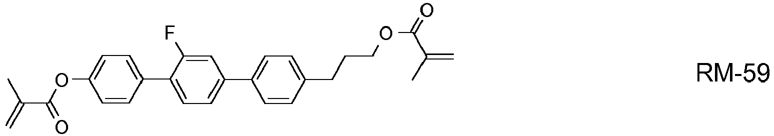 |
| 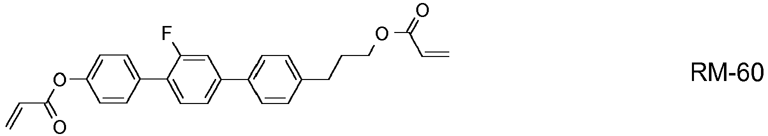 |
| 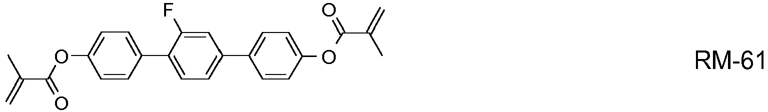 |
| 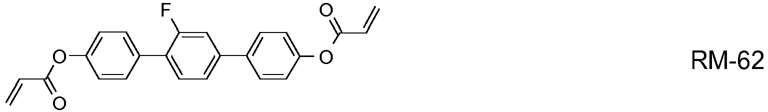 |
| 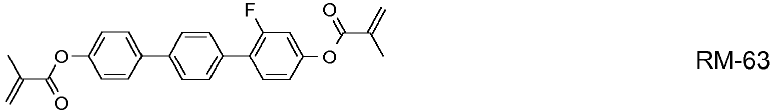 |
| 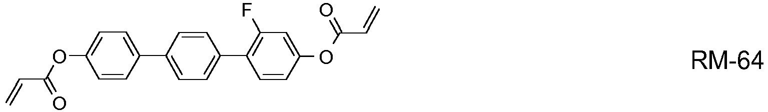 |
| 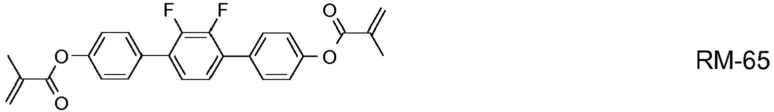 |
| 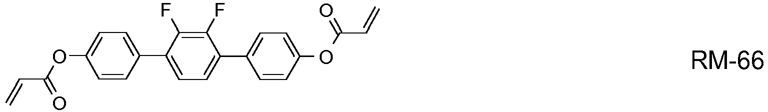 |
| 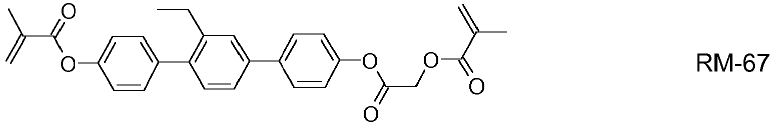 |
| 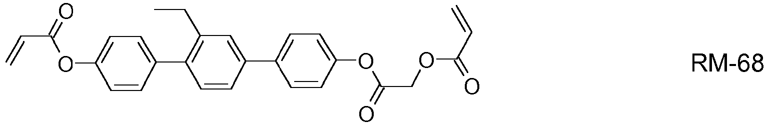 |
| 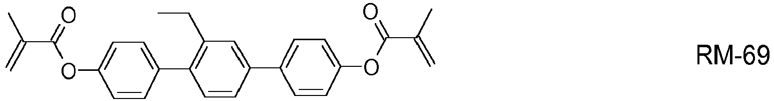 |
| 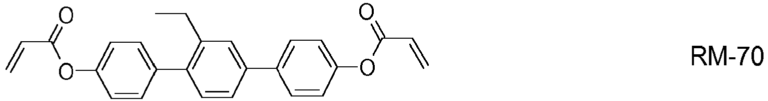 |
| 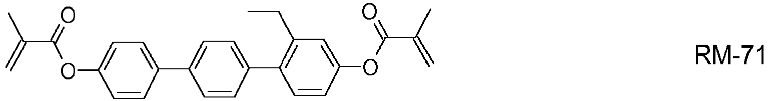 |
| 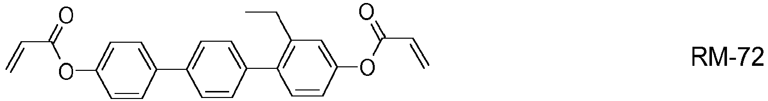 |
| 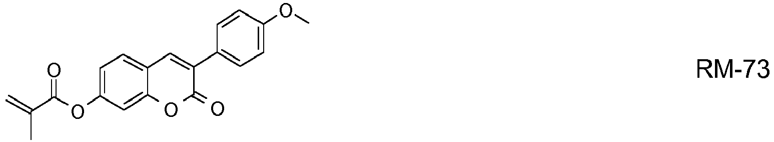 |
| 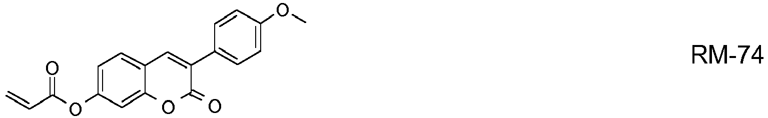 |
| 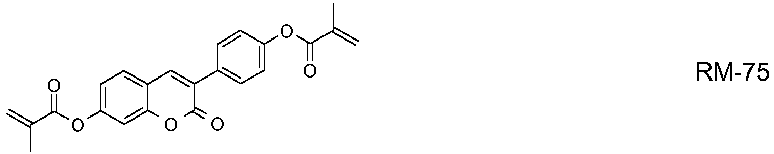 |
| 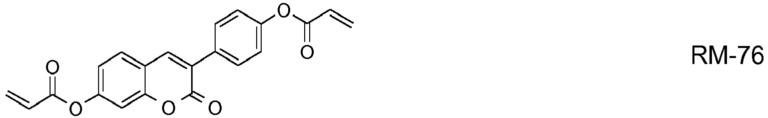 |
| 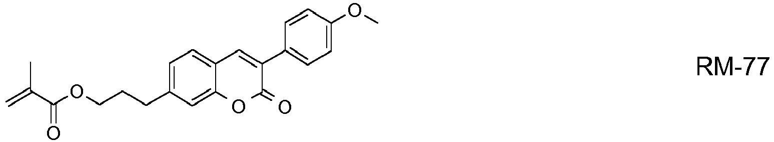 |
| 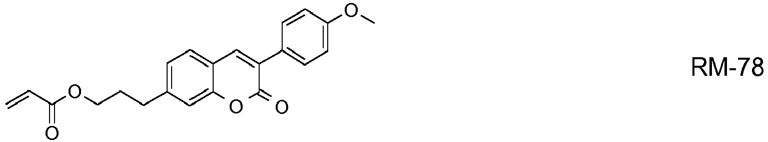 |
| 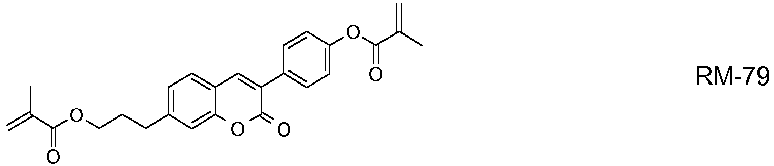 |
| 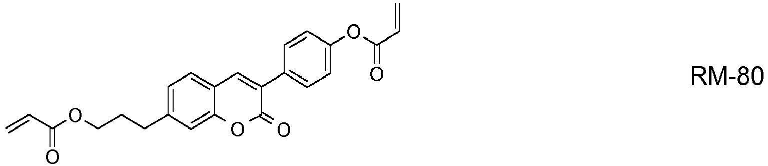 |
| 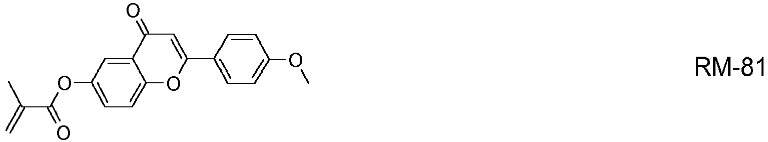 |
| 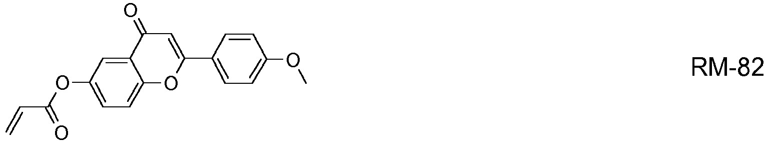 |
| 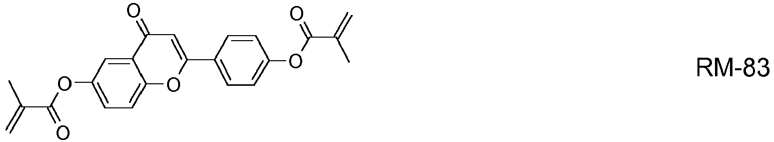 |
| 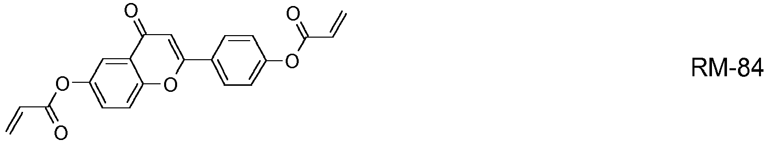 |
| 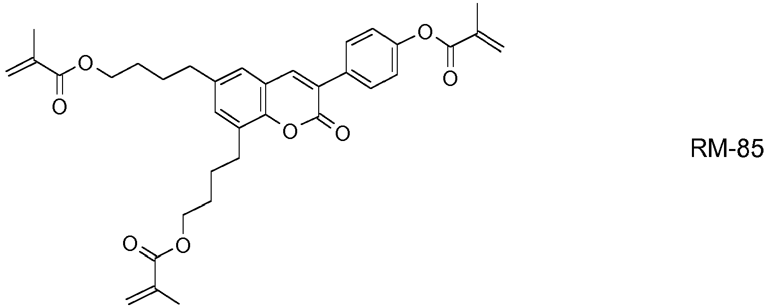 |
| 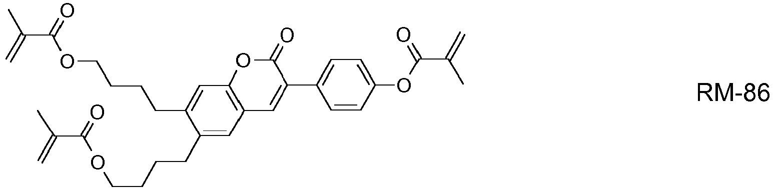 |
| 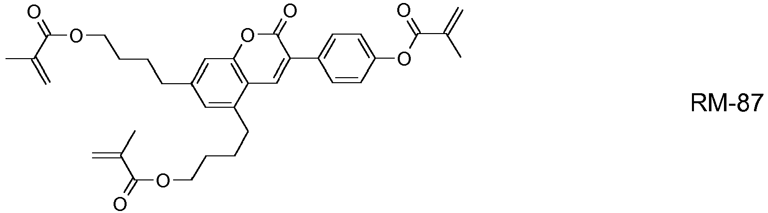 |
| 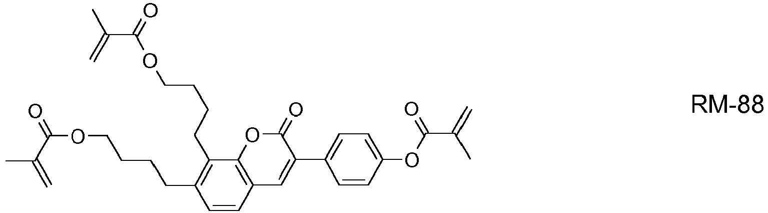 |
| 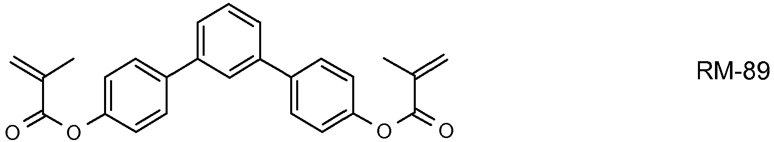 |
| 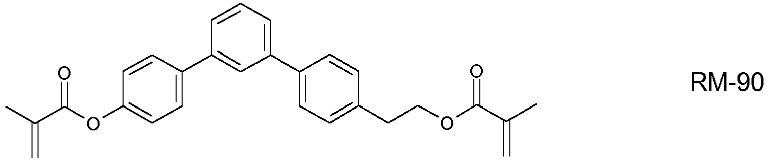 |
| 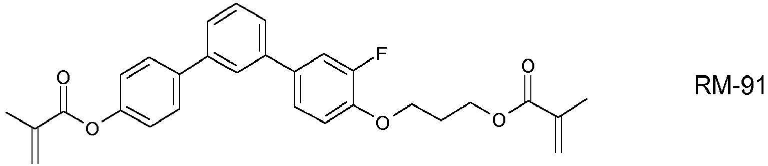 |
| 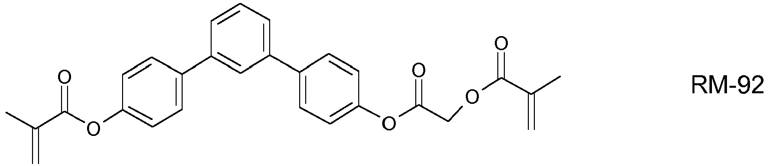 |
| 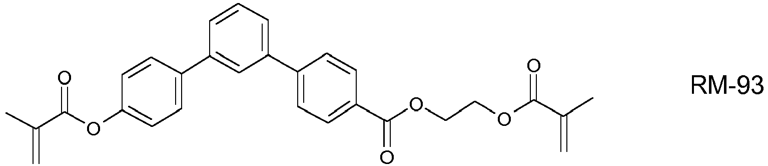 |
| 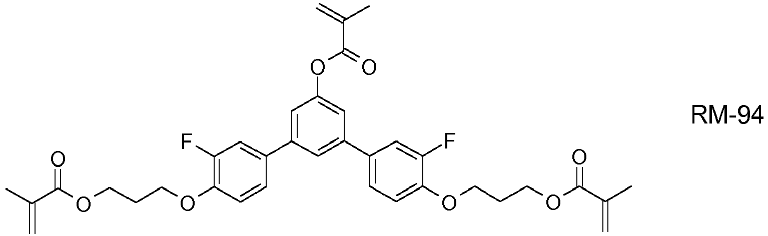 |
| 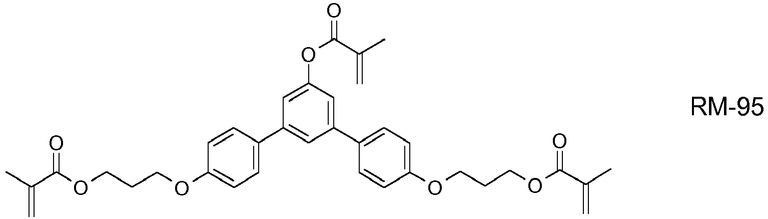 |
| 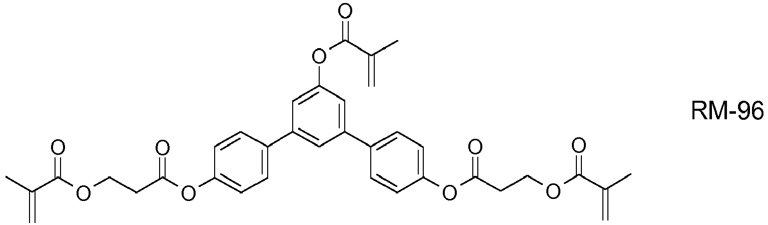 |
| 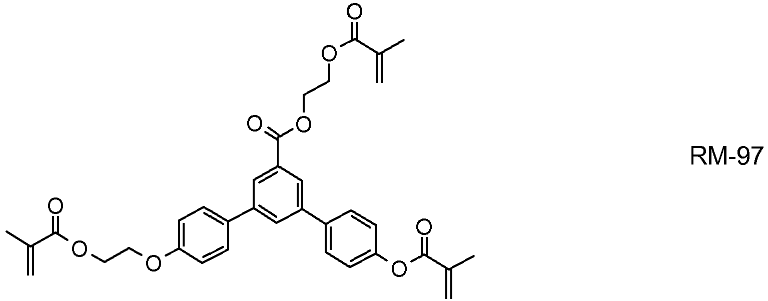 |
| 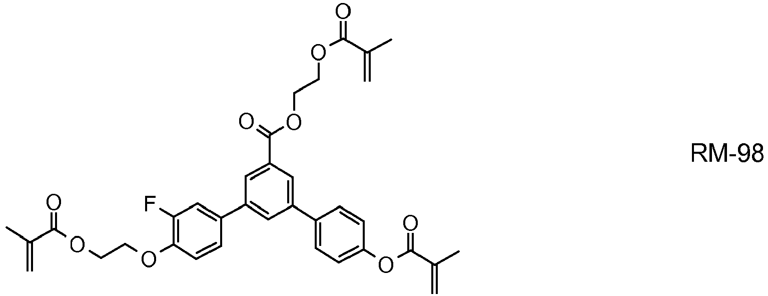 |
| 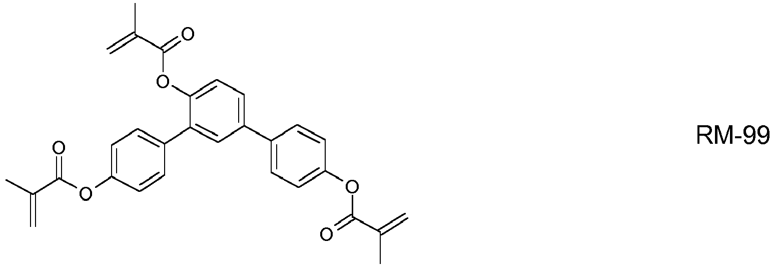 |
| 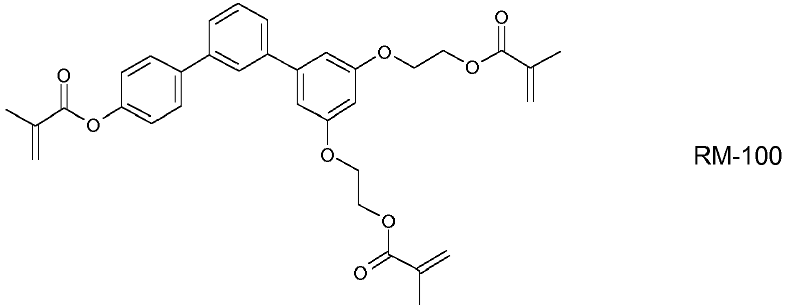 |
| 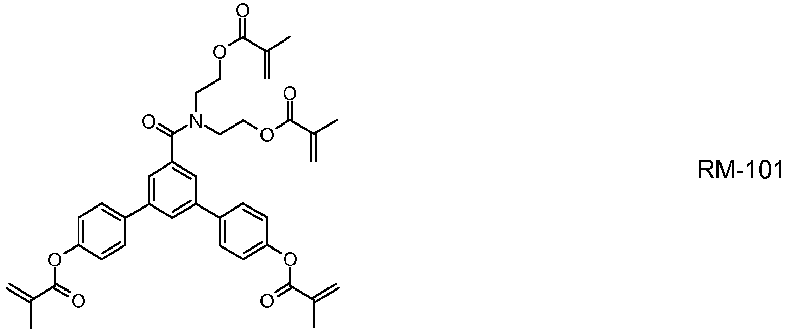 |
| 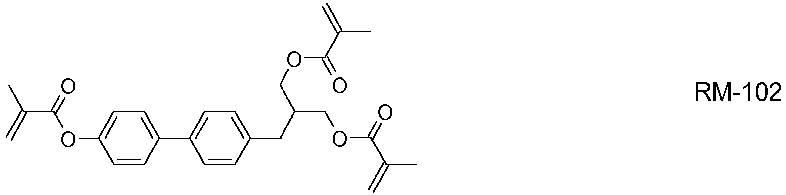 |
| 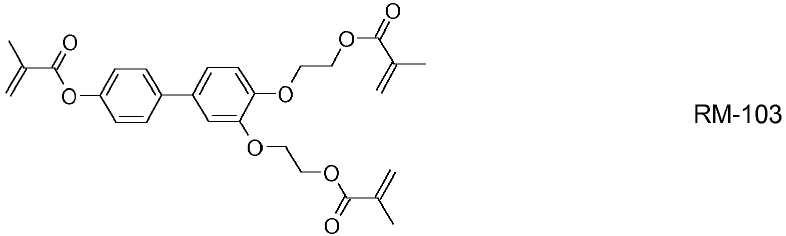 |
| 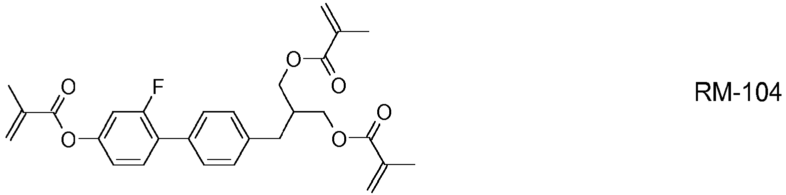 |
| 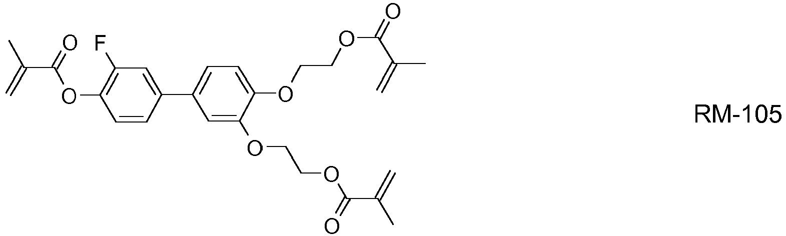 |
| 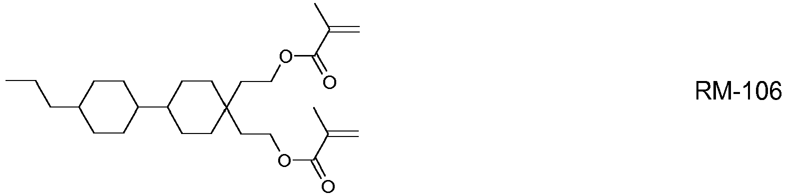 |
| 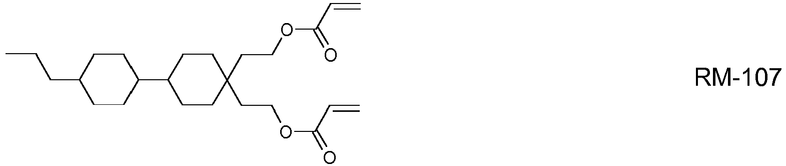 |
| 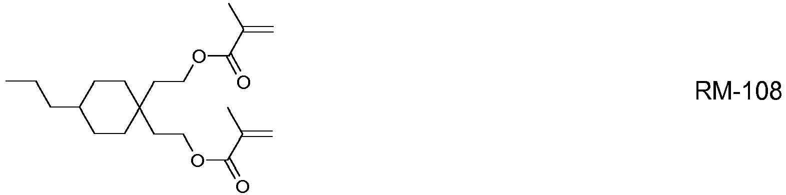 |
| 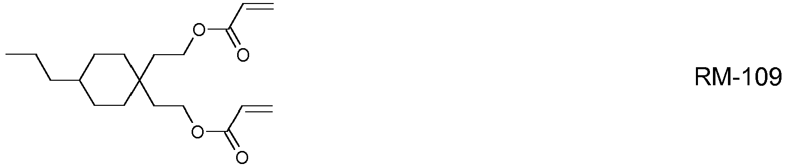 |
| 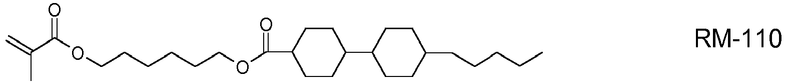 |
| 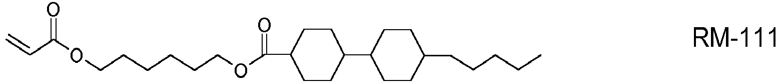 |
| 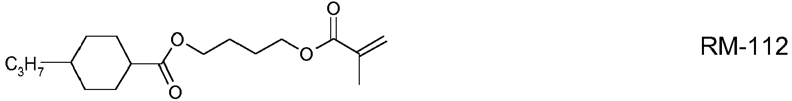 |
| 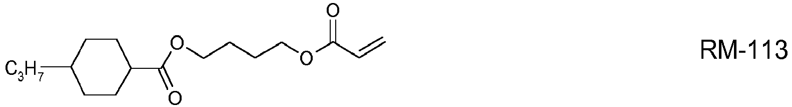 |
| 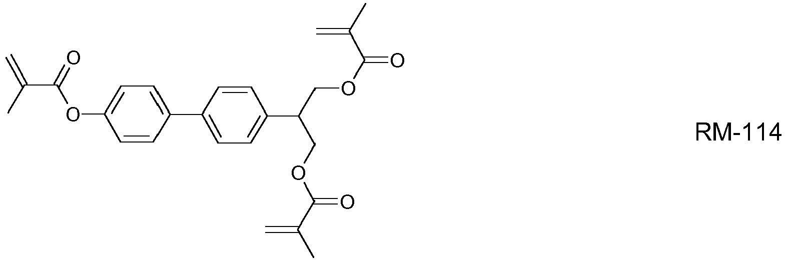 |
| 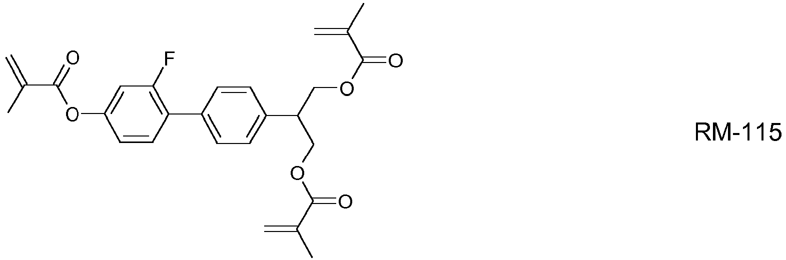 |
| 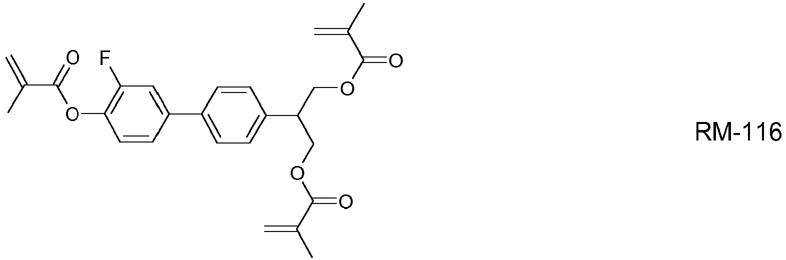 |
| 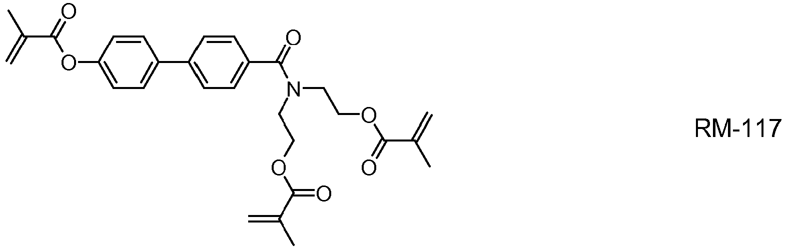 |
| 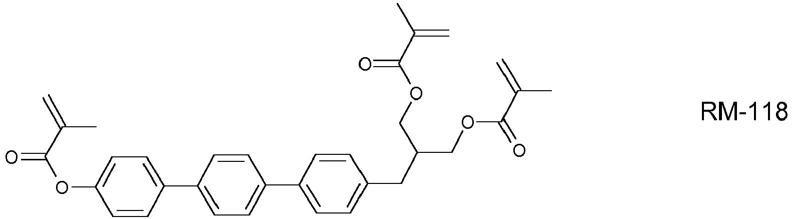 |
| 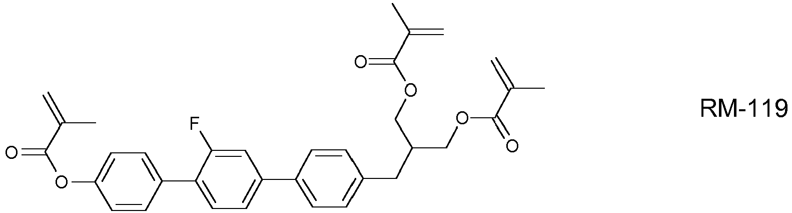 |
| 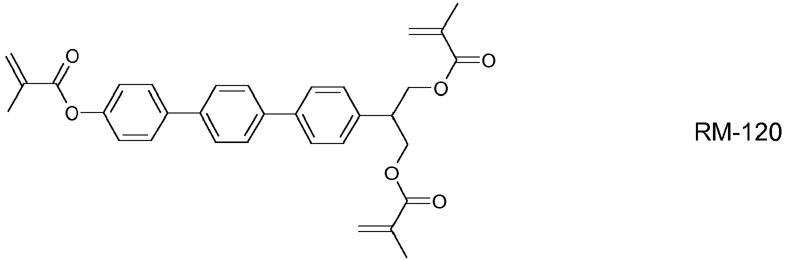 |
| 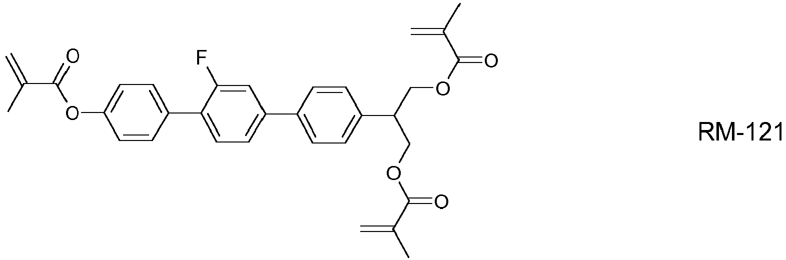 |
| 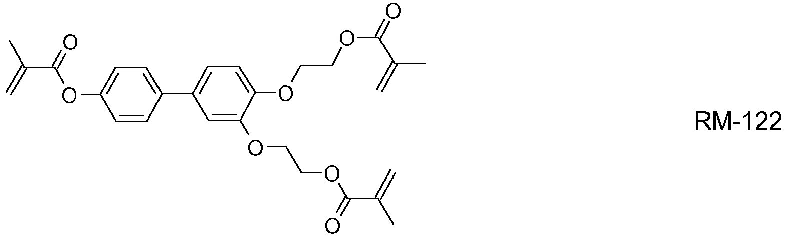 |
| 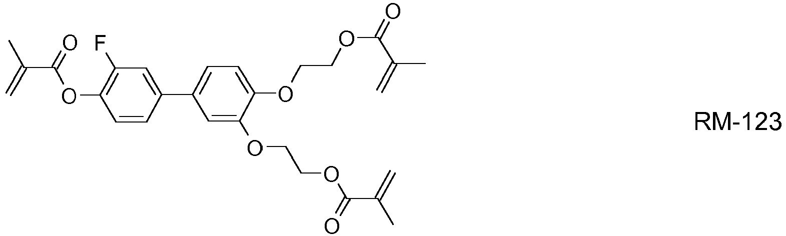 |
| 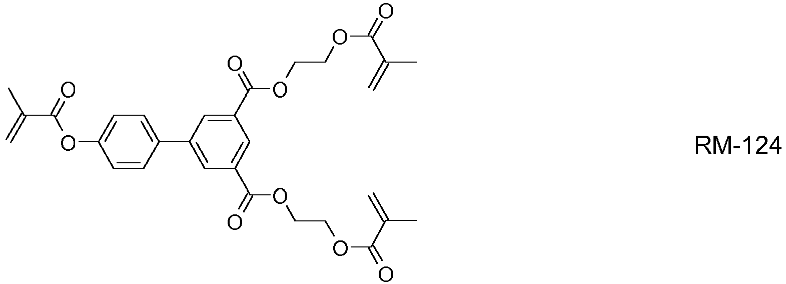 |
| 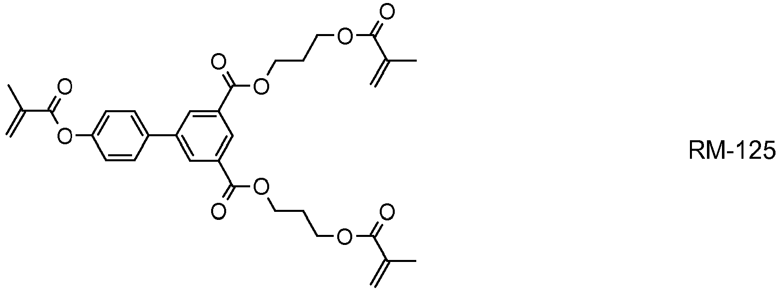 |
| 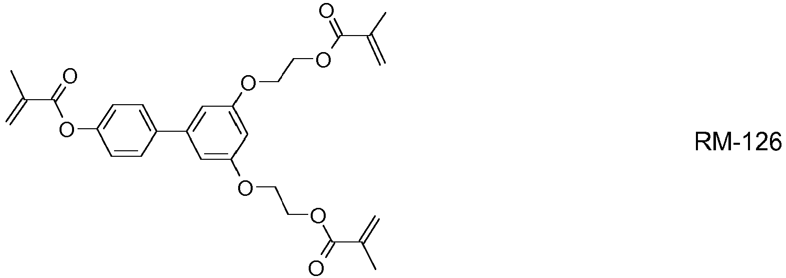 |
| 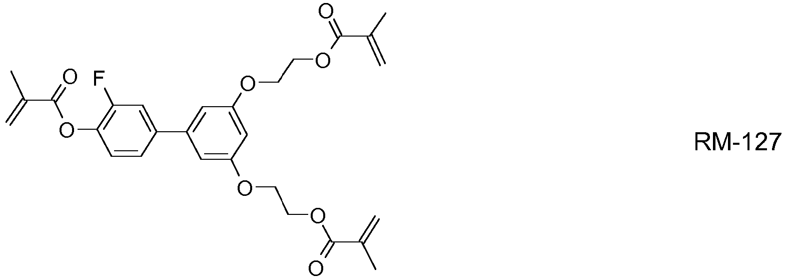 |
| 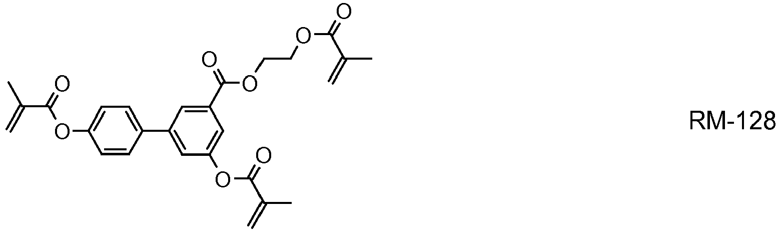 |
| 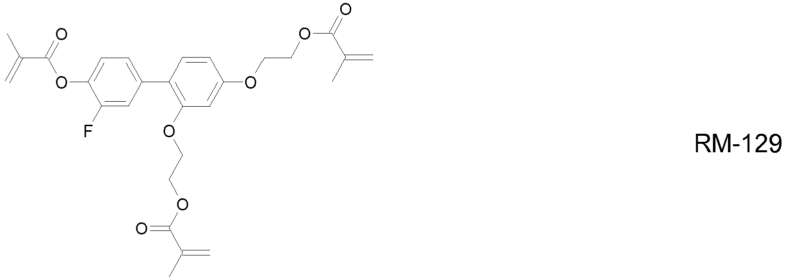 |
| 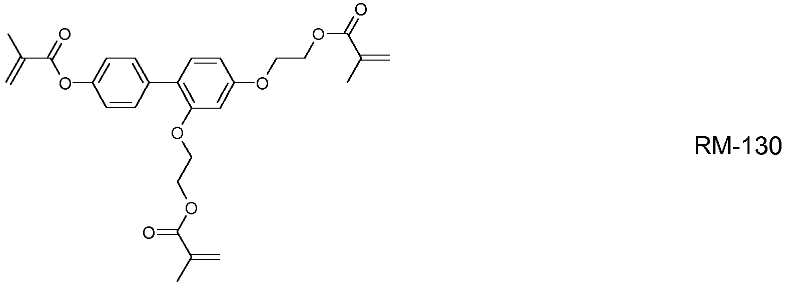 |
| 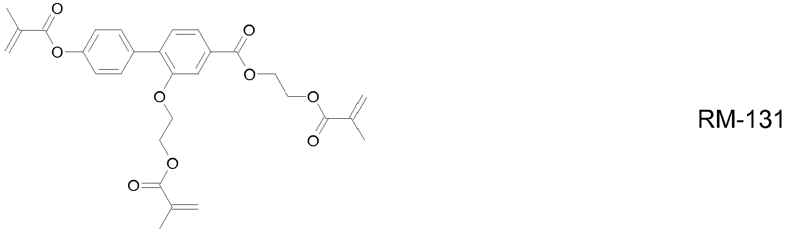 |
| 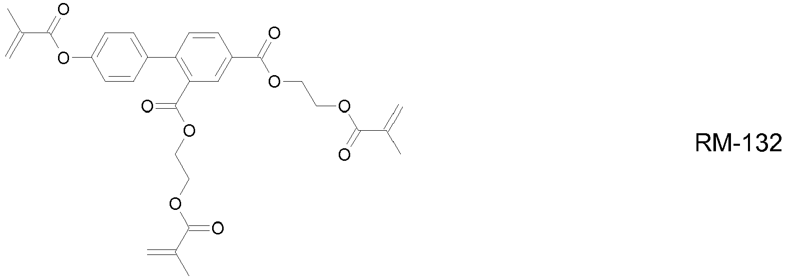 |
| 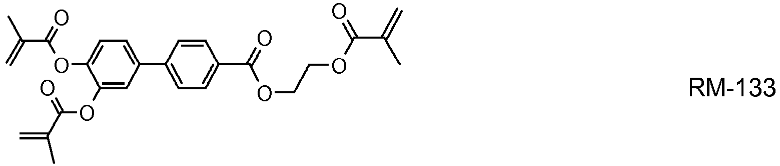 |
| 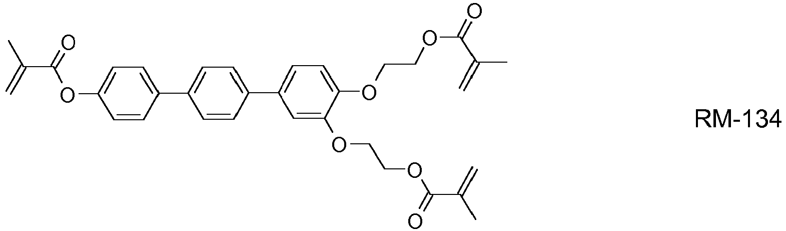 |
| 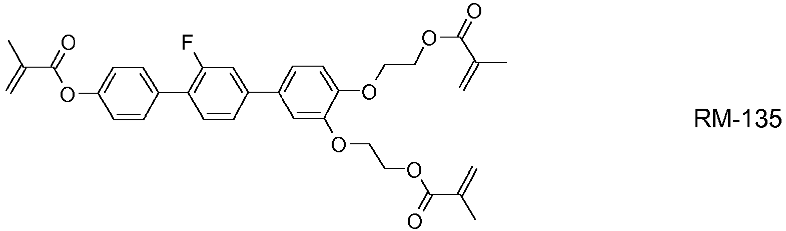 |
| 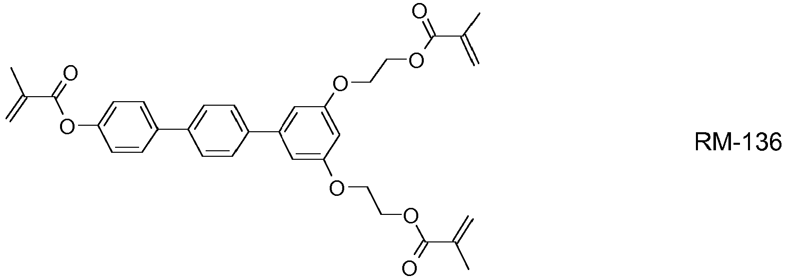 |
| 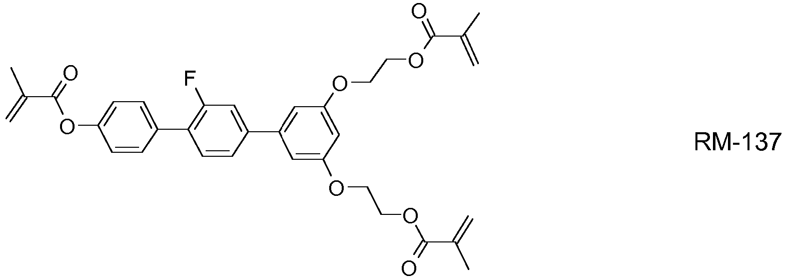 |
| 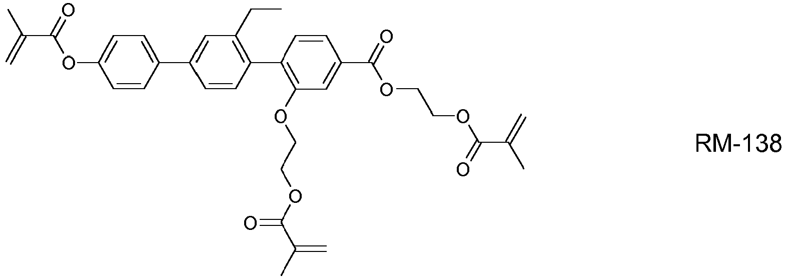 |

In einer bevorzugten Ausführungsform der vorliegenden Erfindung enthalten die mesogenen Medien eine oder mehrere Verbindungen ausgewählt aus der Gruppe der Verbindungen der Tabelle G.

### Beispiele

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Ferner bedeuten K = kristalliner Zustand, N = nematische Phase, Sm = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1 kHz, 20 °C) und γ₁ die Rotationsviskosität (in der Einheit mPa·s).

Die Bestimmung physikalischer, physikochemischer beziehungsweise elektrooptischer Parameter erfolgt nach allgemein bekannten Verfahren, wie sie unter anderem beschrieben sind in der Broschüre "Merck Liquid Crystals - Licristal® - Physical Properties of Liquid Crystals - Description of the Measurements Methods", 1998, Merck KGaA, Darmstadt. Vor- und nachstehend bedeutet Δn die optische Anisotropie (589 nm, 20 °C) und Δε die dielektrische Anisotropie (1 kHz, 20 °C). Die dielektrische Anisotropie Δε wird bei 20°C und 1 kHz bestimmt. Die optische Anisotropie Δn wird bei 20°C und einer Wellenlänge von 589,3 nm bestimmt.

Die Δε- und Δn-Werte, der sowie die Rotationsviskosität (γ₁) der erfindungsgemäßen Verbindungen werden durch lineare Extrapolation aus flüssigkristallinen Mischungen erhalten, die zu 5 bis 10 % aus der jeweiligen erfindungsgemäßen Verbindung und zu 90-95 % aus der kommerziell erhältlichen Flüssigkristallmischung ZLI-4792 (für Δε >1, Δn, γ₁) bzw. ZLI-2857 (für Δε <1) bestehen (Mischungen Fa. Merck KGaA, Darmstadt).

### Synthesebeispiele:

### Synthesebeispiel 1

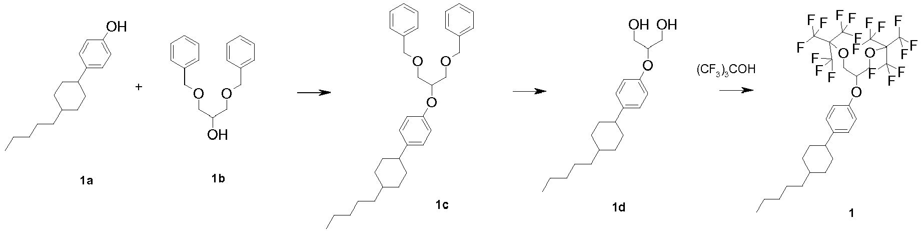

1c: Zu einer Lösung von 1a (5,00 g, 20,3 mmol), 1b (5,53 g, 20,3 mmol) und Triphenylphosphin (6,04 g, 23,0 mmol) in 50 ml trockenem Tetrahydrofuran (THF)wird tropfenweise Diisopropylazodicarboxylat (4.70 ml, 23.9 mmol) gegeben, wobei die Reaktionstemperatur unter 30 °C gehalten wird. Die Reaktionsmischung wird über Nacht bei Raumtemperatur gerührt. Nachdem das Lösungsmittel abgetrennt worden ist wird der ölige Rückstand mittels Flash-Chromatographie auf Kieselgel mit Heptan/Essigester gereinigt. **1c** wird als farbloses Öl erhalten (5.8 g).

**1d:** Eine Lösung von **1c** (5.2 g, 10.4 mmol) in 50 ml THF wird mit Palladium (5%) auf Aktivkohle (2.5 g) versetzt und 19 h unter Wasserstoff hydriert. Der Katalysator wird abfiltriert. Nach dem Entfernen des Lösungsmittels wird der Rückstand mittels Flash-Chromatographie auf Kieselgel mit Dichlormethan/Methanol aufgereinigt. **1d** wird als weißer Feststoff erhalten (2.6 g).

**1:** Zu einer Lösung von **1d** (1.03 g, 3.2 mmol) und Triphenylphosphin (2.52 g, 9.6 mmol) in 25 ml trockenem THF wird tropfenweise Diisopropylazodicarboxylat (1.87 ml, 9.6 mmol) bei 0°C gegeben. Nach 30 min Rühren wird Perfluoro-*tert*-butanol (2.27 g, 9.6 mmol) zugegeben und über Nacht bei 45°C gerührt. Nachdem das Lösungsmittel abgetrennt worden ist wird der Rückstand mittels Flash-Chromatographie auf Kieselgel mit Heptan/Essigester gereinigt. **1** wird als weiße Kristalle erhalten (1.0 g, m.p. 41 °C).

### Synthesebeispiel 2

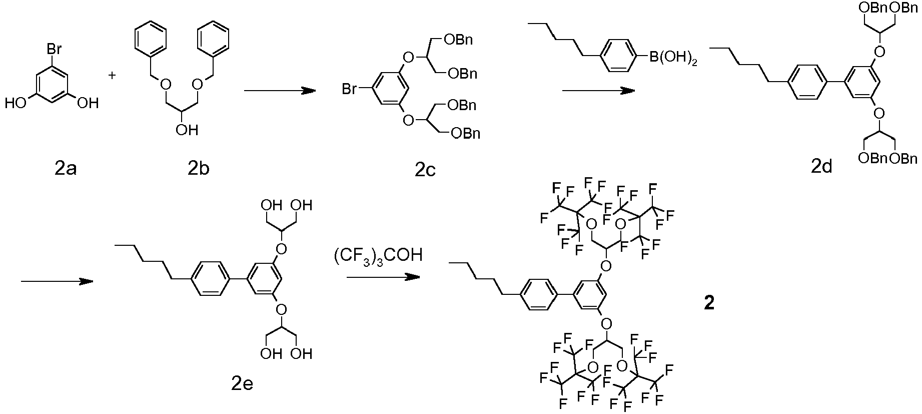

**2c:** Zu einer Lösung von **2a** (2,50 g, 13,5 mmol), **2b** (7,60 g, 27,0 mmol) und Triphenylphosphin (8,00 g, 30,0 mmol) in 60 ml THF wird tropfenweise Diisopropylazodicarboxylat (3,70 ml, 18,8 mmol) gegeben, wobei die Reaktionstemperatur unter 30 °C gehalten wird. Die Reaktionsmischung wird über Nacht bei Raumtemperatur gerührt. Nachdem das Lösungsmittel abgetrennt worden ist wird der ölige Rückstand mittels Flash-Chromatographie auf Kieselgel mit Heptan/Essigester gereinigt. **2d** wird als farbloses Öl erhalten (2,1 g).

**2d:** Zu einer Lösung von **2c** (2,00 g, 2,9 mmol) und 4-Pentylphenylboronsäure (0,60 g, 3,1 mmol) in 20 ml 1,4-Dioxan wird Natriumcarbonat (0,9 g, 8,5 mmol) und 4 ml destilliertes Wasser gegeben. Nach dem Entgasen mit Argon wird [1,1'-Bis(diphenylphosphin)ferrocen]-dichloropalladium(ll) (0,063 g, 0,09 mmol) zugegeben. Die Reaktionsmischung wird bis zum Rückfluss erhitzt und über Nacht gerührt. Nach üblicher Aufarbeitung werden die versammelten organischen Phasen über Natriumsulfat getrocknet. Nach dem Entfernen des Lösungsmittels wird der Rückstand mittels Flash-Chromatographie auf Kieselgel mit Heptan/Essigester gereinigt. Man erhält **2d** (2,0 g).

**2e:** Eine Lösung von **2d** (2,0 g, 2,6 mmol) in 20 ml THF wird mit Palladium (5%) auf Aktivkohle (0,5 g) versetzt und 16 h unter Wasserstoff hydriert. Der Katalysator wird abfiltriert. Nach dem Entfernen des Lösungsmittels wird der Rückstand mittels Flash-Chromatographie auf Kieselgel mit Dichlormethan/Methanol aufgereinigt. **2e** wird als farbloses Öl erhalten (1,0 g).

**2:** Zu einer Lösung von **2e** (1,0 g, 2,5 mmol) und Triphenylphosphin (2,72 ml, 12,4 mmol) in 50 ml trockenem THF wird Diisopropylazodicarboxylat (2,43 ml, 12,4 mmol) tropfenweise bei 0°C zugegeben. Nach 30 min Rühren wird Perfluoro-tert-butanol (3,5 g, 14,8 mmol) zugegeben und über Nacht bei 45°C gerührt. Nachdem das Lösungsmittel abgetrennt worden ist wird der Rückstand mittels Flash-Chromatographie auf Kieselgel mit Heptan/Essigester gereinigt. Nach dem Umkristallisieren des erhaltenen Rohproduktes aus Ethanol erhält man das Produkt **2** als weiße Kristalle (1,0 g, Schmelzpunkt 46°C).

### Analog zu Beispiel 1 oder 2 werden hergestellt:

### Synthesebeispiel 3

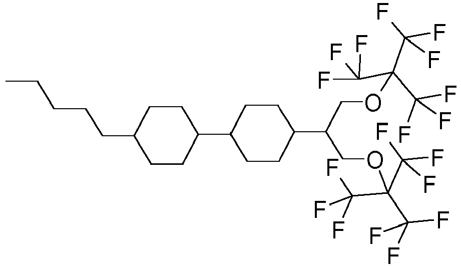

Schmelzpunkt 65 °C (K 65 I).

### Synthesebeispiel 4

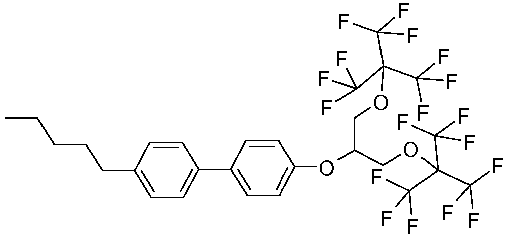

### Synthesebeispiel 5

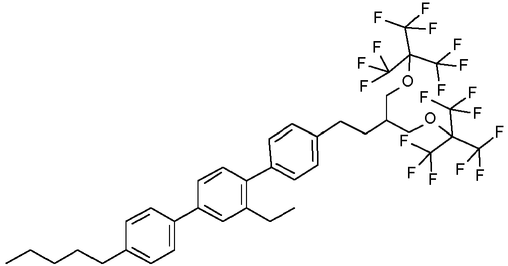

Schmelzpunkt 40°C (K 40 SmA (23) I)

### Synthesebeispiel 6

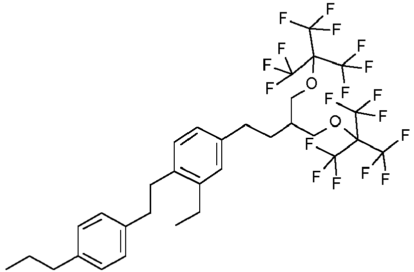

Schmelzpunkt 36°C (K 36 I)

### Synthesebeispiel 7

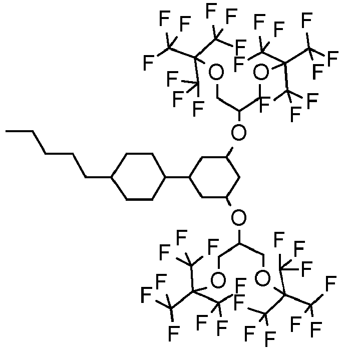

Mischung der Isomeren hergestellt durch katalytische Hydrierung des Produkts aus Synthesebeispiel 2. Öl (Hauptfraktion: Tg -38°C I)

### Synthesebeispiel 8

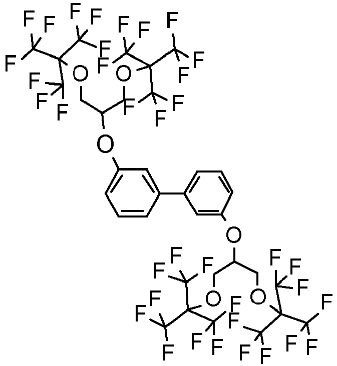

Öl (Tg -19°C I)

### Synthesebeispiel 9:

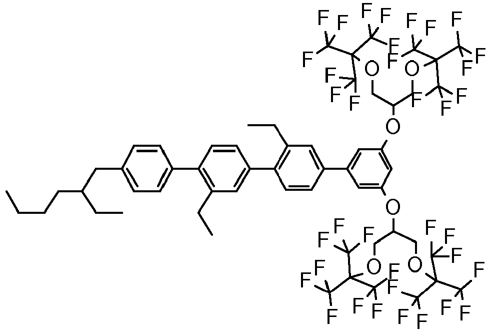

### Synthesebeispiel 10:

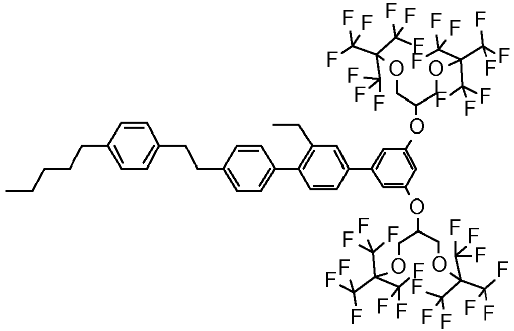

### Synthesebeispiel 11:

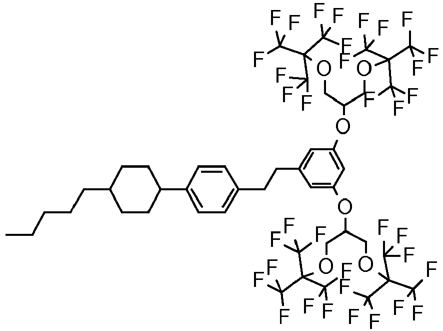

### Synthesebeispiel 12:

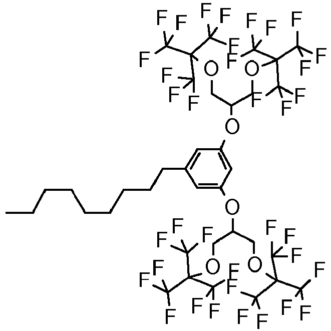

### Synthesebeispiel 13:

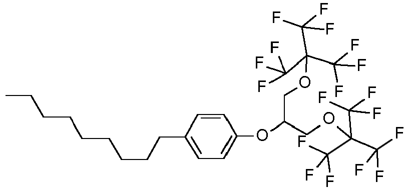

### Synthesebeispiel 14:

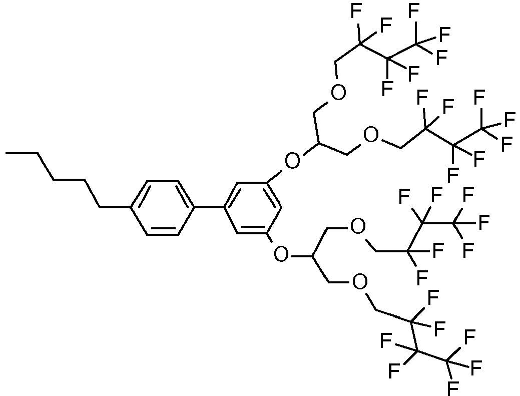

Öl.

¹H NMR (500 MHz, Chloroform-*d*) δ 7.55 - 7.41 (m, 2H), 7.27 (dd, *J* = 7.7, 5.9 Hz, 2H), 6.84 (d, *J* = 2.2 Hz, 2H), 6.56 (t, *J* = 2.2 Hz, 1H), 4.59 (p, *J* = 4.8 Hz, 2H), 4.15 - 3.97 (m, 8H), 3.95 - 3.85 (m, 8H), 2.67 (dd, *J* = 8.7, 6.9 Hz, 2H), 1.74 - 1.63 (m, 2H), 1.46 - 1.34 (m, 4H), 0.97 - 0.87 (m, 3H).

### Synthesebeispiel 15:

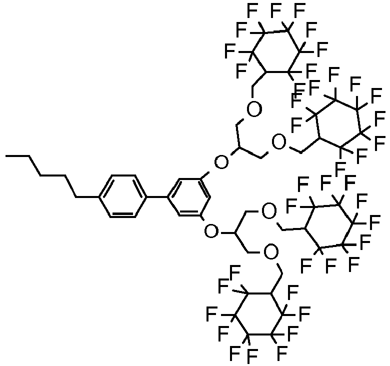

### Synthesebeispiel 16:

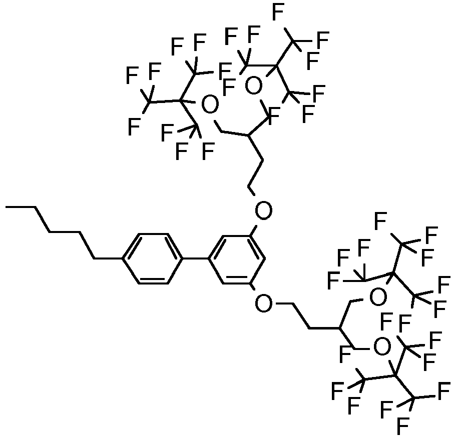

### Synthesebeispiel 17:

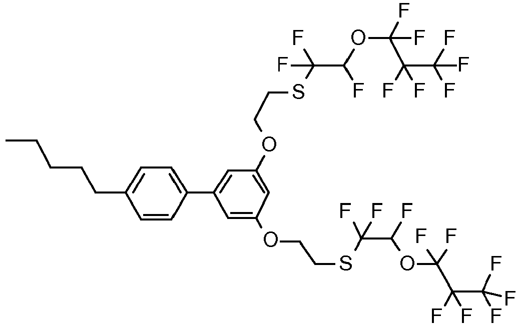

Öl.

¹H NMR (Chloroform-d) δ 7.55 - 7.45 (m, 2H), 7.27 (dd, *J* = 7.6, 5.8 Hz, 2H), 6.77 (d, *J* = 2.2 Hz, 2H), 6.45 (t, *J* = 2.2 Hz, 1H), 6.04 (dt, *J* = 54.4, 3.8 Hz, 2H), 4.27 (t, *J* = 6.5 Hz, 4H), 3.32 (t, *J* = 6.4 Hz, 4H), 2.71 - 2.61 (m, 2H), 1.73 - 1.62 (m, 2H), 1.46 - 1.20 (m, 4H), 0.93 (td, *J* = 6.7, 4.3 Hz, 3H).

### Synthesebeispiel 18:

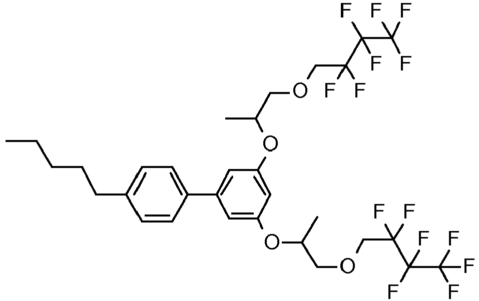

Öl.

¹H NMR (Chloroform-d) δ 7.43 - 7.34 (m, 2H), 7.17 (dd, *J* = 9.0, 7.1 Hz, 2H), 6.67 (d, *J* = 2.1 Hz, 2H), 6.39 (t, *J* = 2.2 Hz, 1H), 4.51 (pd, *J* = 6.2, 4.5 Hz, 2H), 3.98 (t, *J* = 13.7 Hz, 4H), 3.70 (qd, *J* = 10.5, 5.0 Hz, 4H), 2.63 - 2.52 (m, 2H), 1.65 - 1.50 (m, 2H), 1.28 (app t, *J* = 6.8 Hz, 10H), 0.88 - 0.79 (m, 3H).

### Synthesebeispiel 19:

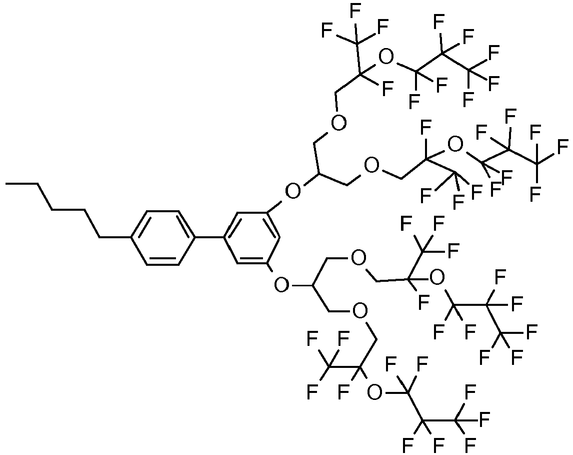

Öl.

¹H NMR (Chloroform-*d*) δ 7.51 - 7.40 (m, 2H), 7.27 (d, *J* = 8.0 Hz, 2H), 6.80 (d, *J* = 2.1 Hz, 2H), 6.48 (t, *J* = 2.3 Hz, 1H), 4.56 (p, *J* = 4.8 Hz, 2H), 4.18 -4.04 (m, 8H), 3.93 - 3.81 (m, 8H), 2.73 - 2.62 (m, 2H), 1.72 - 1.61 (m, 2H), 1.44 - 1.33 (m, 4H), 0.97 - 0.86 (m, 3H).

### Synthesebeispiel 20:

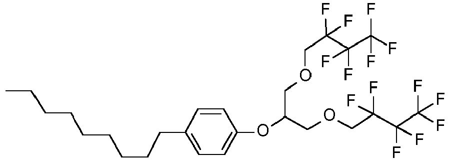

Öl

¹H NMR (Chloroform-*d*) δ 7.02 (d, *J* = 8.3 Hz, 2H), 6.82 - 6.74 (m, 2H), 4.41 (p, *J* = 4.9 Hz, 1H), 3.94 (h, *J*= 12.9 Hz, 4H), 3.83- 3.73 (m, 4H), 2.52 - 2.43 (m, 2H), 1.57 - 1.45 (m, 2H), 1.31 - 1.13 (m, 12H), 0.81 (t, *J* = 6.8 Hz, 3H).

### Synthesebeispiel 21:

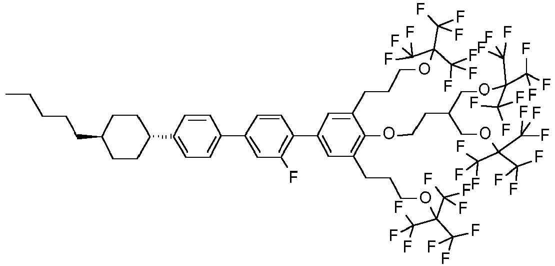

Schmelzpunkt 92°C (K 92 I).

### Anwendungsbeispiele: Flüssigkristallmischungen mit Additiv

Die folgenden Additive werden zu den Flüssigkristallmedien gegeben:

| **Additiv Nr.** | **Struktur des Additivs** |
|---|---|
| **1** | 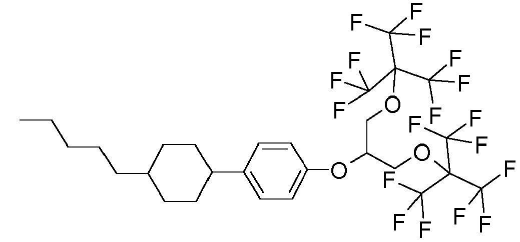 |
| **2** | 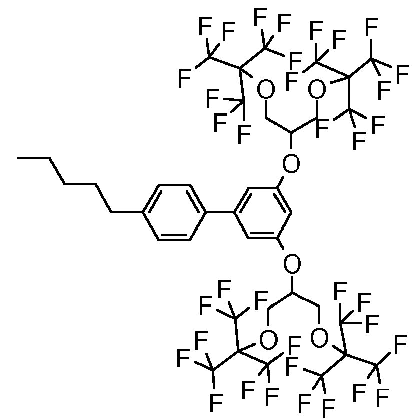 |

| **Additiv Nr.** | **Struktur des Additivs** |
|---|---|
| **3** | 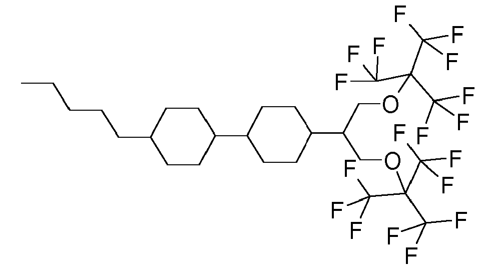 |
| **4** | 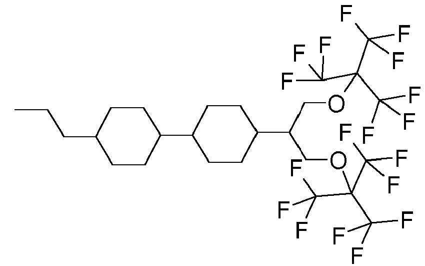 |
| **5** | 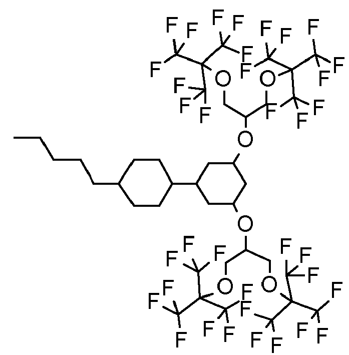 |

Die folgende polymerisierbare Verbindung wird verwendet:

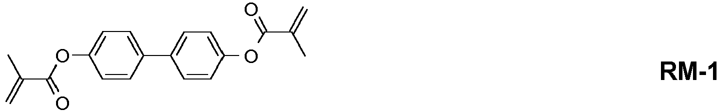

Als Basis-Mischungen (Host) werden die folgenden Flüssigkristallmedien H1 bis H15 verwendet (Angaben in Gew.-%).

### H1: Nematische Hostmischung (Δε < 0)

| | |
|---|---|
| CC-3-V | 15 % |
| CC-3-V1 | 9.0 % |
| CC-2-3 | 8.0 % |
| CC-3-4 | 7.5 % |
| CCY-3-O2 | 10 % |
| CCY-5-O2 | 8.0 % |
| CPY-2-O2 | 3.0 % |
| CPY-3-O2 | 8.5 % |
| CY-3-O2 | 7.0 % |
| PY-3-O2 | 16 % |
| PYP-2-3 | 8 % |

### H2: Nematische Hostmischung (Δε < 0)

| | |
|---|---|
| CC-3-V1 | 8 % |
| CC-2-3 | 18 % |
| CC-3-4 | 4 % |
| CC-3-5 | 7 % |
| CCP-3-1 | 5 % |
| CCY-3-O2 | 12.5 % |
| CPY-2-O2 | 8 % |
| CPY-3-O2 | 11 % |
| CY-3-O2 | 15.5 % |
| PY-3-O2 | 11 % |

### H3: Nematische Hostmischung (Δε < 0)

| | |
|---|---|
| CPP-3-2 | 5.5 % |
| CCP-3-1 | 8.0 % |
| CCY-3-O1 | 10 % |
| CCY-3-O2 | 8.5 % |
| CPY-3-O2 | 11 % |
| CC-3-V1 | 9.0 % |
| CC-3-O1 | 6.0 % |
| CY-3-O2 | 11 % |
| CP-3-O1 | 20 % |
| PY-3-O2 | 11 % |

### H4: Nematische Hostmischung (Δε < 0)

| | |
|---|---|
| CC-3-V | 36.5 % |
| CC-3-V1 | 2.0 % |
| CCY-3-O1 | 8.0 % |
| CCY-3-O2 | 6.0 % |
| CCY-4-O2 | 2.5 % |
| CLY-3-O2 | 8.0 % |
| CLY-3-O3 | 2.0 % |
| CPY-2-O2 | 10 % |
| CPY-3-O2 | 3.0 % |
| CY-3-O2 | 5.5 % |
| PY-3-O2 | 13 % |
| PY-1-O4 | 3.5 % |

### H5: Nematische Hostmischung (Δε < 0)

| | |
|---|---|
| B-2-O-O5 | 4.0 % |
| CPP-3-2 | 8.0 % |
| CC-3-V1 | 9.0 % |
| CC-3-O1 | 2.0 % |
| CC-3-4 | 8.0 % |
| CC-3-5 | 7.0 % |
| CCP-3-1 | 8.0 % |
| CCP-V2-1 | 5.0 % |
| CCY-3-O2 | 10.5 % |
| CLY-3-O2 | 1.0 % |
| CPY-3-O2 | 2.5 % |
| CY-3-O2 | 11.5 % |
| CP-3-O1 | 5.5 % |
| PY-3-O2 | 18 % |

### H6: Nematische Hostmischung (Δε < 0)

| | |
|---|---|
| B(S)-20-05 | 4.0 % |
| B(S)-20-04 | 3.0 % |
| CPP-3-2 | 8.0 % |
| CC-3-V1 | 9.0 % |
| CC-3-O1 | 2.0 % |
| CC-3-4 | 8.0 % |
| CC-3-5 | 7.0 % |
| CCP-3-1 | 11 % |
| CCP-V2-1 | 5.0 % |
| CCY-3-O2 | 7.0 % |
| CLY-3-O2 | 1.0 % |
| CY-3-O2 | 13 % |
| CP-3-O1 | 5.5 % |
| PY-3-O2 | 16.5 % |

### H7: Nematische Hostmischung (Δε > 0)

| | |
|---|---|
| APUQU-2-F | 2.0 % |
| APUQU-3-F | 5.0 % |
| CPU-2-F | 5.0 % |
| CPU-3-F | 10 % |
| CPPC-3-3 | 4.0 % |
| CC-3-V1 | 6.0 % |
| CC-5-V | 8.0 % |
| CC-3-4 | 8.0 % |
| CCGU-3-F | 9.0 % |
| CCP-3-OCF3 | 9.0 % |
| CCP-3-1 | 4.0 % |
| CCZPC-3-3 | 3.5 % |
| CP-3-O1 | 10 % |
| PGUQU-3-F | 4.0 % |
| PPGU-3-F | 1.0 % |
| PUQU-3-F | 11.5 % |

### H8: Nematische Hostmischung (Δε < 0)

| | |
|---|---|
| B-2-O-O5 | 4.0 % |
| CPP-3-2 | 8.0 % |
| CC-3-V1 | 9.0 % |
| CC-3-O1 | 2.0 % |
| CC-3-4 | 8.0 % |
| CC-3-5 | 7.0 % |
| CCP-3-1 | 8.0 % |
| CCP-V2-1 | 5.0 % |
| CCY-3-O2 | 10.5 % |
| CLY-3-O2 | 1.0 % |
| CPY-3-O2 | 2.5 % |
| CY-3-O2 | 11.5 % |
| CP-3-O1 | 5.5 % |
| PY-3-O2 | 18 % |

### H9: Nematische Hostmischung (Δε > 0)

| | |
|---|---|
| APUQU-2-F | 6.0 % |
| APUQU-3-F | 8.0 % |
| CDUQU-3-F | 10 % |
| DGUQU-4-F | 4.0 % |
| DPGU-4-F | 5.0 % |
| PGUQU-3-F | 3.0 % |
| PGUQU-4-F | 7.0 % |
| CCQU-3-F | 9.0 % |
| CC-3-2V1 | 10 % |
| CC-3-V | 24.5 % |
| CC-3-V1 | 9.5 % |
| CCP-3-OCF3 | 4.0 % |

### H10: Nematische Hostmischung (Δε > 0)

| | |
|---|---|
| CC-3-V | 32 % |
| CC-3-V1 | 11 % |
| CC-3-2V1 | 4.5 % |
| PP-1-2V1 | 2.0 % |
| CCP-3-OCF3 | 7.5 % |
| CCP-5-OCF3 | 1.5 % |
| PUQU-3-F | 1.5 % |
| APUQU-2-F | 7.0 % |
| APUQU-3-F | 7.0 % |
| PGUQU-3-F | 3.0 % |
| PGUQU-4-F | 8.0 % |
| PGUQU-5-F | 2.0 % |
| DPGU-4-F | 5.0 % |
| DGUQU-4-F | 8.0 % |

### H11: Nematische Hostmischung (Δε > 0)

| | |
|---|---|
| CC-3-V | 42 % |
| CC-3-V1 | 5.5 % |
| CCP-V-1 | 4.0 % |
| CCP-3-OCF3 | 7.0 % |
| PGP-2-2V | 6.5 % |
| APUQU-2-F | 3.0 % |
| APUQU-3-F | 8.0 % |
| PGUQU-3-F | 4.0 % |
| CPGU-3-OT | 5.0 % |
| CPY-3-O2 | 3.0 % |
| CY-3-O2 | 9.0 % |
| PYP-2-3 | 3.0 % |

### H12: Nematische Hostmischung (Δε > 0)

| | |
|---|---|
| CC-3-V | 48 % |
| CC-3-V1 | 10.5 % |
| CCP-V-1 | 11 % |
| CLP-V-1 | 6.0 % |
| CLP-3-T | 5.5 % |
| PGP-2-2V | 5.0 % |
| PGUQU-3-F | 4.0 % |
| APUQU-2-F | 4.5 % |
| PP-1-2V1 | 5.0 % |
| PPGU-3-F | 0.5 % |

### H13: Nematische Hostmischung (Δε > 0)

| | |
|---|---|
| CCQU-2-F | 15 % |
| CCQU-3-F | 15 % |
| CCQU-5-F | 15 % |
| CCU-3-F | 12 % |
| CCU-5-F | 6.0 % |
| CCP-3-1 | 10 % |
| CGPC-5-3 | 6.0 % |
| CGPC-3-3 | 3.0 % |
| CDUQU-3-F | 8.0 % |
| CCP-2-OCF3 | 5.0 % |
| CCP-3-OCF3 | 5.0 % |

### H14: Nematische Hostmischung (Δε < 0)

| | |
|---|---|
| Host H1 | 99.55 % |
| RM-1 | 0.45 % |

### H15: Nematische Hostmischung (Δε > 0)

| | |
|---|---|
| CC-3-V | 48 % |
| CC-3-V1 | 12 % |
| CCP-V-1 | 11.5 % |
| CLP-V-1 | 9.0 % |
| PGP-2-2V | 4.5 % |
| PGUQU-3-F | 3.0 % |
| APUQU-2-F | 7.5 % |
| PP-1-2V1 | 4.0 % |
| PPGU-3-F | 0.5 % |

Die Basis-Mischung wird mit variierenden Gew.%-Anteilen der angegebenen Beispieladditive versetzt und auf verschiedene Größen (Kontaktwinkel, Oberflächenspannung, Tröpfchengröße, ODF-Drop-Mura) hin untersucht.

### 1. Messung des Kontaktwinkels

Der Kontaktwinkel zwischen der Substratoberfläche und dem Flüssigkristallmedium wird mit einem Tropfenform-Analysegerät "Easy Drop" von Krüss untersucht. Das Substrat ist mit einem Polyimid beschichtet (Typ JALS-2347-R6 von JSR Tabelle 1) oder mit ITO. Die Messung erfolgt mit einem Tropfen von 0,4 µl Volumen bei Raumtemperatur (21 °C) und 45 % relativer Luftfeuchte. Dazu wird ein einzelner Tropfen mit einer Dosierpipette aufgebracht und nach 60 s Wartezeit photographisch vermessen. Die Kontur wird mittels der Kreismethode analysiert.

Die Messergebnisse werden in der nachfolgenden Tabelle 1 und 2 wiedergegeben.

**Tabelle 1: Kontaktwinkel-Messwerte der Testmischungen mit verschieden Additiven und Variation der zugesetzten Menge auf mit Polyimid beschichteten Substraten. Messung nach 60 s.**

| **Nr.** | **Additiv (Gew.-%)** | **Basis-mischung** | **Kontaktwinkel [ °]** | **Standardabweichung [ °]** |
|---|---|---|---|---|
| **1** | kein (0 Gew.-%) | H3 | 19,2 | 0,7 |
| **2** | **1** (0,037 Gew.-%) | H3 | 18,1 | 1,3 |
| **3** | **1** (0,37 Gew.-%) | H3 | 11,2 | 0,4 |
| **4** | **1** (1,2 Gew.-%) | H3 | 10,1 | 0,5 |
| **5** | **2** (0,010 Gew.-%) | H3 | 14,0 | 0,4 |
| **6** | **2** (0,23 Gew.-%) | H3 | 12,3 | 0,3 |
| **7** | **2** (0,03 Gew.-%) | H3 | 13,9 | 0,7 |
| **8** | **2** (0,1 Gew.-%) | H3 | 16,1 | 0,3 |
| **9** | **2** (0,22 Gew.-%) | H3 | 17,0 | 0,5 |
| **10** | - | H2 | 14,0 | 0,6 |
| **11** | **1** (0,13 Gew.-%) | H2 | 14,2 | 0,8 |
| **12** | **1** (0,30 Gew.-%) | H2 | 13,0 | 0,3 |
| **13** | **1** (1,30 Gew.-%) | H2 | 11,3 | 0,2 |
| **14** | - | H1 | 13,8 | 0,3 |
| **15** | **1** (0,30 Gew.-%) | H1 | 11,6 | 0,4 |
| **16** | **2** (0,023 Gew.-%) | H1 | 9,4 | 0,4 |
| **17** | - | H4 | 15,2 | 0,1 |
| **18** | **2** (0,023 Gew.-%) | H4 | 13,0 | 0,2 |
| **19** | **3** (1 Gew.-%) | H4 | 12,5 | 0,1 |
| **20** | - | H5 | 16,5 | 0,9 |
| **21** | **2** (0,023 Gew.-%) | H5 | 14,0 | 0,8 |
| **22** | **3** (1 Gew.-%) | H5 | 13,0 | 0,4 |
| **23** | - | H6 | 17,9 | 0,3 |
| **24** | **2** (0,023 Gew.-%) | H6 | 13,1 | 0,6 |
| **25** | **3** (1 Gew.-%) | H6 | 14,6 | 0,2 |
| **26** | - | H7 | 16,2 | 0,1 |
| **27** | **2** (0,023 Gew.-%) | H7 | 13,2 | 0,2 |
| **28** | **3** (1 Gew.-%) | H7 | 13,9 | 0,2 |
| **29** | - | H8 | 18,7 | 0,5 |
| **30** | **2** (0,023 Gew.-%) | H8 | 13,6 | 0,1 |
| **31** | **3** (1 Gew.-%) | H8 | 14,8 | 0,5 |
| **32** | - | H9 | 15,7 | 0,5 |
| **33** | **2** (0,023 Gew.-%) | H9 | 15,3 | 0,5 |
| **34** | **3** (1 Gew.-%) | H9 | 14,1 | 0,2 |
| **35** | - | H10 | 12,9 | 0,2 |
| **36** | **2** (0,023 Gew.-%) | H10 | 12,0 | 0,5 |
| **37** | **3** (1 Gew.-%) | H10 | 11,6 | 0,1 |
| **38** | - | H11 | 11,0 | 0,8 |
| **39** | **2** (0,023 Gew.-%) | H11 | 10,2 | 0,4 |
| 40 | **3** (1 Gew.-%) | H11 | 9,9 | 0,4 |
| **41** | - | H12 | 14,5 | 0,4 |
| **42** | **3** (1 Gew.-%) | H12 | 11,1 | 0,4 |
| **43** | - | H13 | 14,5 | 0,4 |
| **44** | **3** (1 Gew.-%) | H13 | 11,3 | 0,3 |
| **45** | - | H14 | 14,8 | 0,7 |
| **46** | **3** (1 Gew.-%) | H14 | 11,6 | 0,4 |

**Tabelle 2: Kontaktwinkel-Messwerte der Testmischungen mit verschiedenen Additiven in der Basismischung H14 und Variation der zugesetzten Menge auf verschiedenen Substraten (ITO, Glas and PSA-PI CT 16557). Messung nach 20 s.**

| **Nr.** | **Additiv** | **Gew.-%** | ***Substrat Oberfläche*** | ***Kontakt-winkel [ °]*** | ***Standardabweichung [ °]*** |
|---|---|---|---|---|---|
| **1** | - | - | PSA-PI | 13,1 | 0,5 |
| **2** | **2** | 0.025 | PSA-PI | 11,9 | 0,2 |
| **3** | **3** | 1 | PSA-PI | 11,4 | 0,4 |
| **4** | **2+3** | 0.025 + 1 | PSA-PI | 10,8 | 0,2 |
| **5** | - | - | ITO | 5,8 | 1,6 |
| **6** | **2** | 0.025 | ITO | 4,3 | 0,9 |
| **7** | **3** | 1 | ITO | 5,2 | 0,9 |
| **8** | **2+3** | 0.025 + 1 | ITO | 5,1 | 0,8 |
| **9** | - | - | Glas | 19,5 | 0,3 |
| **10** | **2** | 0,025 | Glas | 6,2 | 0,2 |
| **15** | **5** | 0,01 | Glas | 11,9 | 2,1 |
| **16** | **5** | 0,025 | Glas | 10,4 | 2,0 |
| **17** | **5** | 0,1 | Glas | 10,4 | 1,4 |
| **18** | **5** | 1 | Glas | 11,1 | 0,34 |

Die Kontaktwinkel werden bereits durch eine geringe Menge (< 1%) an Additiven deutlich verringert. Ein geringer Kontaktwinkel verbessert das Spreizverhalten.

### 2. Messung der Oberflächenspannung

Die Oberflächenspannung der Flüssigkristallmedien wird mit einem Tropfenform-Analysegerät "Easy Drop" von Krüss untersucht. Die verwendete Messmethode misst die Deformation eines hängenden Tropfens unter der Wirkung der Schwerkraft. Die Messung erfolgt mit einer Tropfspitze von 1,054 mm Durchmesser bei Raumtemperatur (21 °C) und 45 % relativer Luftfeuchte. Die Nadelspitze und der Tropen werden mit einer Kamera aufgezeichnet und anschließend mittels der Young-Laplace Gleichung ausgewertet. Die spezifische Dichte der Flüssigkristallmedien wird mit einem Biegungsresonator gemessen. Die Messergebnisse werden in der nachfolgenden Tabelle 3 wiedergegeben.

**Tabelle 3: Oberflächenspannungs-Messwerte der Testmischungen mit verschieden Additiven und Variation der zugesetzten Menge.**

| **Nr.** | **Additiv (Gew.-%)** | **Basis-mischung** | **Oberflächenspan nung [mN/m]** | **Standardabweichung [mN/m]** |
|---|---|---|---|---|
| **1** | kein (0 Gew.-%) | H2 | 28.10 | 0.04 |
| **2** | **1** (1,5 Gew.-%) | H2 | 24.58 | 0.06 |

Als Ergebnis erhält man eine deutliche Verringerung der Oberflächenspannung durch die Zugabe eines Additivs zu einer Flüssigkristallmischung.

### 3. Messung: Vergrößerung der Tropfengröße nach dem Auftragen

Die Analyse der Tropfengröße erfolgt mit einem Mikroskop und einem Auswertungsprogramm zur Bestimmung der geometrischen Oberfläche eines Tropfens auf dem Substrat. Für die Messung wird jeweils ein Tropfen mit 10,0 µl Volumen auf das Substrat aufgebracht. Die benetzte Oberfläche wird nach vorgegebenen Wartezeiten (0,25 min, 5 min, 60 min) fotografiert und ausgewertet. Für jede Wartezeit wird die relative Tropfengröße gegenüber einem Medium ohne Additiv (Referenz-Wartezeit 0,25 min bzw. 5 min) ermittelt. Die Messergebnisse auf Substraten aus Polyimid (auf Glas), Glas, und ITO (auf Glas) werden in den nachfolgenden Tabellen 4, 5 und 6 wiedergegeben.

**Tabelle 4: Relative Tropfengröße nach Wartezeit mit verschieden Additiven auf Polyimid (Referenzwartezeit = 0,25 min).**

| **Nr.** | **Additiv (Gew.-%)** | **Basis-mischung** | **Relative Tropfengröße nach Wartezeit, [%]** | | |
|---|---|---|---|---|---|
| | | | 0,25 **min** | **5 min** | **60 min** |
| **1** | kein (0 Gew.-%) | H2 | 100 | 106 | 109 |
| **2** | **1** (1,5 Gew.-%) | H2 | 118 | 135 | 149 |
| **3** | kein (0 Gew.-%) | H1 | 100 | 102 | 101 |
| **4** | **1** (1,5 Gew.-%) | H1 | 108 | 125 | 141 |

**Tabelle 5: Relative Tropfengröße nach Wartezeit mit verschieden Additiven auf Glas (Referenzwartezeit = 5 min).**

| **Nr.** | **Additiv (Gew.-%)** | **Basis-mischung** | **Relative Tropfengröße nach Wartezeit, [%]** | | |
|---|---|---|---|---|---|
| | | | | **5 min** | |
| **1** | kein (0 Gew.-%) | H2 | | 100 | |
| **2** | **1** (1,5 Gew.-%) | H2 | | 330 | |
| **3** | kein (0 Gew.-%) | H1 | | 100 | |
| **4** | **1** (1,5 Gew.-%) | H1 | | 442 | |

**Tabelle 6: Relative Tropfengröße nach Wartezeit mit verschiedenen Additiven auf ITO (Referenzwartezeit = 5 min).**

| **Nr.** | **Additiv (Gew.-%)** | **Basis-mischung** | **Relative Tropfengröße nach Wartezeit, [%]** | | |
|---|---|---|---|---|---|
| | | | | **5 min** | |
| **1** | kein (0 Gew.-%) | H14 | | 100 | |
| **2** | **2** (0,025 Gew.-%) | H14 | | 210 | |
| **3** | **4** (1 Gew.-%) | H14 | | 155 | |
| **4** | **2 (0,025 Gew.-%)+4** (1 Gew.-%) | H14 | | 225 | |

Die vorteilhafte Vergrößerung der Tröpfchengröße auf einem Substrat, d.h. analog zu ODF-Bedingungen, deutet auf ein gutes Fließverhalten, die Bereitschaft zum Spreizen und zum gleichmäßigen Verteilen sowie auf eine zügige homogene Verteilung der Flüssigkristallmedien hin. Dadurch werden eine kurze Taktzeit im Füllprozess und weniger Tröpfchenspuren (ODF-Mura) ermöglicht.

### 4. ODF-Test

Der ODF-Test ermöglicht die Evaluierung der Additive unter den eigentlichen Prozessbedingungen und zeigt, ob durch das verbesserte Spreizverhalten auch tatsächlich auftretendes ODF-Mura verbessert werden kann. Der ODF-Test setzt sich aus einer Reihe von Teil-Prozessen zusammen.

### a) Herstellung der Test-Displays

- Die Substrate werden vor der Weiterverarbeitung gereinigt, wobei alle anhaftenden Partikel entfernt werden sollen. Dies geschieht maschinell in einem Mehrstufenprozess in dem schrittweise mit einer Seifenlösung (destilliertes Wasser und 0,5 % Detergenz) und reinem destilliertem Wasser gespült wird. Nach Abschluss des Spülvorgangs werden die Substrate bei 120 °C getrocknet für 30 min getrocknet.
- Das Polyimid wird aus Lösung (N-Methyl-2-Pyrrolidon und Butylcellosolve) mittels Spin-Coating (MIKASA) auf ein ITO beschichtetes Glassubstrat aufgebracht. Hierzu wird ein Tropfen der Polyimidlösung auf das Substrat aufgetropft und erst 10 s bei 80 rpm und dann 45 s bei 760 rpm geschleudert. Nach dem Prozess soll das PI eine homogene Schichtdicke von 100 nm aufweisen. Das Substrat wird dann 1 min bei 60°C auf der Heizplatte und danach 90 min bei 230°C im Ofen getrocknet. Gegebenenfalls wird das Polyimid vororientiert.
- Es folgt das Aufbringen des Klebers (Sekisui) am Rand des Substrates und das tropfenweise Aufbringen (ODF) des LC-Mediums auf dem Substrat. Mittels Vakuum (5 Pa, 30s) werden das untere Substrat mit dem Kleber und dem LC-Medium mit einem mit ITO und Photo-Spacer (3,3 µm) versehenen oberen Substrat zusammengebracht. Es folgt das Verkleben des Test-Displays mittels UV-Licht, wobei nur der Kleberand exponiert wird und einem Heizschritt (gemäß Herstellerangaben des Klebers).
- Es folgt nun der PS-VA Prozess zur Realisierung des Pre-Tilts. Hierzu wird unter UV-Beleuchtung an die Zelle eine Gleichspannung von etwa 10 V angelegt. Durch die UV-Beleuchtung wird die PhotoPolymerisation des RM initiiert. Der gewünschte Tilt wird über die RM-Konzentration, die Beleuchtungsintensität, die Beleuchtungsdauer oder die Stärke des angelegten Feldes eingestellt. Nach Erreichen des gewünschten Pre-Tilts wird der Prozess abgebrochen. Es folgt ein zweiter UV-Schritt ohne Spannung, um das verbleibende RM zu entfernen.

### b) Evaluierung des Drop-Muras

- Der eingestellte Pre-Tilt wird mittels eines Mueller Matrix Polarimeters (Axometrics Axostep) ortsaufgelöst in dem Bereich, in dem sich der Tropfen vor dem Zerfließen während des Vakuumsprozess befunden hat, und in dem Bereich wo sich vor dem Prozess kein LC-Medium befunden hat gemessen. Der Unterschied ist ein Kriterium, der das ODF-Level beschreibt. Je kleiner der Unterschied, desto geringer das auftretende ODF-Mura.
- Das Test-Display wird bei verschiedenen Graustufen (verschiedene Treiberspannungen) vor einer Hintergrundbeleuchtung betrieben. Mit Hilfe einer DSLR-Kamera werden Bilder der Displays aufgenommen und mittels Software analysiert. Die Graustufen werden mit Hilfe von elektro-optischer-Kurven ermittelt (Transmission gegen Spannung). Hierzu wurde ein LCD-5200 (Otsuka, JP) verwendet.

### c) Ergebnisse

In Tabelle 7 sind die Ergebnisse der Pre-Tilt Messungen im ehemaligen Tropfenbereich und Nicht-Tropfenbereich dargestellt. Die Differenz im Pre-Tilt zwischen diesen beiden Bereichen ist bei Präsenz der Additive deutlich verringert, was die Wirksamkeit der Additive im einem ODF-Prozess bestätigt. Die Ergebnisse der Bildanalyse in Tabelle x sind mit diesen Ergebnissen im Einklang. Es ergibt sich ein geringeres Drop-Mura-Level für die Mischungen mit Additiv gegenüber der Mischung ohne Additiv. Die beste Wirkung wird mit Additiv **2** erzielt.

**Tabelle 7: Pre-Tilt im Tropfen- und Nicht-Tropfenbereich und deren Differenz. Je kleiner die Differenz, desto weniger ausgeprägt ist das Drop-Mura.**

| **Nr.** | **Additiv (Gew.-%)** | **Basismischung** | **Pre-Tilt, [°]** | | |
|---|---|---|---|---|---|
| | | | **Nicht-Tropfen** | **Tropfen** | **Differenz** |
| **1** | kein (0 Gew.-%) | H14 | 86,40 | 85,12 | 1,28 |
| **2** | **2** (0,025 Gew.-%) | H14 | 86,38 | 85,77 | 0,61 |
| **3** | **3** (1 Gew.-%) | H14 | 86,42 | 85,75 | 0,67 |

Die Bildanalyse bei einer definierten Graustufe zeigt den gleichen Trend. Der Kontrast zwischen der Fläche, auf der der Tropfen gelegen hat und freier Fläche ist auch hier kleiner bei Zugabe von Additiven.

**Tabelle 8: Drop-Mura-Level bei einer Graustufe von L-16 nach der Bildanalyse mittels Software.**

| **Nr.** | **Additiv (Gew.-%)** | **Basis-Mischung** | **Drop-Mura-Level** |
|---|---|---|---|
| **1** | kein (0 Gew.-%) | H14 | 131 % |
| **2** | **2** (0,025 Gew.-%) | H14 | 51 % |
| **3** | **3** (1 Gew.-%) | H14 | 61 % |

## Patentansprüche

1. Flüssigkristallines Medium enthaltend eine flüssigkristalline Komponente, **dadurch gekennzeichnet, dass** das flüssigkristalline Medium ein Additiv der folgenden Formel I enthält: 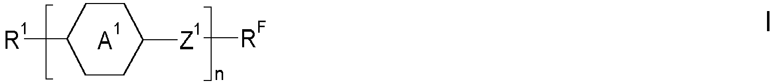 worin
R¹ eine geradkettige oder verzweigte Alkylgruppe mit 1 bis 20 C-Atomen, oder H, wobei in diesem Rest auch eine oder mehrere CH₂-Gruppen jeweils unabhängig voneinander durch -C=C-, -CH=CH-, 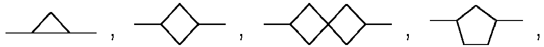 -O-, -S-, -CO-O- oder -O-CO- so ersetzt sein können, dass O oder S-Atome nicht direkt miteinander verknüpft sind,
R^{F} eine Gruppe ausgewählt aus den Formeln -R2 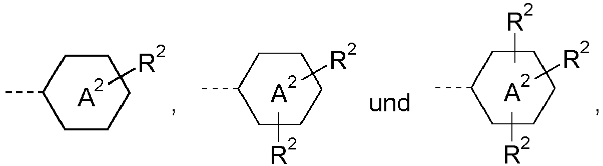
R² jeweils unabhängig 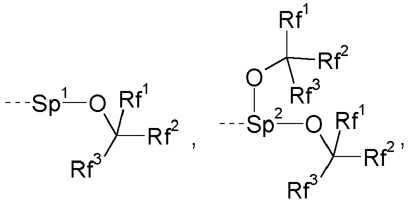 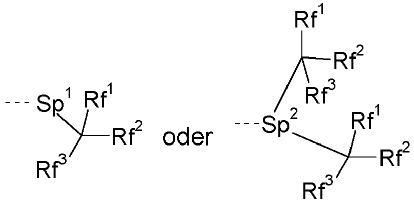
Rf¹, Rf³ unabhängig H, F, -CF₃, -CF₂CF₃, -CF₂CF₂CF₃ oder CF(CF₃)₂,
Rf² unabhängig eine unverzweigte, verzweigte oder cyclische Fluoralkylgruppe mit 3 bis 15 Fluoratomen und 1 bis 10 C-Atomen, worin eine oder mehrere nicht benachbarte CH₂-Gruppen durch -O- und/oder -S- ersetzt sein können,
Z¹ eine Einfachbindung, -CH₂CH₂-, -COO-, *trans-* -CH=CH-, *trans-* -CF=CF-, -CH₂O-, -CF₂O- oder -C=C-, worin asymmetrische Brücken nach beiden Seiten orientiert sein können, und wobei nicht zwei O-Atome benachbarter Gruppen direkt verbunden sind,
Sp¹ eine Einfachbindung oder -(CH₂)ₘ-, worin m = 1, 2, 3 oder 4 ist und worin eine oder zwei CH₂-Gruppen durch -O- oder -S-ersetzt sein können, so dass O/S-Atome nicht direkt miteinander verknüpft sind
Sp² linearer oder verzweigter, dreifachbindiger Spacer,
A¹ unabhängig voneinander einen Rest ausgewählt aus folgenden Gruppen:
a) der Gruppe bestehend aus trans-1,4-Cyclohexylen und 1,4-Cyclohexenylen , worin auch eine oder mehrere nicht benachbarte CH₂-Gruppen durch -O-und/oder -S- ersetzt sein können und worin auch ein oder mehrere H-Atome durch F oder Cl ersetzt sein können,
b) 1,4-Phenylen worin auch eine oder zwei CH-Gruppen durch N ersetzt sein können und worin auch ein oder mehrere H-Atome durch eine Gruppe L oder R² ersetzt sein können, und
c) der Gruppe bestehend aus 2,6-Naphthylen, Dibenzofuran-3,7-diyl, Dibenzothiophen-3,7-diyl, 9H-Fluoren-2,7-diyl, Phenanthren-2,7-diyl, 6H-Benzo[c]chromen-3,8-diyl, Anthracen-2,6-diyl, Tetrahydropyran-2,5-diyl, 1,3-Dioxan-2,5-diyl, Tetrahydrofuran-2,5-diyl, Cyclobutan-1,3-diyl, Piperidin-1,4-diyl, Thiophen-2,5-diyl und Selenophen-2,5-diyl, welche auch ein oder mehrfach durch eine Gruppe L substituiert sein können,
A² ein 6- oder 5-gliedriges gesättigtes, ungesättigtes oder aromatisches, carbocyclisches oder heterocyclisches Ringsystem, welches jeweils optional zusätzlich durch eine oder zwei Gruppen L substituiert ist,
L unabhängig F, Cl, -CN, eine Alkylgruppe mit 1 bis 5 C-Atomen, eine Alkoxygruppe mit 1 - 5 C-Atomen oder eine Alkenylgruppe mit 2 bis 5 C-Atomen,
n 0, 1, 2, 3 oder 4,
bedeuten,
und zusätzlich enthält das flüssigkristalline Medium
- eine oder mehrere polymerisierbare oder polymerisierte Verbindungen, und
- eine oder mehrere Verbindungen ausgewählt aus der Gruppe der Formeln II-1 bis II-3, 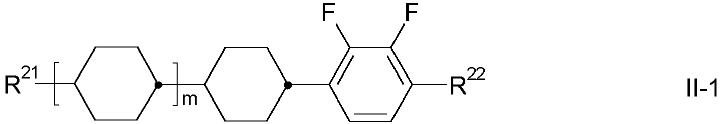 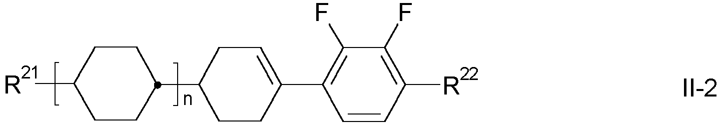 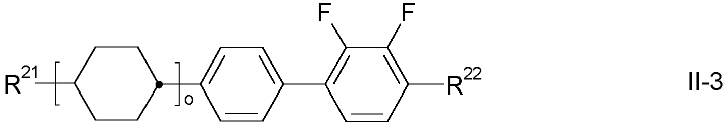 worin
R²¹ einen unsubstituierten Alkylrest mit 1 bis 7 C-Atomen oder einen unsubstituierten Alkenylrest mit 2 bis 7 C-Atomen,
R²² einen unsubstituierten Alkylrest mit 1 bis 7 C-Atomen oder einen unsubstituierten Alkoxyrest mit 1 bis 6 C-Atomen, und
m, n und o jeweils unabhängig voneinander 0 oder 1 bedeuten.

2. Flüssigkristallmedium nach Anspruch 1, **dadurch gekennzeichnet, dass** für das Additiv der Formel I
Rf¹, Rf³ unabhängig -CF₃, -CF₂CF₃, -CF₂CF₂CF₃ oder CF(CF₃)₂ bedeuten.

3. Flüssigkristallmedium nach Anspruch 1 oder 2, **dadurch gekennzeichnet, dass** es 5 - 60 Gew.-% einer oder mehrerer Verbindungen ausgewählt aus der Gruppe der Verbindungen der Formel II und III enthält: 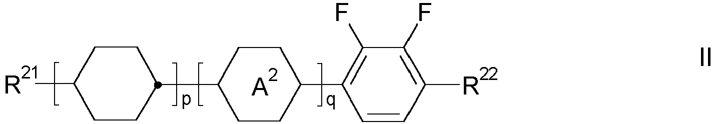 worin
R²¹ einen unsubstituierten Alkylrest mit 1 bis 7 C-Atomen, einen unsubstituierten Alkoxyrest mit 1 bis 6 C-Atomen oder einen unsubstituierten Alkenylrest mit 2 bis 7 C-Atomen,
R²² einen unsubstituierten Alkylrest mit 1 bis 7 C-Atomen oder einen unsubstituierten Alkoxyrest mit 1 bis 6 C-Atomen, 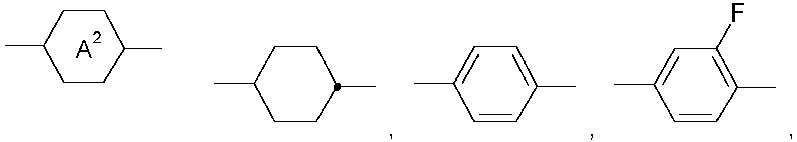 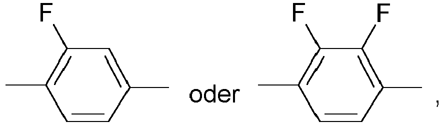
p und q jeweils unabhängig voneinander 0, 1 oder 2 und
(p + q) 1, 2 oder 3,
bedeutet, 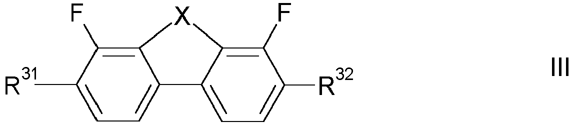 worin
X O oder S, und
R³¹, R³² unabhängig voneinander einen unsubstituierten Alkylrest mit 1 bis 7 C-Atomen oder einen unsubstituierten Alkoxyrest mit 2 bis 7 C-Atomen
bedeuten.

4. Flüssigkristallines Medium nach einem oder mehreren der Ansprüche 1 bis 3, **dadurch gekennzeichnet, dass** es zusätzlich eine oder mehrere Verbindungen der Formel IV, 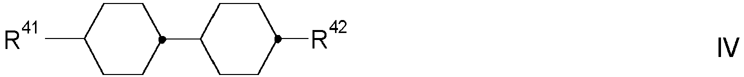 worin
R⁴¹ einen unsubstituierten Alkylrest mit 1 bis 7 C-Atomen oder einen unsubstituierten Alkenylrest mit 2 bis 7 C-Atomen, und
R⁴² einen unsubstituierten Alkylrest mit 1 bis 7 C-Atomen, einen unsubstituierten Alkoxyrest mit 1 bis 6 C-Atomen, oder einen unsubstituierten Alkenylrest mit 2 bis 7 C-Atomen,
bedeuten, enthält.

5. Flüssigkristallines Medium nach einem oder mehreren der Ansprüche 1 bis 4, **dadurch gekennzeichnet, dass** die Gesamtkonzentration der Verbindungen der Formel I im Gesamtmedium 0,001 Gew.-% oder mehr bis 2 Gew.-% oder weniger beträgt.

6. Flüssigkristallines Medium nach einem der vorangehenden Ansprüche, **dadurch gekennzeichnet, dass** in Formel I
R^{F} eine Gruppe ausgewählt aus den Formeln 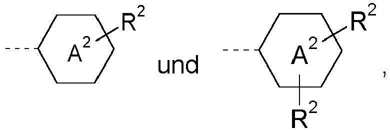
und
n 0, 1 oder 2
bedeutet.

7. Flüssigkristallines Medium nach einem der vorangehenden Ansprüche, wobei das Additiv der Formel I ausgewählt ist aus der Gruppe der Verbindungen der Formeln IA bis IF: 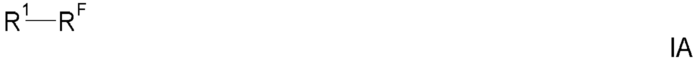 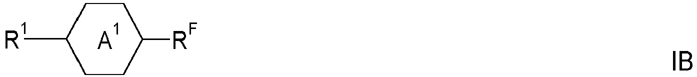 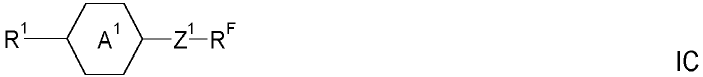 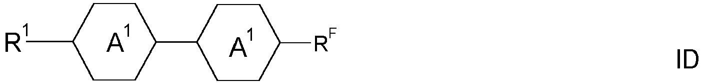 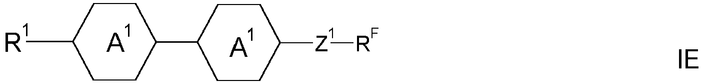 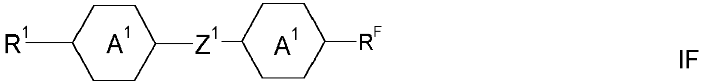 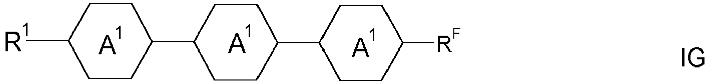 worin die Variablen unabhängig die in Anspruch 1 gegebene Bedeutung haben.

8. Flüssigkristallines Medium nach einem der vorangehenden Ansprüche, **dadurch gekennzeichnet, dass** das Additiv der Formel I aus der Gruppe der Verbindungen der Formeln I-1 bis I-4 ausgewählt sind, 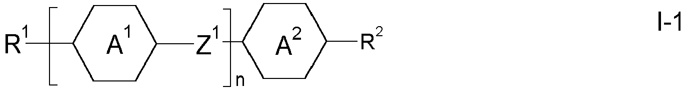 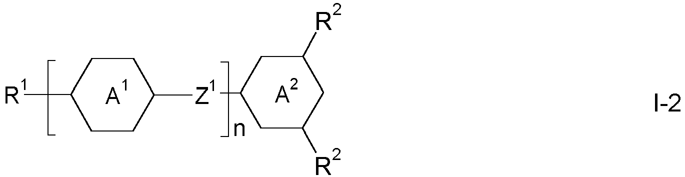 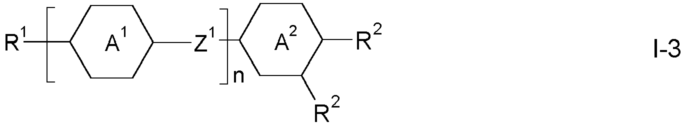 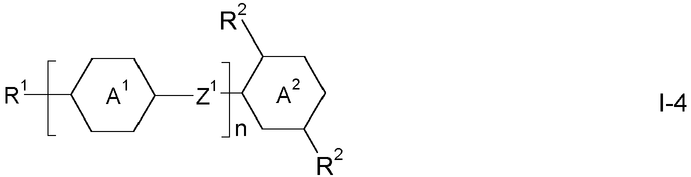 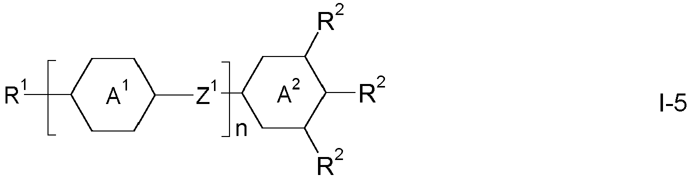 worin die Variablen unabhängig die in Anspruch 1 angegebene Bedeutung haben.

9. Verwendung eines Flüssigkristallmediums nach einem oder mehreren der Ansprüche 1 bis 5 in einer elektrooptischen Anzeige.

10. Elektrooptische Anzeige enthaltend ein Flüssigkristallmedium nach einem oder mehreren der Ansprüche 1 bis 5.

11. Verfahren zum Befüllen einer elektro-optischen Anzeige mit einem Flüssigkristallmedium, **dadurch gekennzeichnet, dass** das Medium ein Additiv der Formel I nach einem oder mehreren der vorangehenden Ansprüche enthält.

## Claims

1. Liquid-crystalline medium comprising a liquid-crystalline component, **characterised in that** the liquid-crystalline medium comprises an additive of the following formula I: 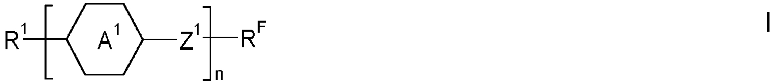 in which
R¹ denotes a straight-chain or branched alkyl group having 1 to 20 C atoms, or H, where, in addition, one or more CH₂ groups in this radical may each be replaced, independently of one another, by -C=C-, -CH=CH-, 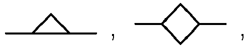 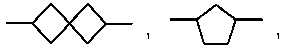 -O-, -S-, -CO-O- or -O-CO- in such a way that O or S atoms are not linked directly to one another,
R^{F} denotes a group selected from the formulae -R² 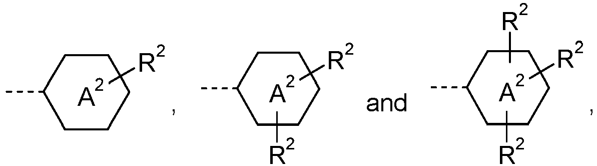
R² in each case independently denotes 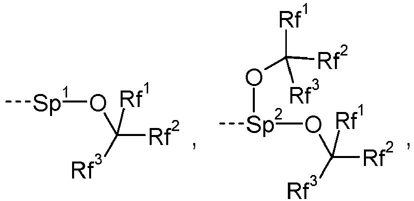 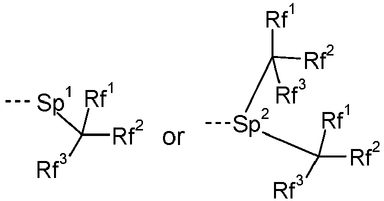
Rf¹, Rf³ independently denote H, F, -CF₃, -CF₂CF₃, -CF₂CF₂CF₃ or CF(CF₃)₂,
Rf² independently denotes an unbranched, branched or cyclic fluoroalkyl group having 3 to 15 fluorine atoms and 1 to 10 C atoms, in which one or more non-adjacent CH₂ groups may be replaced by -O- and/or -S-,
Z¹ denotes a single bond, -CH₂CH₂-, -COO-, *trans-* -CH=CH-, *trans-* -CF=CF-, -CH₂O-, -CF₂O- or -C=C-, in which asymmet-rical bridges may be oriented to both sides, and where two O atoms of adjacent groups are not connected directly,
Sp¹ denotes a single bond or -(CH₂)ₘ-, in which m = 1, 2, 3 or 4 and in which one or two CH₂ groups may be replaced by -O- or -S- in such a way that O/S atoms are not linked directly to one another,
Sp² denotes a linear or branched, trivalent spacer,
A', independently of one another, denotes a radical selected from the following groups:
a) the group consisting of trans-1,4-cyclohexylene and 1,4-cyclohexenylene, in which, in addition, one or more non-adjacent CH₂ groups may be replaced by -O- and/or -S-and in which, in addition, one or more H atoms may be replaced by F or Cl,
b) 1,4-phenylene, in which, in addition, one or two CH groups may be replaced by N and in which, in addition, one or more H atoms may be replaced by a group L or R², and
c) the group consisting of 2,6-naphthylene, dibenzofuran-3,7-diyl, dibenzothiophene-3,7-diyl, 9H-fluorene-2,7-diyl, phenanthrene-2,7-diyl, 6H-benzo[c]chromene-3,8-diyl, anthracene-2,6-diyl, tetrahydropyran-2,5-diyl, 1,3-dioxane-2,5-diyl, tetrahydrofuran-2,5-diyl, cyclobutane-1,3-diyl, piperidine-1,4-diyl, thiophene-2,5-diyl and sele-nophene-2,5-diyl, each of which may also be mono- or polysubstituted by a group L,
A² denotes a 6- or 5-membered saturated, unsaturated or aro-matic, carbocyclic or heterocyclic ring system, which is in each case optionally additionally substituted by one or two groups L,
L independently denotes F, Cl, -CN, an alkyl group having 1 to 5 C atoms, an alkoxy group having 1 - 5 C atoms or an alkenyl group having 2 to 5 C atoms,
n denotes 0, 1, 2, 3 or 4,
and additionally the liquid-crystalline medium comprises
- one or more polymerisable or polymerised compounds, and
- one or more compounds selected from the group of the formulae II-1 to II-3, 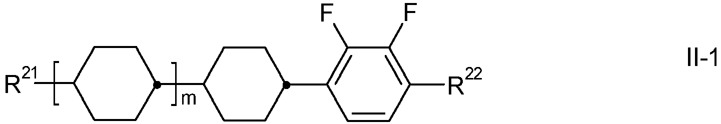 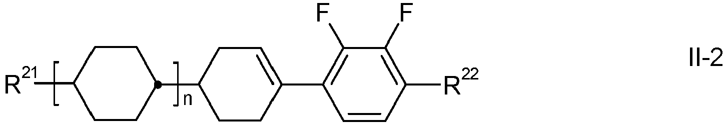 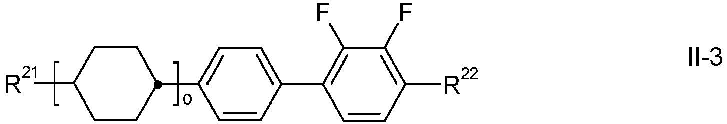
in which
R²¹ denotes an unsubstituted alkyl radical having 1 to 7 C atoms or an unsubstituted alkenyl radical having 2 to 7 C atoms,
R²² denotes an unsubstituted alkyl radical having 1 to 7 C atoms or an unsubstituted alkoxy radical having 1 to 6 C atoms, and
m, n and o each, independently of one another, denote 0 or 1.

2. Liquid-crystal medium according to Claim 1, **characterised in that**, for the additive of the formula I,
Rf¹, Rf³ independently denote -CF₃, -CF₂CF₃, -CF₂CF₂CF₃ or CF(CF₃)₂.

3. Liquid-crystal medium according to Claim 1 or 2, **characterised in that** it comprises 5 - 60% by weight of one or more compounds selected from the group of the compounds of the formulae II and III: 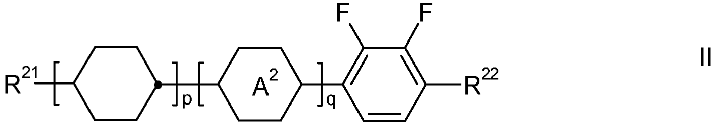 in which
R²¹ denotes an unsubstituted alkyl radical having 1 to 7 C atoms, an unsubstituted alkoxy radical having 1 to 6 C atoms or an unsubstituted alkenyl radical having 2 to 7 C atoms,
R²² denotes an unsubstituted alkyl radical having 1 to 7 C atoms or an unsubstituted alkoxy radical having 1 to 6 C atoms, 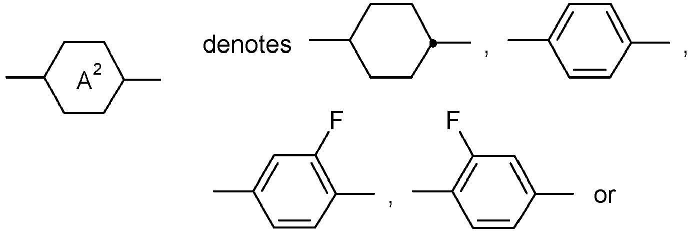 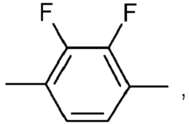
p and q each, independently of one another, denote 0, 1 or 2 and
(p + q) denotes 1, 2 or 3, 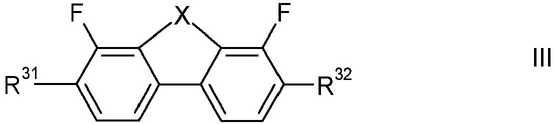 in which
X denotes O or S, and
R³¹, R³², independently of one another, denote an unsubstituted alkyl radical having 1 to 7 C atoms or an unsubstituted alkoxy radical having 2 to 7 C atoms.

4. Liquid-crystalline medium according to one or more of Claims 1 to 3, **characterised in that** it additionally comprises one or more compounds of the formula IV, 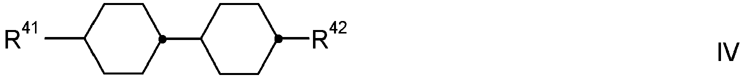 in which
R⁴¹ denotes an unsubstituted alkyl radical having 1 to 7 C atoms or an unsubstituted alkenyl radical having 2 to 7 C atoms, and
R⁴² denotes an unsubstituted alkyl radical having 1 to 7 C atoms, an unsubstituted alkoxy radical having 1 to 6 C atoms, or an unsubstituted alkenyl radical having 2 to 7 C atoms.

5. Liquid-crystalline medium according to one or more of Claims 1 to 4, **characterised in that** the total concentration of the compounds of the formula I in the entire medium is 0.001% by weight or more to 2% by weight or less.

6. Liquid-crystalline medium according to one of the preceding claims, **characterised in that**, in formula I,
R^{F} denotes a group selected from the formulae 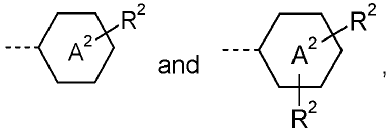
and
n denotes 0, 1 or 2.

7. Liquid-crystalline medium according to one of the preceding claims, where the additive of the formula I is selected from the group of the compounds of the formulae IA to IG: 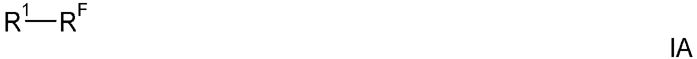 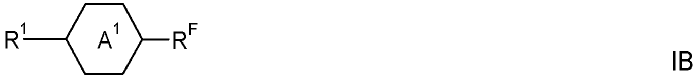 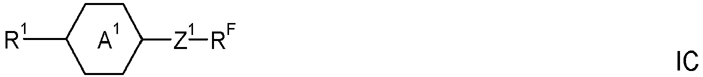 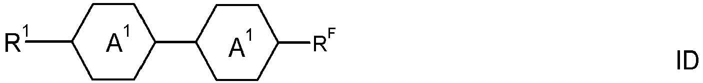 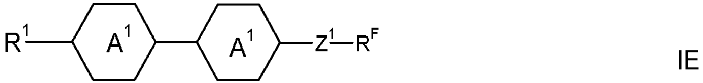 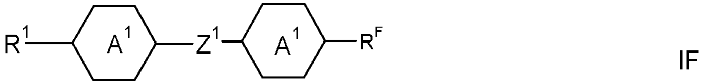 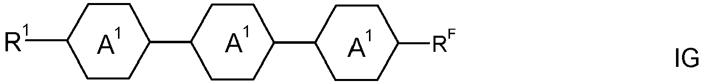 in which the variables independently have the meaning given in Claim 1.

8. Liquid-crystalline medium according to one of the preceding claims, **characterised in that** the additive of the formula I is selected from the group of the compounds of the formulae I-1 to I-5, 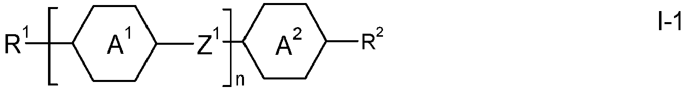 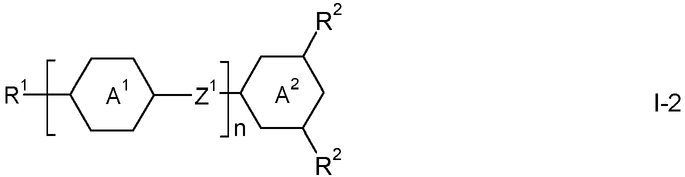 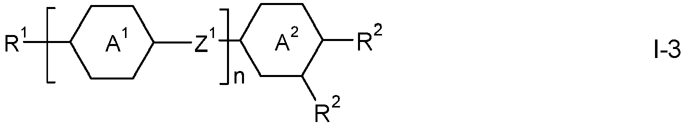 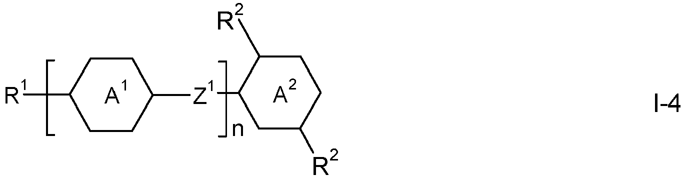 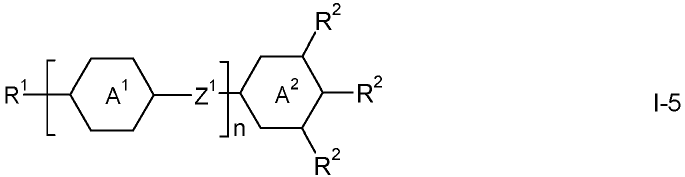 in which the variables independently have the meaning given in Claim 1.

9. Use of a liquid-crystal medium according to one or more of Claims 1 to 5 in an electro-optical display.

10. Electro-optical display containing a liquid-crystal medium according to one or more of Claims 1 to 5.

11. Process for the filling of an electro-optical display with a liquid-crystal medium, **characterised in that** the medium comprises an additive of the formula I according to one or more of the preceding claims.

## Revendications

1. Milieu cristallin liquide comprenant un composant cristallin liquide, **caractérisé en ce que** le milieu cristallin liquide comprend un additif de formule I suivante : 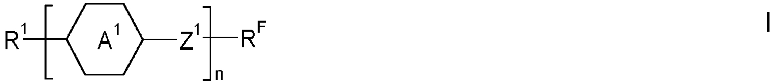 dans laquelle
R¹ désigne un groupement alkyle à chaîne linéaire ou ramifiée ayant de 1 à 20 atomes de C, ou H, où, de plus, un ou plusieurs groupements CH₂ dans ce radical peuvent chacun être remplacés, indépendamment les uns des autres, par -C=C-, -CH=CH-, 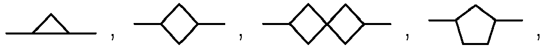 -O-, -S-, -CO-O- ou -O-CO- de telle sorte que les atomes de O ou S ne soient pas liés directement les uns aux autres,
R^{F} désigne un groupement choisi parmi les formules -R² 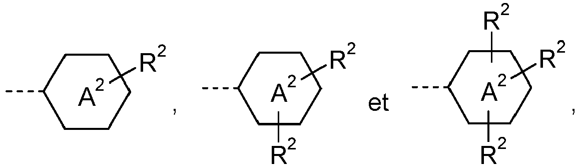
R² désigne indépendamment dans chaque cas 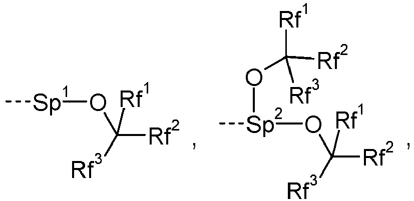 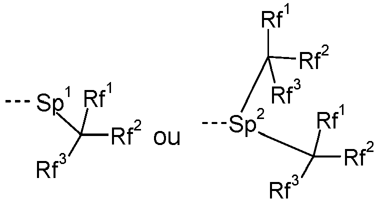
Rf¹, Rf³ désignent indépendamment H, F, -CF₃, -CF₂CF₃, -CF₂CF₂CF₃ ou CF(CF₃)₂,
Rf² désigne indépendamment un groupement fluoroalkyle non ramifié, ramifié ou cyclique ayant de 3 à 15 atomes de fluor et de 1 à 10 atomes de C, où un ou plusieurs groupements CH₂ non adjacents peuvent être remplacés par -O- et/ou -S-,
Z¹ désigne une liaison simple, -CH₂CH₂-, -COO-, *trans-*-CH=CH-, *trans-* -CF=CF-, -CH₂O-, -CF₂O- ou -C=C-, où des ponts asymétriques peuvent être orientés des deux côtés, et où deux atomes O de groupements adjacents ne sont pas reliés directement,
Sp¹ désigne une liaison simple ou -(CH₂)ₘ-, où m = 1, 2, 3 ou 4 et où un ou deux groupements CH₂ peuvent être remplacés par -O- ou -S- de telle sorte que les atomes de O/S ne soient pas liés directement les uns aux autres,
Sp² désigne un espaceur trivalent, linéaire ou ramifié,
A¹, indépendamment les uns des autres, désigne un radical choisi parmi les groupes suivants :
a) le groupe constitué par trans-1,4-cyclohexylène et 1,4-cyclohexénylène, où, de plus, un ou plusieurs groupe-ments CH₂ non adjacents peuvent être remplacés par -O- et/ou -S- et où, de plus, un ou plusieurs atomes de H peuvent être remplacés par F ou Cl,
b) 1,4-phénylène, où, de plus, un ou deux groupements CH peuvent être remplacés par N et où, de plus, un ou plusieurs atomes de H peuvent être remplacés par un groupement L ou R², et
c) le groupe constitué par 2,6-naphtylène, dibenzofurane-3,7-diyle, dibenzothiophène-3,7-diyle, 9H-fluorène-2,7-diyle, phénanthrène-2,7-diyle, 6H-benzo[c]chromène-3,8-diyle, anthracène-2,6-diyle, tétrahydropyrane-2,5-diyle, 1,3-dioxane-2,5-diyle, tétrahydrofurane-2,5-diyle, cyclobutane-1,3-diyle, pipéridine-1,4-diyle, thiophène-2,5-diyle et sélénophène-2,5-diyle, chacun d'entre eux pouvant également être mono- ou polysubstitués par un groupement L,
A² désigne un noyau de 5 ou 6 chaînons saturé, insaturé ou aromatique, carbocyclique ou hétérocyclique, qui est dans chaque cas éventuellement en outre substitué par un ou deux groupements L,
L désigne indépendamment F, Cl, -CN, un groupement alkyle ayant de 1 à 5 atomes de C, un groupement alcoxy ayant 1-5 atomes de C ou un groupement alcényle ayant de 2 à 5 atomes de C,
n désigne 0, 1, 2, 3 ou 4,
et le milieu cristallin liquide comprend en outre
- un ou plusieurs composés polymérisables ou polymérisés, et
- un ou plusieurs composés choisis dans le groupe constitué par les formules II-1 à II-3, 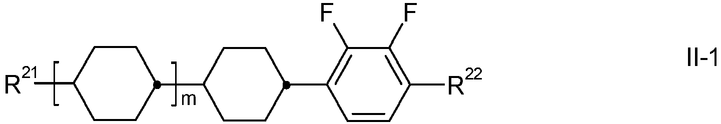 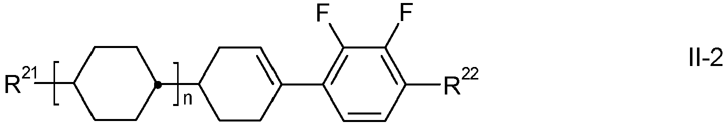 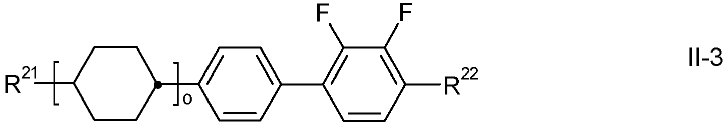 dans lesquelles
R²¹ désigne un radical alkyle non substitué ayant de 1 à 7 atomes de C ou un radical alcényle non substitué ayant de 2 à 7 atomes de C,
R²² désigne un radical alkyle non substitué ayant de 1 à 7 atomes de C ou un radical alcoxy non substitué ayant de 1 à 6 atomes de C, et
m, n et o désignent chacun, indépendamment les uns des autres, 0 ou 1.

2. Milieu cristallin liquide selon la revendication 1, **caractérisé en ce que**, pour l'additif de formule I,
Rf¹, Rf³ désignent indépendamment -CF₃, -CF₂CF₃, -CF₂CF₂CF₃ ou CF(CF₃)₂.

3. Milieu cristallin liquide selon la revendication 1 ou 2, **caractérisé en ce qu'**il comprend 5 - 60% en poids d'un ou plusieurs composés choisis dans le groupe constitué par les composés de formules II et III : 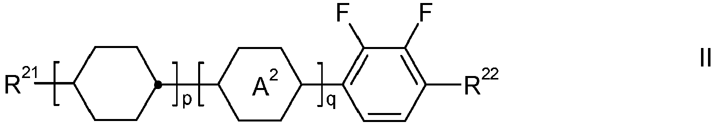 dans laquelle
R²¹ désigne un radical alkyle non substitué ayant de 1 à 7 atomes de C, un radical alcoxy non substitué ayant de 1 à 6 atomes de C ou un radical alcényle non substitué ayant de 2 à 7 atomes de C,
R²² désigne un radical alkyle non substitué ayant de 1 à 7 atomes de C ou un radical alcoxy non substitué ayant de 1 à 6 atomes de C, 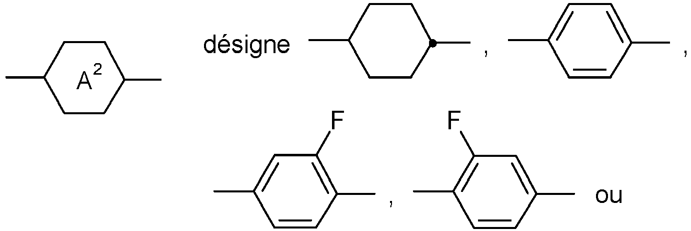 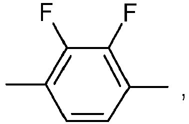
p et q désignent chacun, indépendamment l'un de l'autre, 0, 1 ou 2 et
(p + q) désigne 1, 2 ou 3, 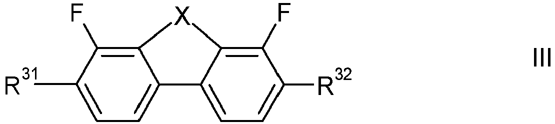
dans laquelle
X désigne O ou S, et
R³¹, R³², indépendamment l'un de l'autre, désignent un radical alkyle non substitué ayant de 1 à 7 atomes de C ou un radical alcoxy non substitué ayant de 2 à 7 atomes de C.

4. Milieu cristallin liquide selon l'une ou plusieurs parmi les revendications 1 à 3, **caractérisé en ce qu'**il comprend en outre un ou plusieurs composés de formule IV, 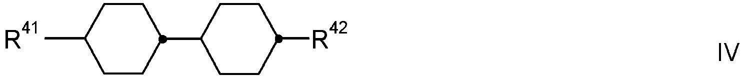 dans laquelle
R⁴¹ désigne un radical alkyle non substitué ayant de 1 à 7 atomes de C ou un radical alcényle non substitué ayant de 2 à 7 atomes de C, et
R⁴² désigne un radical alkyle non substitué ayant de 1 à 7 atomes de C, un radical alcoxy non substitué ayant de 1 à 6 atomes de C, ou un radical alcényle non substitué ayant de 2 à 7 atomes de C.

5. Milieu cristallin liquide selon l'une ou plusieurs parmi les revendications 1 à 4, **caractérisé en ce que** la concentration totale en composés de formule I dans l'ensemble du milieu va de 0,001% en poids ou plus à 2% en poids ou moins.

6. Milieu cristallin liquide selon l'une des revendications précédentes, **caractérisé en ce que**, dans la formule I,
R^{F} désigne un groupement choisi parmi les formules 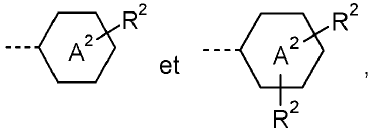 et
n désigne 0, 1 ou 2.

7. Milieu cristallin liquide selon l'une des revendications précédentes, dans lequel l'additif de formule I est choisi dans le groupe constitué par les composés de formules IA à !G : 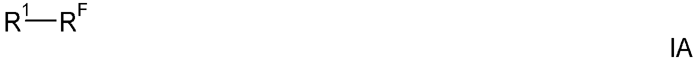 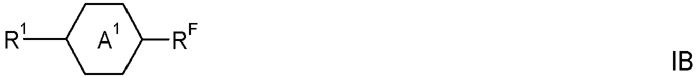 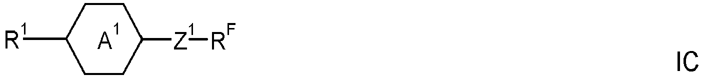 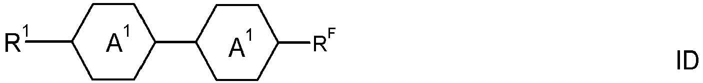 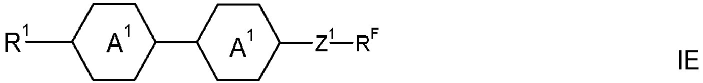 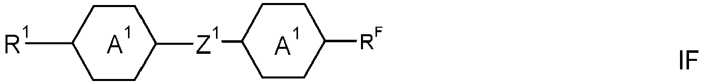 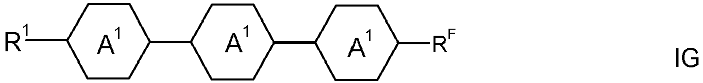 dans lesquelles les variables revêtent indépendamment la signification donnée selon la revendication 1.

8. Milieu cristallin liquide selon l'une des revendications précédentes, **caractérisé en ce que** l'additif de formule I est choisi dans le groupe constitué par les composés de formules I-1 à I-5, 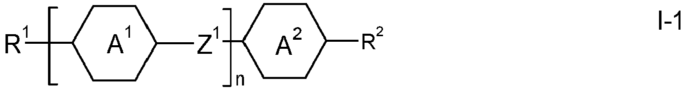 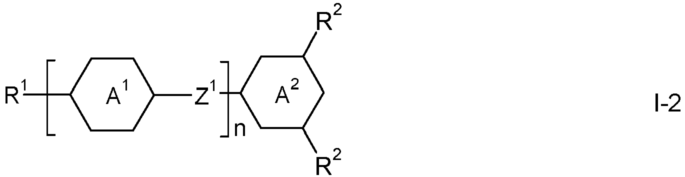 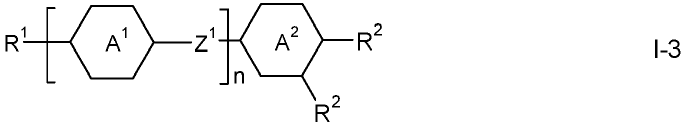 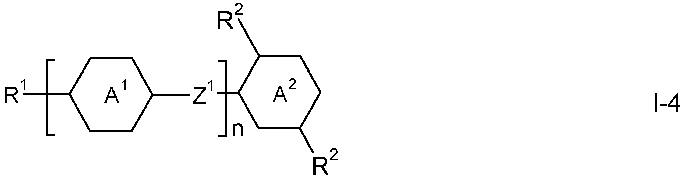 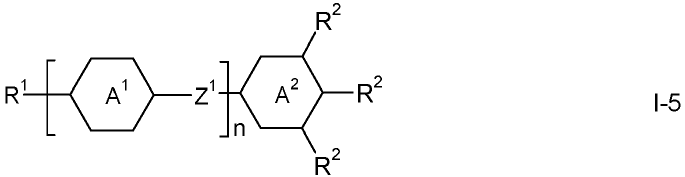 dans lesquelles les variables revêtent indépendamment la signification donnée selon la revendication 1.

9. Utilisation d'un milieu cristallin liquide selon l'une ou plusieurs parmi les revendications 1 à 5, dans un affichage électro-optique.

10. Affichage électro-optique, contenant un milieu cristallin liquide selon l'une ou plusieurs parmi les revendications 1 à 5.

11. Procédé de remplissage d'un affichage électro-optique avec un milieu cristallin liquide, **caractérisé en ce que** le milieu comprend un additif de formule I selon l'une ou plusieurs parmi les revendications précédentes.
